# EUROPEAN PATENT APPLICATION

(11) **EP 1 102 178 A2**
(43) Date of publication of application: **23.05.2001**
(21) Application number: 00125045.5
(22) Date of filing: 16.11.2000
(51) Int. Cl.: G06F 17/30

(54) **Contents server that supplies contents described in structural description language to client over network**

(30) Priority: 19.11.1999 JP 32948899; 17.04.2000 JP 2000114856
(71) Applicant: Matsushita Electric Industrial Co., Ltd., Kadoma-shi, Osaka 571-8501 (JP)
(72) Inventor: Tada, Hiroyuki, Kawasaki-shi, Kanagawa 214-0022 (JP); Hata, Koichi, Katano-shi, Osaka 576-0021 (JP); Etoh, Minoru, Yokohama-shi, Kanagawa 236-0053 (JP)
(74) Representative: Grünecker, Kinkeldey, Stockmair & Schwanhäusser Anwaltssozietät

(57) **Abstract**

A contents server that receives a request for contents from a client via a network and sends the requested contents to the client, which sends, in the case where the display size is equal to or smaller than a threshold, the requested contents to the client without changing the reference description of the referenced image and sends, in the case where said display size exceeds the threshold, contents with the reference description of the referenced image in the requested contents changed to alternate information to the client.

## Description

### BACKGROUND OF THE INVENTION

### Field of the Invention

The present invention relates to a contents server that transmits contents (a document including image reference description) described in a structural description language to clients over a communication network.

### Description of the Related Art

With the spread of the Internet, the circulation of contents (multimedia data such as a document, image and voice) described in a structural description language such as HTML (HyperText Markup Language) through the WWW (World Wide Web) is drastically expanding.

HTML is characterized by implementing hyper text by structuring a document by defining tags and establishing links to other HTML files, image files or voice files.

By the way, HTML is standardized by W3C (World Wide Web Consortium) and the standard of HTML4.0 is described at http://www.w3.org/TR/REC-htm140/ in the WWW page of W3C.

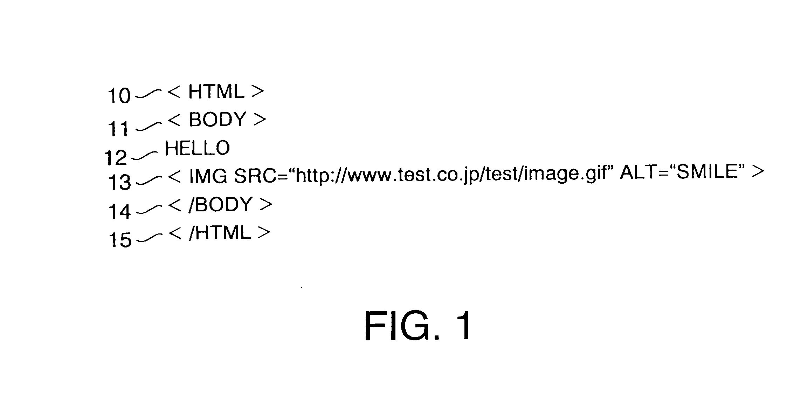

FIG.1 shows an example of HTML description.

The WWW is a mechanism by which a server that stores contents described in the above HTML (multimedia data such as a document, image and voice) and a client that requests the contents stored in the server are connected via a network, the client sends a data request to the server and the server sends data in response to the client's request according to HTTP (Hyper Text Transport Protocol). The HTTP standard is described in RFC2616.

Both the server and client are implemented by computers such as a workstation or personal computer and a server program is executed according to HTTP on the computer serving as the server. On the other hand, the client executes an HTML browser program that carries out communication using HTTP, interprets the HTML and displays data.

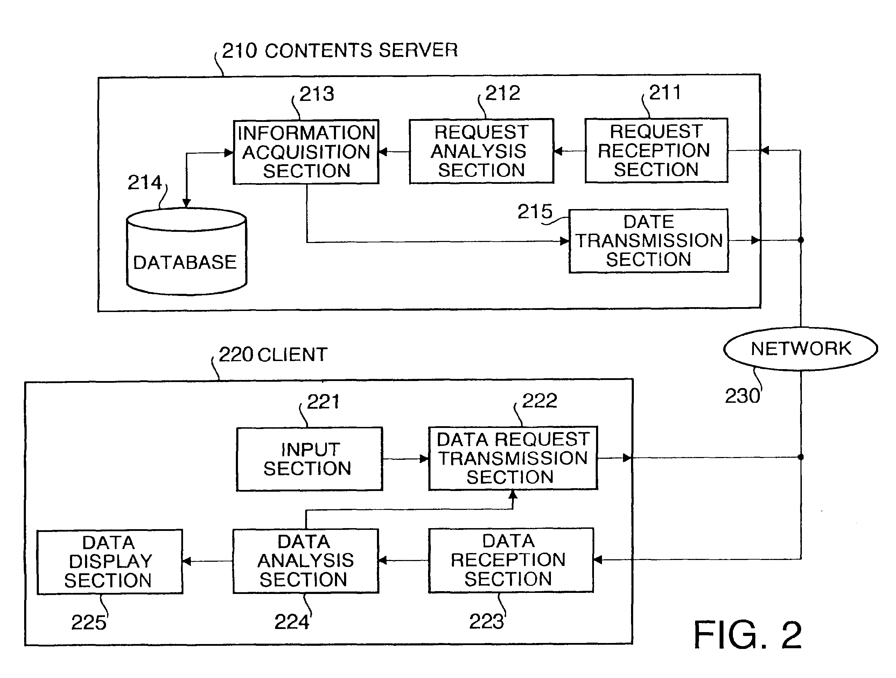

FIG.2 shows a block diagram of a system that implements the WWW.

Next, the operation of the WWW will be explained using FIG.2.

First, the user sends a request from input section 221 of client 220 by specifying a URL of desired HTML contents. The URL (Uniform Resource Locators) is a specification of identifiers for resources on a network and is described in RFC1738.

The request entered from input section 221 is sent from data request transmission section 222 to server 210 via network 230.

Server 210 receives the request through request reception section 211, analyzes the request through request analysis section 212 and acquires the requested HTML contents from database 214 through information acquisition section 213. The acquired HTML contents are sent to data transmission section 215. Data transmission section 215 sends the received HTML contents to client 220 via network 230.

Client 220 receives the requested HTML contents through data reception section 223 and analyzes the received data through data analysis section 224.

For example, suppose client 220 has received the HTML contents shown in FIG.1. Data analysis section 224 interprets character string 12 "Hello" and reference description 13 that indicates a reference to image data inserted between <BODY> 11 and </BODY> 14 as the contents to be displayed. Based on the interpretation result, data display section 225 displays character string 12 "Hello", while data analysis section 224 designate the data request transmission section 222 to send a request for image data through to server 210 via network 230.

Server 210 receives the image file request from client 220 through request reception section 211, analyzes by the request through request analysis section 212 and acquires the requested image file from database section 214 through information acquisition section 213. Information acquisition section 213 sends the acquired image file to data transmission section 215 and the image file is sent from data transmission section 215 to client 220 via network 230.

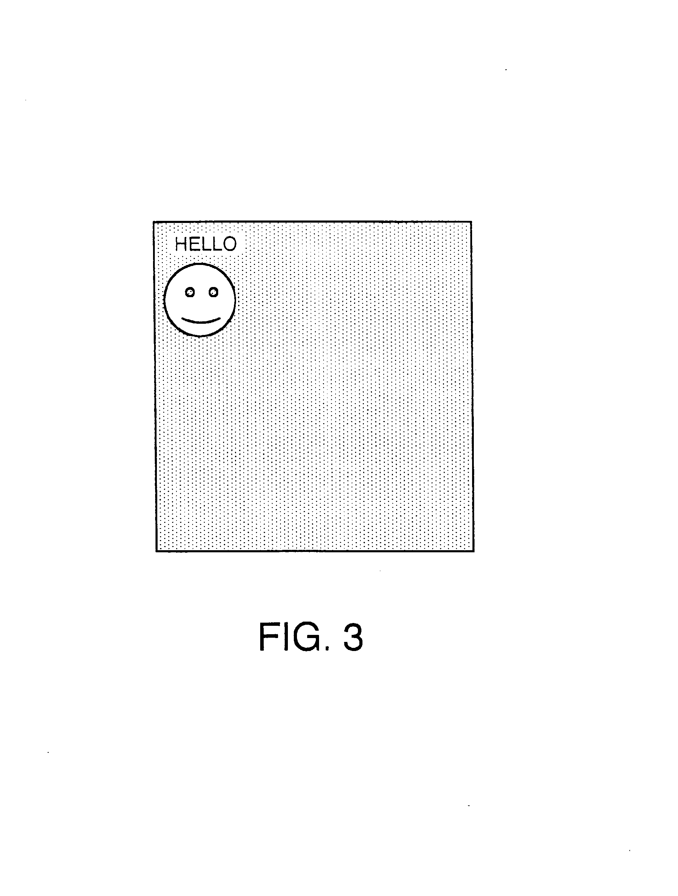

Client 220 receives the image file sent from server 210 through data reception section 223 and analyzes through data analysis section 224. Based on the analysis result, the image inserted in the image file is displayed added to already displayed character string 12 "Hello". Finally, upon receipt of the HTML contents in FIG.1, client 220 displays the information (document and image) shown in FIG.3 in data display section 225.

Furthermore, together with the aforementioned spread of the WWW, a mobile computing environment by means of cellular phones and PHS is also becoming widespread drastically.

Against such a background, "i mode" run by NTT DoCoMo, "EZ access" run by IDO and "EZweb" run by DDI, etc. have come into being as information supply services for cellular phones, apparatuses with limited resources.

However, in such services, portable terminal apparatuses that receive such information supply services have only limited acquisition and display of information due to restrictions on the displayable size of information, etc. For example, regarding display of an image, various techniques are used such as allowing a potable terminal apparatus to select display/non-display of the image or displaying icon image data or text data instead of the image to be displayed.

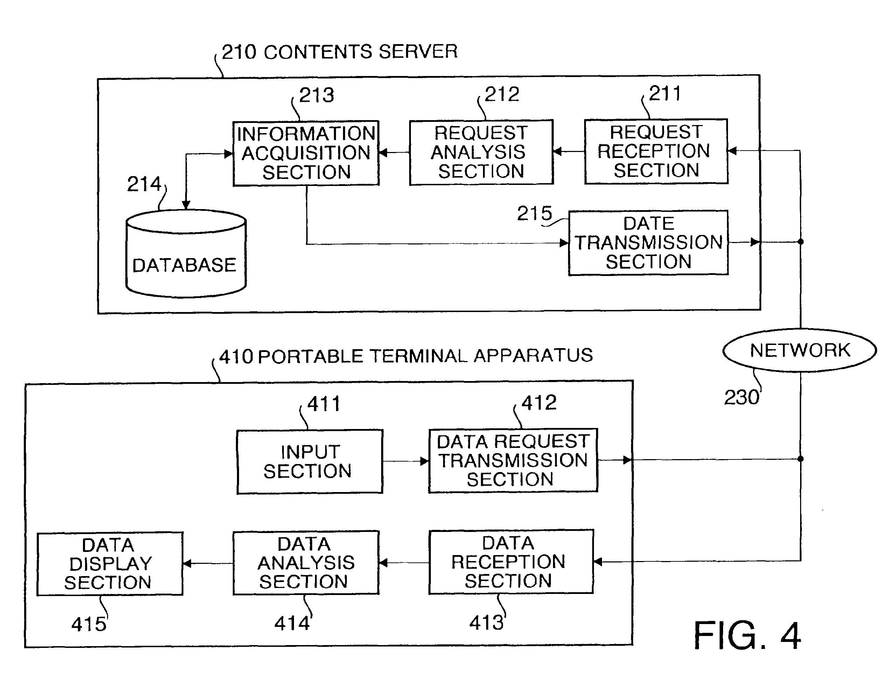

By way of example, a processing flow when alternate text data is displayed instead of image data on a terminal apparatus will be explained using the system block diagram in FIG.4.

First, the user sends a request by specifying a URL of desired HTML contents from input section 411 of portable terminal apparatus 410.

The request entered from input section 411 is sent from data request transmission section 412 to server 210 via network 230.

Server 210 receives the request through request reception section 211, analyzes the request by request analysis section 212 and acquires the requested HTML contents from database 214 through information acquisition section 213. The acquired HTML contents are sent to data transmission section 215. Data transmission section 215 sends the received HTML contents to portable terminal apparatus 410 via network 230.

Portable terminal apparatus 410 receives the requested HTML contents through data reception section 413 and analyzes the received data through data analysis section 414.

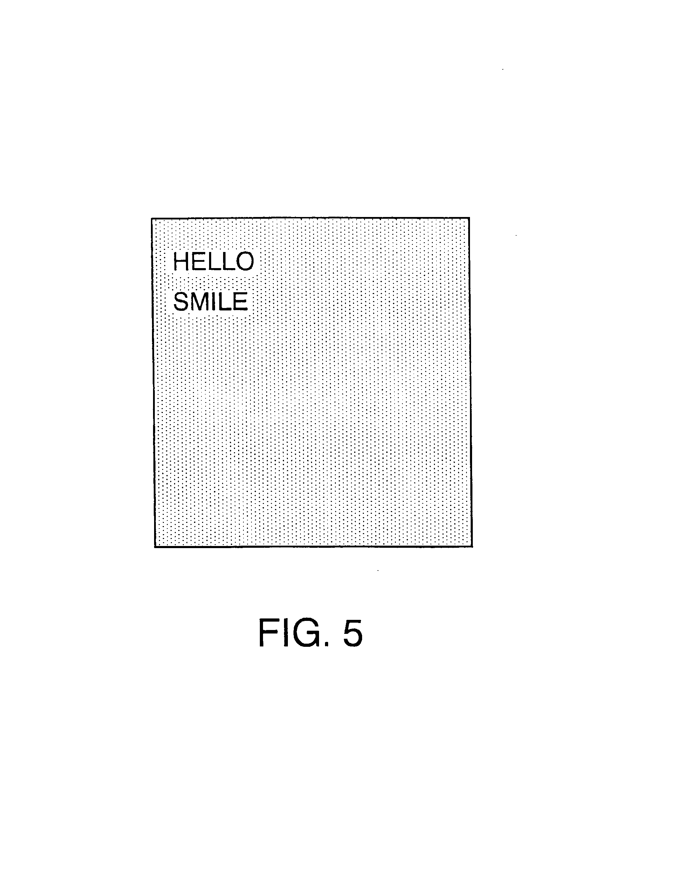

For example, suppose portable terminal apparatus 410 has received the HTML contents shown in FIG.1. Data analysis section 414 interprets character string 12 "Hello" and reference description 13 that indicates a reference to image data inserted between <BODY> 11 and </BODY> 14 as the contents to be displayed and data display section 415 displays character string 12 "Hello" and at the same time displays text data "Smile" which is a value of an ALT attribute in reference description 13 that indicates a reference to image data as a substitute for the image data, added to character string 12 "Hello". FIG.5 shows an example of the final HTML contents displayed by data display section 415 of portable terminal apparatus 410.

However, the problem of the technique of selecting display/non-display of an image by the terminal apparatus is that no consideration is given to image characteristics and the technique can provide no more than a selection whether the image should be displayed or not.

Furthermore, regarding an image exceeding the displayable size of the terminal apparatus, though the technique can display an icon or text instead of the image, it is impossible to display the image itself.

### SUMMARY OF THE INVENTION

The present invention allows even a portable terminal with a display screen with low resolution to display image data appropriately by selecting display of image data referenced in a document described in a structural description language according to the display size of the image and the display size of the terminal to display the image.

Furthermore, when the terminal requests contents described in a structural description language, the present invention can display the contents in an easy-to-see form for the user by performing rendering on the contents on the server side and downloading the contents to the terminal in an image data format.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 illustrates a description example of HTML;
FIG.2 is a block diagram of a system that implements WWW;
FIG.3 illustrates an example of HTML contents displayed by an HTML browser;
FIG.4 is a block diagram of a conventional contents server and a portable terminal apparatus;
FIG.5 illustrates an example of HTML contents displayed in the portable terminal apparatus;
FIG.6 is a block diagram showing functions of a system according to a first embodiment of the present invention;
FIG.7 is a block diagram showing a hardware configuration of the system according to the first embodiment of the present invention;
FIG.8A illustrates a description example of HTML before a change;
FIG.8B illustrates a description example of HTML after a change;
FIG.9 illustrates a display example of the changed HTML contents;
FIG.10 is a flow chart showing a data display sequence in a terminal apparatus of a system according to the first and second embodiments of the present invention;
FIG.11 is a block diagram showing a configuration of a system according to a second embodiment of the present invention;
FIG.12 is a block diagram showing a configuration of a system according to a third embodiment of the present invention;
FIG.13 is a block diagram showing a configuration of a contents server according to the third embodiment of the present invention;
FIG.14 is a block diagram showing a configuration of an agent apparatus according to the third embodiment of the present invention;
FIG.15 is a block diagram showing a configuration of an information terminal apparatus according to the third embodiment of the present invention;
FIG.16A illustrates an example of HTML contents when the display size of image data is smaller than a threshold;
FIG.16B illustrates an example of HTML contents when the display size of image data is larger than a threshold;
FIG.17A illustrates an example of the HTML contents shown in FIG.16A converted to a structural description language suited to a portable terminal;
FIG.17B illustrates an example of the HTML contents shown in FIG.16B converted to a structural description language suited to the portable terminal;
FIG.18 illustrates a display example of contents when the display size of image data is smaller than a threshold;
FIG.19 illustrates a display example of contents when the display size of image data is larger than a threshold;
FIG.20A illustrates HTML contents when the display size of image data is smaller than the display section of the portable terminal apparatus;
FIG.20B illustrates HTML contents when the display size of image data is larger than the display section of the portable terminal apparatus;
FIG.21A illustrates an example of the HTML contents shown in FIG.20A converted to a structural description language suited to the portable terminal;
FIG.21B illustrates an example of the HTML contents shown in FIG.20B converted to a structural description language suited to the portable terminal;
FIG.22 illustrates a display example of document data when the display size of image data is smaller than the display size of the display section of the portable terminal apparatus;
FIG.23 illustrates a display example of document data when the display size of image data is larger than the display size of the display section of the portable terminal apparatus;
FIG.24 illustrates an example of HTML contents created to display image data in a just size in the display section of the portable terminal apparatus;
FIG.25 illustrates an example of the HTML contents shown in FIG.24 converted to a structural description language suited to the portable terminal;
FIG.26 illustrates a display example of the document data shown in FIG.25 on the portable terminal apparatus;
FIG.27 illustrates an example of document data that displays image data clipped in the original scale and includes clipping position specification information and scaling factor specification information;
FIG.28 illustrates an example of the document data shown in FIG.27 converted to a structural description language suited to the portable terminal;
FIG.29 illustrates a display example of the document data shown in FIG.28 on the portable terminal;
FIG.30 illustrates an example of document data created by specifying rightward movement of the clipping position of the image data in the document data shown in FIG.29;
FIG.31 illustrates an example of the document data shown in FIG.30 converted to a structural description language suited to the portable terminal;
FIG.32 illustrates a display example of the document data shown in FIG.31 on the portable terminal;
FIG.33 illustrates an example of document data created by specifying enlargement of the image data in the document data shown in FIG.29;
FIG.34 illustrates an example of the document data shown in FIG.33 converted to a structural description language suited to the portable terminal;
FIG.35 illustrates a display example of the document data shown in FIG.34 on the portable terminal;
FIG.36 illustrates an example of document data created by specifying contraction of the image data in the document data shown in FIG.29
FIG.37 illustrates an example of the document data shown in FIG.36 converted to a structural description language suited to the portable terminal;
FIG.38 illustrates a display example of the document data shown in FIG.37 on the portable terminal;
FIG.39 illustrates an example of document data created by specifying just display of the image data in the document data shown in FIG.29;
FIG.40 illustrates an example of the document data shown in FIG.39 converted to a structural description language suited to the portable terminal;
FIG.41 illustrates a display example of the document data shown in FIG.40 on the portable terminal;
FIG.42 is a flow chart showing a sequence of data display by the portable terminal apparatus in the system according to the third embodiment of the present invention;
FIG.43 is a flow chart showing a sequence of data display by the portable terminal in the system according to the third embodiment of the present invention;
FIG.44 is a flow chart showing a sequence of data display by the portable terminal apparatus in the system according to the third embodiment of the present invention;
FIG.45 is a block diagram showing a configuration of a system according to a fourth embodiment of the present invention;
FIG.46 illustrates an example of document data described in a structural description language;
FIG.47 illustrates a display example of image data referenced in the document data in FIG.46;
FIG.48 illustrates a display example of the document data in FIG.46 subjected to rendering;
FIG.49 is a block diagram showing a configuration of a system according to a fifth embodiment of the present invention;
FIG.50 illustrates a display example of document data whose resolution, scale or size is requested to be changed;
FIG.51 is a block diagram showing a configuration of a system according to a sixth embodiment of the present invention;
FIG.52 is a block diagram showing a configuration of a system according to a seventh embodiment of the present invention;
FIG.53 is a block diagram showing a configuration of a system according to an eighth embodiment of the present invention;
FIG.54 illustrates a display example of document data whose position is requested to be changed;
FIG.55 is a block diagram showing a configuration of a system according to a ninth embodiment of the present invention;
FIG.56 is an example of appearance of a terminal apparatus;
FIG.57 illustrates an example of document data described in a structural description language;
FIG.58 illustrates a display example of the image data referenced in the document data in FIG.57;
FIG.59 illustrates a display example of the document data in FIG.57 subjected to rendering;
FIG.60 illustrates the correspondence between images and size/position change requests;
FIG.61 illustrates a display example of a case where the size and position of document data are requested to be changed;
FIG.62 is a block diagram showing a configuration of a system according to a tenth embodiment of the present invention;
FIG.63 illustrates an example of a position specification guide image overlaid over image data;
FIG.64 illustrates the correspondence between images and size/position change requests;
FIG.65 illustrates a display example of a case where the size and position of document data are requested to be changed;
FIG.66 is a block diagram showing a configuration of a system according to an eleventh embodiment of the present invention;
FIG.67 is a block diagram showing a configuration of a system according to a twelfth embodiment of the present invention;
FIG.68 is a block diagram showing a configuration of a system according to a thirteenth embodiment of the present invention;
FIG.69 is a block diagram showing a configuration of a system according to a fourteenth embodiment of the present invention;
FIG.70 is a block diagram showing a configuration of a system according to a fifteenth embodiment of the present invention;
FIG.71 is a block diagram showing a configuration of a system according to a sixteenth embodiment of the present invention; and
FIG.72 is a block diagram showing a configuration of a system according to a seventeenth embodiment of the present invention.

### DETAILED DESCRIPTION OF THE PREFERRED EMBODIMENTS

### [First embodiment]

With reference now to the attached drawings, a first embodiment of the present invention will be explained below.

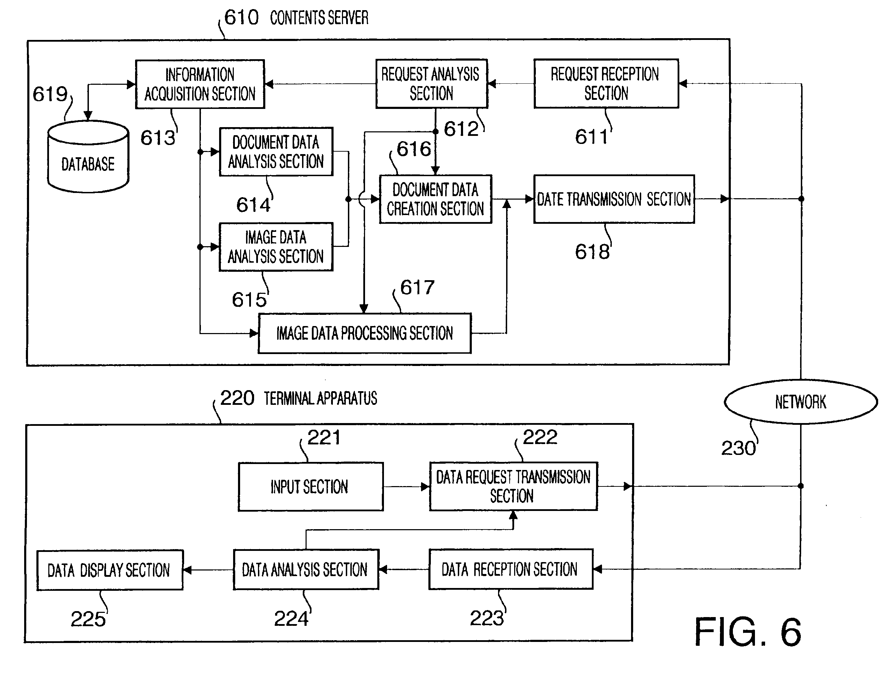

FIG.6 is a block diagram showing a configuration of a system according to the first embodiment of the present invention.

In FIG.6, contents server 610 and terminal apparatus 220 are connected to network 230 such as the Internet.

Contents server 610 comprises request reception section 611 that receives a request from terminal apparatus 220, request analysis section 612 that analyzes the received request, information acquisition section 613 that acquires information from database 619 according to the request, database 619 that controls and stores multimedia data such as documents and images, document analysis section 614 that analyzes requested contents (document), image data analysis section 615 that analyzes requested image data, document data creation section 616 that creates document data described in a structural description language from the analysis result of request analysis section 612 and the analysis results of document analysis section 614 and image data analysis section 615, image data processing section 617 that processes the image data acquired by information acquisition section 613 from database 619 according to the analysis result of request analysis section 612, and data transmission section 618 that transmits data processed by document data creation section 616 and image data processing section 617 to terminal apparatus 220.

Terminal apparatus 220 is implemented using a general-purpose machine, for example, personal computer, and comprises input section 221 that accepts inputs from the user, data request transmission section 222 that transmits a data request according to the input, data reception section 223 that receives the requested data, data analysis section 224 that analyzes the received data, and data display section 225 that displays data from the analysis result, making it possible to send a request for information to contents server 610 according to the user's operation, receive the requested information and display the information.

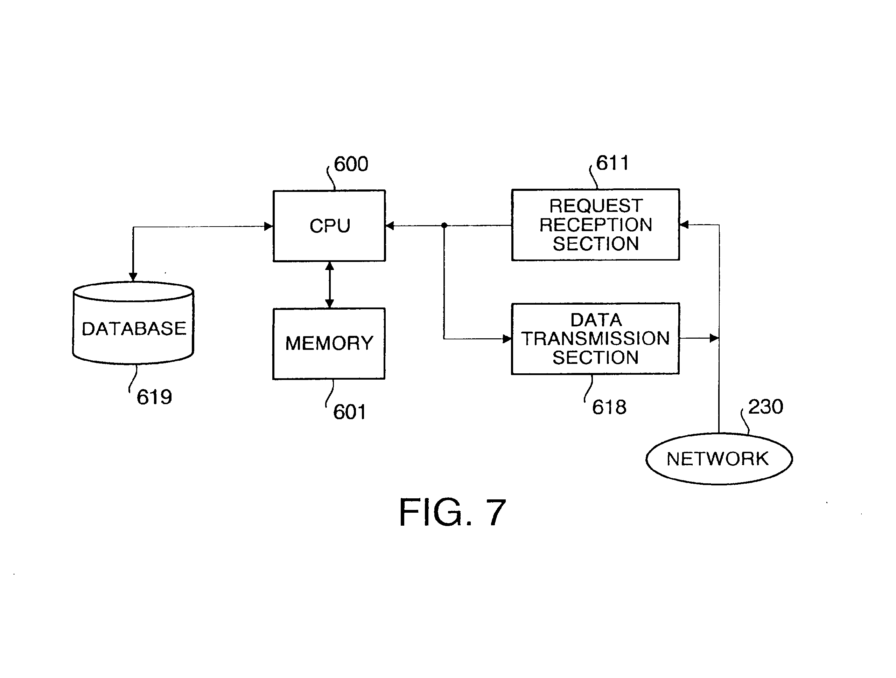

FIG.7 illustrates a hardware configuration of contents server 610. CPU 600 implements the function block above by executing a program stored in memory 601. Memory 601 is configured by several storage media such as ROM and RAM and the program is stored in ROM. RAM serves as a work area when CPU 600 executes processing based on descriptions of the program.

The user requests HTML contents described in a structural description language (e.g., Hypertext Markup Language, that is, HTML) by indicating an identifier (e.g., Uniform Resource Locator, that is, URL) from input section 221 of terminal apparatus 220 and the request is sent from data request transmission section 222 to contents server 610. Contents server 610 receives the request through request reception section 611, analyzes the request through request analysis section 612 and acquires the requested HTML contents through information acquisition section 613 from database 619.

Then, the acquired HTML contents are analyzed by document data analysis section 614. In the case where there is image data referenced in the HTML contents, the image data is acquired from database 619 by information acquisition section 613 and input to image data analysis section 615. Image data analysis section 615 analyzes the image data and acquires the image display size.

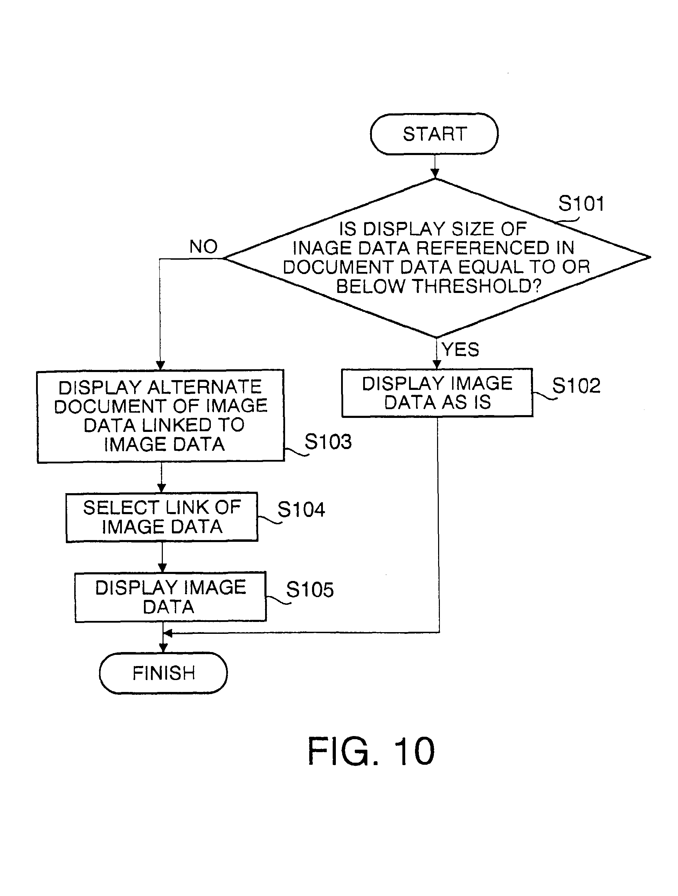

FIG.7 illustrates a flow chart showing summary process step until the image data is displayed. With reference the FIG.10, the process until the image data is displayed will be explained below.

The analysis result (display size) is notified to document data creation section 616. Document data creation section 616 compare the display size of the image data referenced in the HTML contents with a threshold(S101), and when the display size of the image data referenced in the HTML contents is smaller than the threshold, the document data creation section 616 sends the reference description of the image data in the HTML contents without any change as document data. on the other hand, when the display size is larger than the threshold, the document data creation section 616 creates as the reference description of the image data in the HTML contents, an alternate document of the image data and document data that links secondary request information of the original image data to the alternate document.

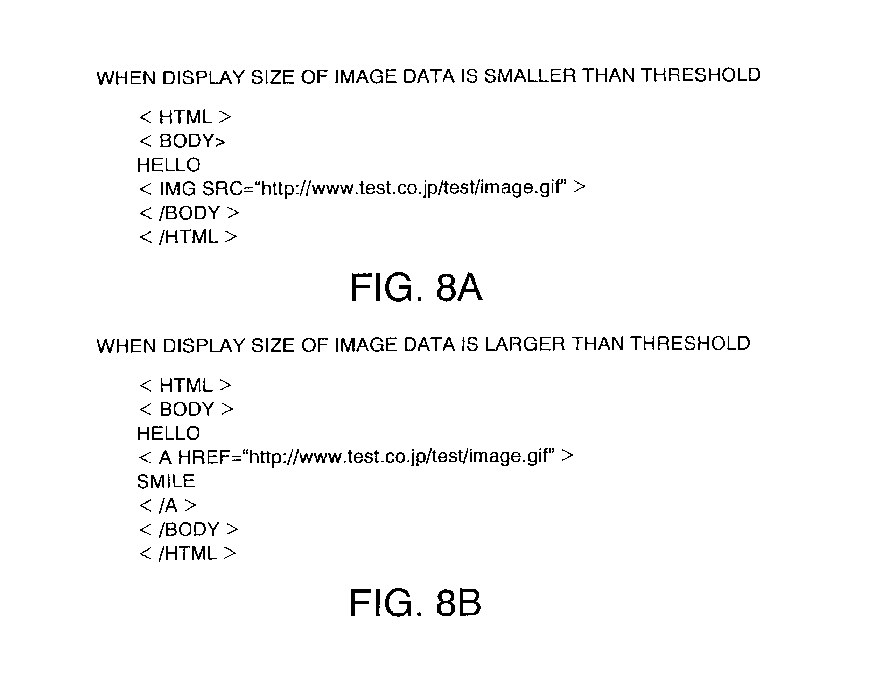

FIG.8A and FIG.8B show their respective document examples created.

FIG.8A is an example of HTML contents sent to terminal apparatus 220 when the display size of the image data is smaller than the threshold. As shown in FIG.8A, "reference" of the image data is described in the HTML contents. When terminal apparatus 220 receives the HTML contents shown in FIG.8A, data analysis section 224 analyzes the HTML contents, data display section 225 displays the document data and data request transmission section 222 requests contents server 610 to send the image file referenced in the HTML contents.

Contents server 610 receives the image data request through reception section 611 and acquires image data through information acquisition section 613 from database 619 and sends the image data to terminal apparatus 220 through data transmission section 618 via image data processing section 617.

Terminal apparatus 220 receives the image data through data reception section 223, displays the image data in the document data already displayed by data display section 225 via data analysis section 224 (S102).

On the other hand, FIG.8B is an example of HTML contents sent to terminal apparatus 220 when the display size of the image data is larger than the threshold. When the display size of the image data is larger than the threshold, document data creation section 616 inserts an alternate document of the image data and secondary request information that links the original image data to the alternate document as tag A instead of the reference to the image data.

That is, instead of <IMG SRC=.......>
<A HREF=......>
SMILE
</A>
where "<A HREF=......>" is the secondary request information and "SMILE" is the alternate document.

Terminal apparatus 220 that has received the HTML contents whose reference part of the image data above has been changed analyzes the HTML contents though analysis section 224 and displays the analysis result through data display section 225.

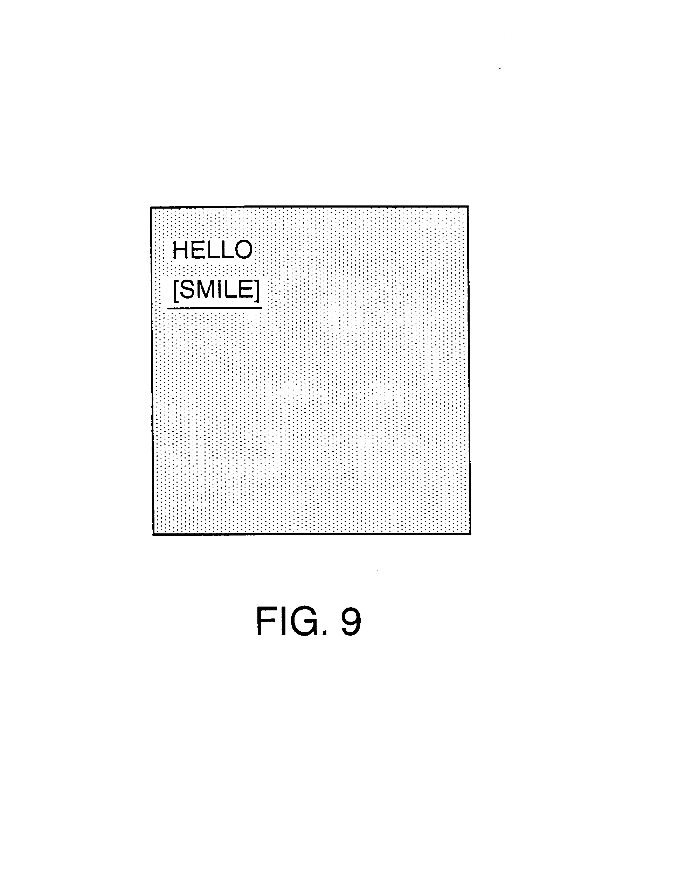

FIG.9 is a display example displayed by terminal apparatus 220 that has received the HTML contents above in FIG.8B. The alternate document (SMILE) is displayed with a link. This allows the user to recognize that a original image is linked to the alternate document.

Next, when the user operates input section 221 to select the link to the image data by clicking on the alternate document(S104), data request transmission section 222 sends a request for the image data to contents server 610.

Contents server 610 receives the image data request through request reception section 611, analyzes the request through request analysis section 612, acquires the requested image data from database 619 via information acquisition section 613 and the acquired image data is passed image data processing section 617, and is sent from data transmission section 618 to terminal apparatus 220 .

Terminal apparatus 220 receives the image data by data reception section 223 and provide to data analysis section 224, further data display section 225 displays the image data according to the analyzed result (S105).

According to this embodiment, when image data is referenced in the HTML contents, contents server 610 extracts the image data temporarily from database 619, checks the display size and in the case where the display size is larger than a threshold, contents server 610 replaces the reference of the image data in the HTML contents with an alternate document and secondary request information which links to the original image data and sends the replaced data to terminal apparatus 220. Therefore, a small image below the threshold is automatically downloaded to terminal apparatus 220, but in the case of a large image that exceeds the threshold, only the alternate document is displayed on data display section 225 of terminal apparatus 220. It is not until the user requests the image data by clicking on the alternate document that the large image data is downloaded to terminal apparatus 220. For example, in the case where the threshold is set to 1/4 of the displayable size of terminal apparatus 220, images equal to or smaller than 1/4 of the displayable size are automatically downloaded to terminal apparatus 220 and displayed, but images greater than 1/4 of the displayable size are downloaded only at the user's request.

### [Second embodiment]

First, with reference to the attached drawings, a second embodiment of the present invention will be explained below.

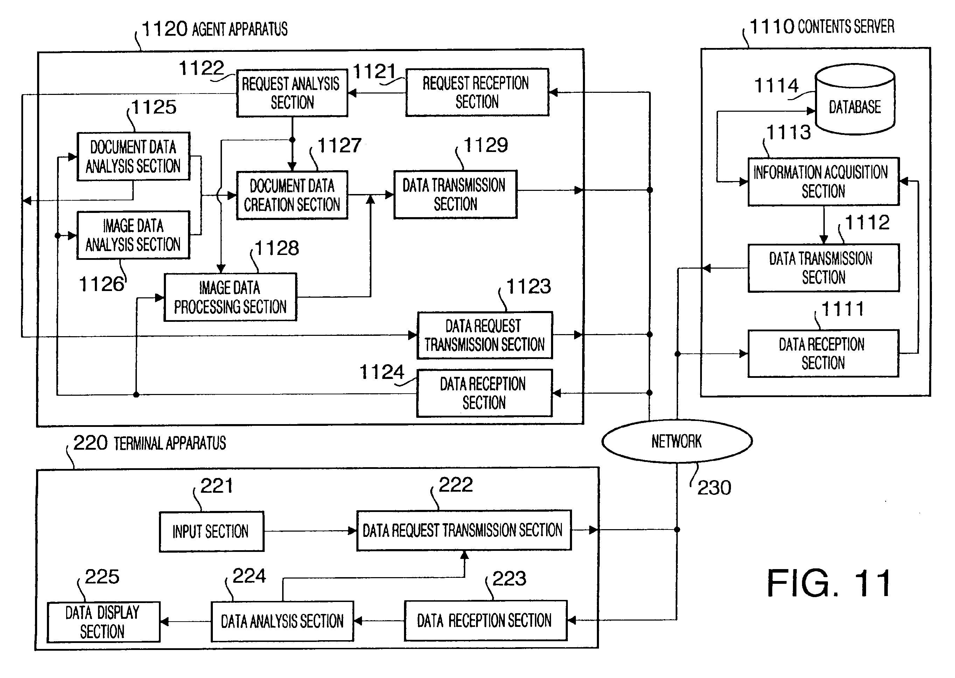

FIG.11 is a block diagram showing a configuration of a system according to the second embodiment of the present invention. In FIG.11, contents server 1110, agent apparatus 1120 and terminal apparatus 220 are connected to network 230 such as the Internet.

Contents server 1110 comprises request reception section 1111 that receives a request for information from agent apparatus 1120 and terminal apparatus 220, information acquisition section 1113 that acquires information from database 1114 according to the request, database 1114 that controls and stores multimedia data such as document data and image data and data transmission section that transmits the data acquired by information acquisition section 1113 to agent apparatus 1120 or terminal apparatus 220.

Agent apparatus 1120 comprises request reception section 1121 that receives a request for contents from terminal apparatus 220, request analysis section 1122 that analyzes the received request, data request transmission section 1123 that requests contents server 1110 to send desired data, data reception section 1124 that receives the data sent from contents server 1110 according to the request, document data analysis section 1125 that analyzes the received document data, image data analysis section 1126 that analyzes the received image data, document data creation section 1127 that creates document data described in a structural description language from the analysis result of request analysis section 1122 and the analysis results of document data analysis section 1125 and image data analysis section 1126, image data processing section 1128 that processes the image data received from contents server 1110 by data reception section 1124, and data transmission section 1129 that sends the data processed by document data creation section 1127 and image data processing section 1128 to terminal apparatus 220.

Terminal apparatus 220 is implemented using a general-purpose machine, for example, personal computer, and comprises input section 221 that accepts inputs from the user, data request transmission section 222 that transmits a data request according to the input, data reception section 223 that receives the requested data, data analysis section 224 that analyzes the received data, and data display section 225 that displays data from the analysis result, making it possible to send a request for information to agent apparatus 1120 according to the user's operation, receive the requested information and display the information.

The user requests document data described in a structural description language (e.g., HTML) to agent apparatus 1120 by indicating an identifier (e.g., URL) from input section 221 of terminal apparatus 220. The request is send by data request transmission section 222 to agent apparatus 1120.

Agent apparatus 1120 receives the request sent from terminal apparatus 220 through request reception section 1121, analyzes the request through request analysis section 1122 and requests contents server 1110 to send the requested contents from data request transmission section 1123. That is, agent apparatus 1120, instead of terminal apparatus 220, sends a request for the contents to contents server 1110.

Contents server 1110 receives the request sent from agent apparatus 1120 through request reception section 1111, acquires the requested contents from database 1114 through information acquisition section 1113 and sends the acquired contents from data transmission section 1112 to agent apparatus 1120. That is, contents server 1110 sends the contents not to terminal apparatus 220 but to agent apparatus 1120.

Agent apparatus 1120 receives the contents sent from contents server 1110 through data reception section 1124 and analyzes the received contents through data analysis section 1125. As a result of the analysis, in the case where there is image data referenced in the contents, data request transmission section 1123 sends a request for the referenced image to contents server 1110.

Contents server 1110 receives the image request from agent apparatus 1120 through request reception section 1111, acquires the corresponding image file from database 1114 through information acquisition section 1113 and sends the acquired image file from data transmission section 1112 to agent apparatus 1120.

The summary of processing step until the image data is displayed is similar to above described first embodiment. With reference the FIG.10, the process until the image data is displayed will be explained below.

Agent apparatus 1120 analyzes the referenced image sent from contents server 1110 through image data analysis section 1126 (S101). The analysis result of the image data is notified to document data creation section 1127. The analysis result includes information indicating whether the referenced image is larger than a threshold, which is 1/4 the display size of data display section 225 of terminal apparatus 220, or not. In the case where the display size of the referenced image data is smaller than the threshold, document data creation section 1127 creates document data (see FIG.8A) as it is without changing the reference description as a reference for the image data, and in the case where the display size of the referenced image data is larger than the threshold, document data creation section 1127 creates document data (see FIG.8B) by replacing the reference description of the image data with an alternate document of the image data and a link information of the alternate document to the original image data.

When the display size of the image data is smaller than threshold, as illustrated in FIG.8A, a reference of the image data is described and the created document data is sent from data transmission section 1129 to terminal apparatus 220.

Terminal apparatus 220 that has received the document data through data reception section 223 analyzes the document data through data analysis section 224, displays the document data through data display section 225 and requests agent apparatus 1120 to send the image data referenced in the document data through data request transmission section 222. At this time, the image data automatically requested based on the reference description of the image data is only an image whose display size is smaller than the threshold.

Agent apparatus 1120 receives the request for the image data from request reception section 1121 and requests contents server 1110 to send the image data through data request transmission section 1123 via request analysis section 1122.

Contents server 1110 receives the request for the image data from agent apparatus 1120 through request reception section 1111, acquires the requested image data from database 1114 through information acquisition section 1113 and sends the image data to agent apparatus 1120 through data transmission section 1112.

Agent apparatus 1120 receives the image data sent from contents server 1110 through data reception section 1124 and sends the received image data to terminal apparatus 220 through data transmission section 1129 via image data processing section 1128.

Terminal apparatus 220 receives the image data through data reception section 223, displays the image data in the document data already displayed by data display section 225 via data analysis section 224 (S102). FIG.3 shows an example of a case where document data and image data are displayed.

When the display size of the image data is larger than the threshold, as illustrated in FIG.8B, a link to the image data instead of the reference description of the image data in the HTML contents is described in the document data and the HTML contents whose reference description has been changed to alternate information is sent to terminal apparatus 220 from data transmission section 1129.

When terminal apparatus 220 receives the HTML contents (document data) whose reference description has been changed to alternate information through data reception section 223, terminal apparatus 220 analyzes the received document data through data analysis section 224 and displays the analysis result through data display section 225 (S103). The display example above is shown in FIG.9. "Smile" in FIG.9 is alternate characters for the referenced image.

Then, when the user selects a link to the image data by clicking on "Smile" from input section 221 (S104), a request for the image data is sent from data request transmission section 222 to agent apparatus 1120. Agent apparatus 1120 receives the image data request through request reception section 1121, analyzes the request through request analysis section 1122 and requests contents server 1110 to send the image data.

Contents server 1110 receives the image data request from agent apparatus 1120 through request reception section 1111, acquires the requested image data from database 1114 through information acquisition section 1113 and sends the image data to agent apparatus 1120 through data transmission section 1112.

Agent apparatus 1120 receives the image data sent from contents server 1110 through data reception section 1124, sends the received image data to terminal apparatus 220 via image data processing section 1128 through data transmission section 1129.

Terminal apparatus 220 receives the image data through data reception section 223 and via data analysis section 224 displays the image data through data display section 225 (S105).

As shown above, agent apparatus 1120 of this embodiment analyzes the contents requested from the client and checks the display size in the case where the referenced image is included and in the case where the display size is larger than the threshold, replaces the reference description in the contents with an alternate document and information on a link to the image data and then sends the replaced data to the client. Therefore, terminal apparatus 220 displays the alternate characters first, even in the case where an image larger than the display size is included in the requested contents, allowing the user to request the image data at the user's discretion.

### [Third embodiment]

First, a third embodiment of the present invention will be explained with reference to the attached drawings.

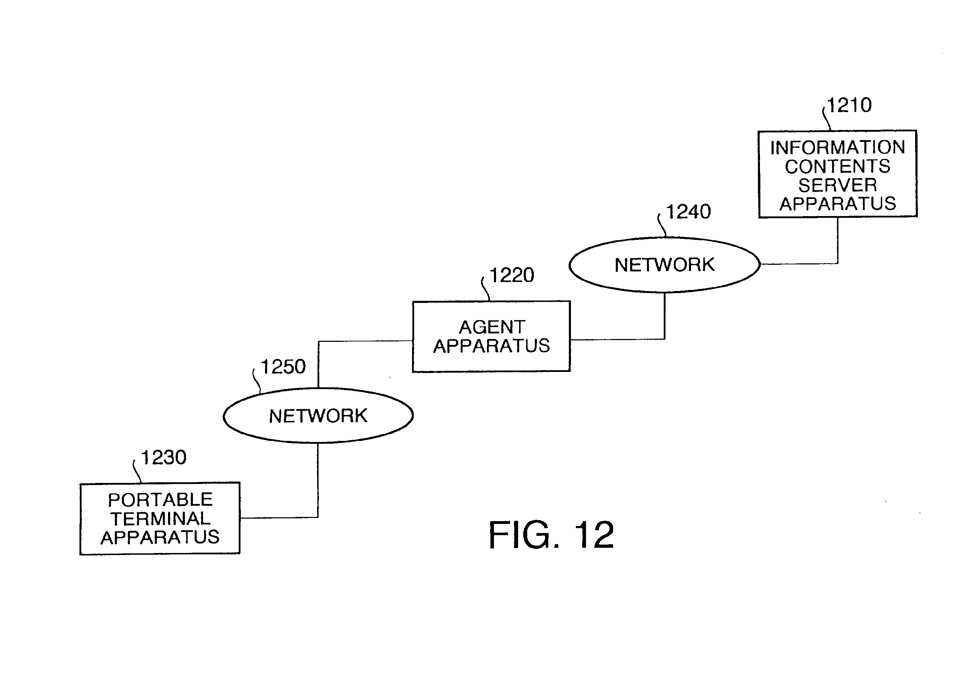

FIG.12 is a block diagram showing a configuration of a system according to the third embodiment of the present invention. In FIG.12, contents server 1210 is connected to network 1240 such as the Internet and portable terminal apparatus 1230 is connected to network 1250 such as a cellular phone network and agent apparatus 1220 is connected to both network 1240 and network 1250.

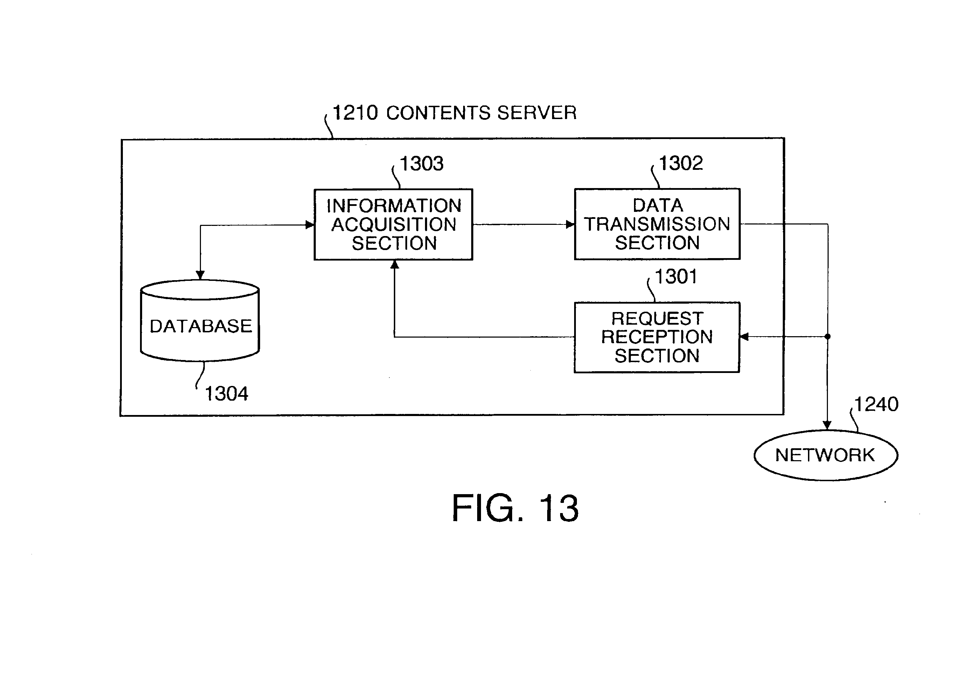

FIG.13 is a block diagram showing a configuration of contents server 1210.

Contents server 1210 comprises request reception section 1301 that receives an information request from agent apparatus 1220, data transmission section 1302 that transmits the data acquired from database 1304 to requested device ( agent apparatus 1220 ) , information acquisition section 1303 that acquires information from database 1304 according to the request, and database 1304 that controls and stores multimedia data such as document data and image data.

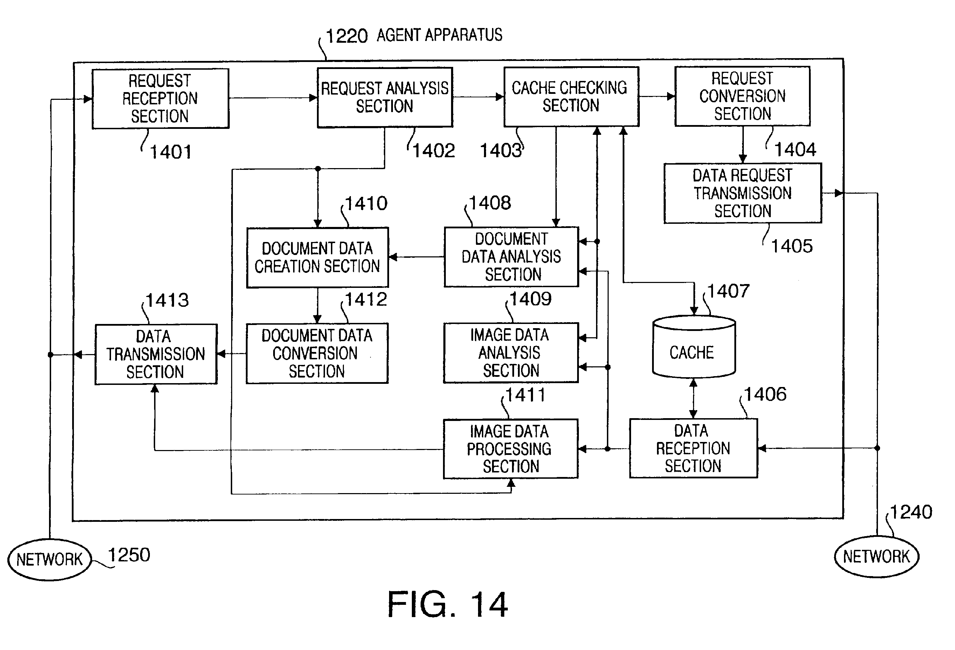

FIG.14 is a block diagram showing a configuration of agent apparatus 1220.

Agent apparatus 1220 comprises request reception section 1401 that receives an information request from portable terminal apparatus 1230, request analysis section 1402 that analyzes the received request, cache checking section 1403 that checks whether the requested data exists in cache 1407 or not, request conversion section 1404 that converts the format of the request, data request transmission section 1405 that requests contents server 1210 to acquire data, data reception section 1406 that receives the data sent from contents server 1210 according to the request, cache 1407 that stores and controls the received data, document data analysis section 1408 that analyzes the received document data, image data analysis section 1409 that analyzes the received image data, document data creation section 1410 that creates a document described in a structural description language from the analysis result of request analysis section 1402 and the analysis results of document data analysis section 1408 and image data analysis section 1409, document data conversion section 1412 that converts the format of the created document, image data processing section 1411 that processes the image data received from contents server 1210 through data reception section 1406, and data transmission section 1413 that sends the data processed by document data conversion section 1412 and image data processing section 1411 to portable terminal apparatus 1230.

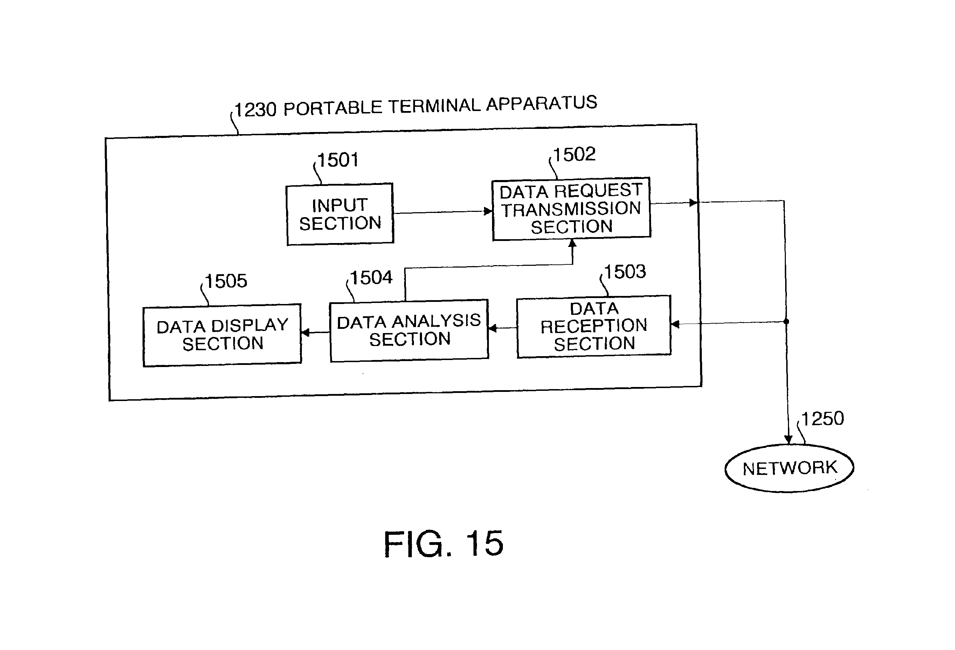

FIG.15 is a block diagram showing a configuration of portable terminal apparatus 1230.

Portable terminal apparatus 1230 is implemented using, for example, a cellular phone, and comprises input section 1501 that accepts inputs from the user, data request transmission section 1502 that sends a data request according to the input, data reception section 1503 that receives the requested data, data analysis section 1504 that analyzes the received data, and data display section 1505 that displays the data from the analysis result, making it possible to send a request for information to agent apparatus 1220 according to the user's operations, receive the requested information and display the information.

The user requests document data described in a structural description language (e.g., HTML) by specifying an identifier (e.g., URL) from input section 1501 of portable terminal apparatus 1230 and the request is transmitted to agent apparatus 1220 from data request transmission section 1502.

Agent apparatus 1220 receives the request through request reception section 1401, analyzes the request through request analysis section 1402 and checks whether the requested document data or image data exists in cache 1407 or not through cache checking section 1403. In the case where the requested data exists in cache 1407, agent apparatus 1220 reads the requested data from cache 1407 and sends the data to document data analysis section 1408.

In the case where there is no requested document data or image data in cache 1407, request conversion section 1404 converts the request and data request transmission section 1405 requests contents server 1210 to send the requested document data or image data.

Contents server 1210 receives the data request from agent apparatus 1220 through request reception section 1301 and acquires the requested data from database 1304 through information acquisition section 1303 and sends the acquired data to agent apparatus 1220 through data transmission section 1302.

Agent apparatus 1220 receives the data sent from contents server 1210 through data reception section 1406, stores the acquired document data or image data in cache 1407 and in the case where the data is document data, document data analysis section 1408 analyzes the data. In the case where there is image data referenced in the document data, cache checking section 1403 checks whether the requested image data exists in cache 1407 or not, and in the case where the requested image data exists in cache 1407, the image data is read from cache 1407 and sent to image data analysis section 1409.

In the case where the requested image data does not exist in cache 1407, agent apparatus 1220 sends a request for the image data to contents server 1210 via request conversion section 1404 through data request transmission section 1405. Contents server 1210 receives the image data request from agent apparatus 1220 through request reception section 1301, acquires the requested image data from database 1304 and sends the acquired image data to agent apparatus 1220 through data transmission section 1302.

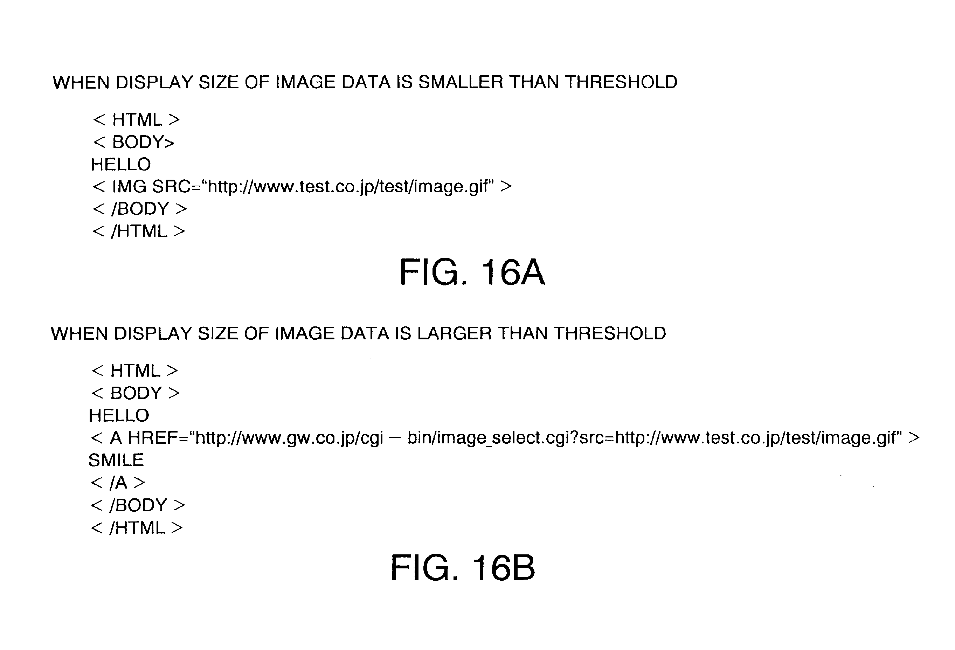

Then, agent apparatus 1220 lets image data analysis section 1409 analyze whether the display size of the image data acquired from contents server 1210 or read from cache 1407 exceeds a threshold or not. The analysis result of the image data is notified to document data creation section 1410. In the case where the display size of the referenced image data is smaller than the threshold, agent apparatus 1220 creates document data without changing the reference description of the image data in the document data. FIG.16A shows an example of document data created when the display size of the referenced image data is smaller than the threshold. On the other hand, when the display size of the referenced image data is larger than the threshold, agent apparatus 1220 creates document data with the reference description of the image data changed to an alternate document of the image data and alternate information made up of link information as second requested information of the original image data. FIG.16B shows an example of document data created when the display size of the image data is larger than the threshold.

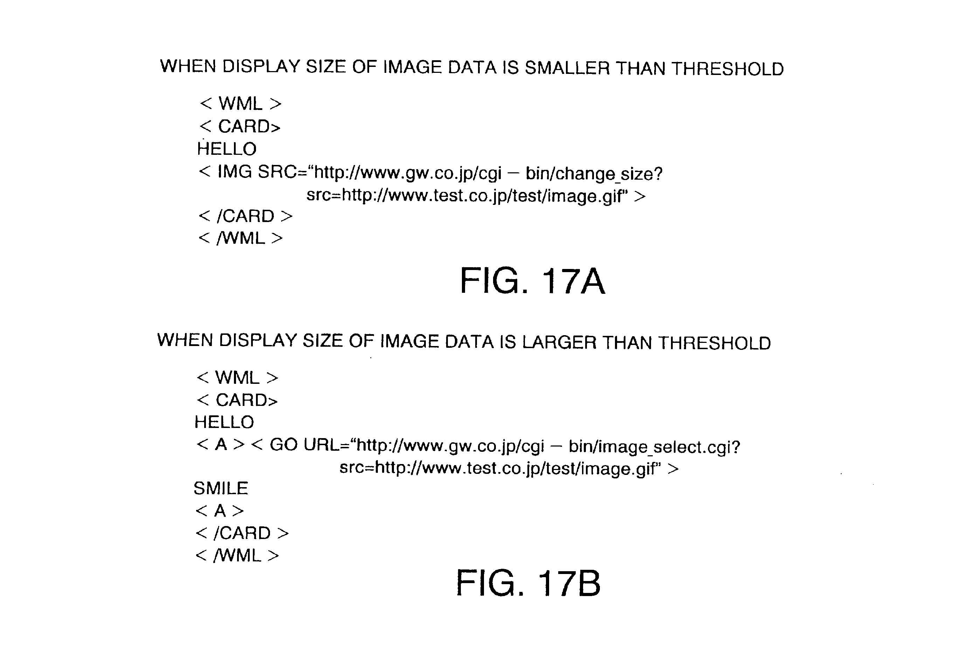

Then, the document data created by document data creation section 1410 is converted to document data described in a structural description language (e.g., Wireless Markup Language, that is, WML) suitable for a portable terminal through document data conversion section 1412. FIG.17A is an example of the document data in FIG.16A converted to a WML format and FIG.17B is an example of the document data in FIG.16B converted to a WML format.

Here, the document data indicating the reference of the image data when the display size of the image data shown in FIG.16A is smaller than the threshold is converted to document data description whose format is to be converted to an image format suitable for a portable terminal.

When the display size of the image data is smaller than the threshold, as shown in FIG.17A, the reference of the image data accompanied by format conversion is described and the document data created is sent to portable terminal apparatus 1230 from data transmission section 1413.

Portable terminal apparatus 1230 that has received the document data through data reception section 1503 analyzes the document data through data analysis section 1504, displays the document data through document data display section 1505 and requests agent apparatus 1220 to send the image data referenced in the document data through data request transmission section 1502.

Agent apparatus 1220 receives the request for the image data involving format conversion from request reception section 1401, analyzes the request through request analysis section 1402, checks whether the requested image data exists in cache 1407 through cache checking section 1403, and in the case where the requested image data exists, sends the requested image data to image data processing section 1411, and in the case where the requested image data does not exist in cache 1407, converts the request through request conversion section 1404 and requests contents server 1210 to send data through data request transmission section 1405.

Contents server 1210 receives the data request from agent apparatus 1220 through request reception section 1301, acquires the data from database 1304 through acquisition section 1303 and sends the acquired data to agent apparatus 1220 through data transmission section 1302.

Agent apparatus 1220 receives the image data through data reception section 1406, stores the image data in the cache 1407 and sends the image data to image data processing section 1411, and the image data processing section 1411 processes the image data sent from data reception section 1406 or read from the cache 1407 according to the analysis result of request analysis section 1402 and sends the processed image data to portable terminal apparatus 1230 through data transmission section 1413.

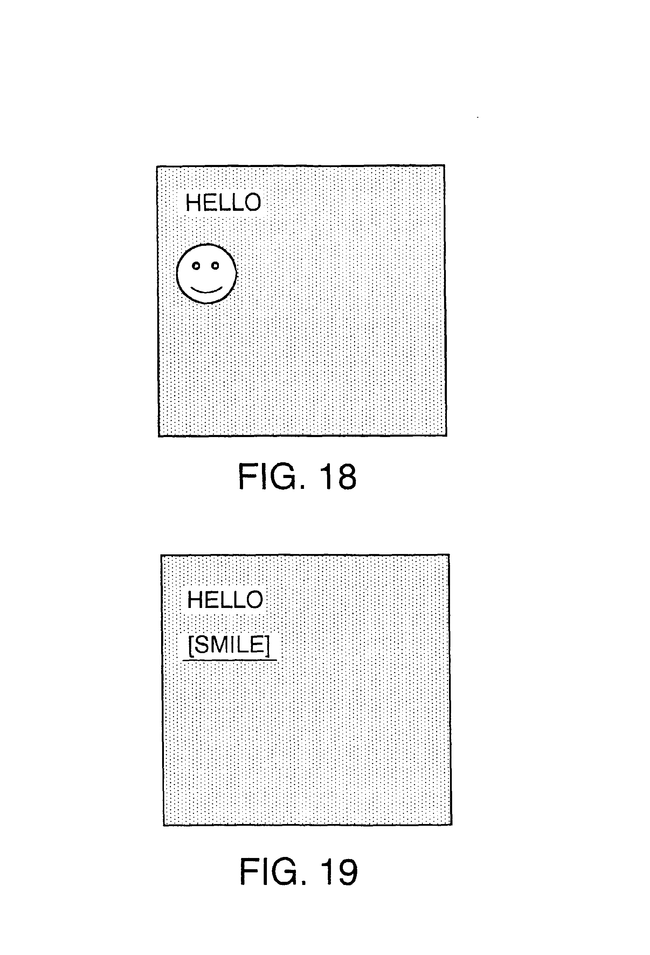

Portable terminal apparatus 1230 receives the image data through data reception section 1503 and, via data analysis section 1504, displays the image data in the document data already displayed by data display section 1505. FIG.18 shows an example of a case where the document data and image data are displayed.

On the other hand, when the display size of the image data is larger than the threshold, an alternate document of the image data and a link to the document for processing the image data are described in the document data and sent by data transmission section 1413 to portable terminal apparatus 1230.

Portable terminal apparatus 1230 that has received the document data through data reception section 1503 analyzes the document data through data analysis section 1204 and displays the analysis result through data display section 1205. FIG.19 shows an example of the display above.

Then, when the user selects the link to processing of the image data by clicking on an alternate document "Smile" from input section 1501, data request transmission section 1502 sends the image data processing request to agent apparatus 1220.

Agent apparatus 1220 receives the image data processing request through request reception section 1401, analyzes the request through request analysis section 1402 and checks whether the image data to be processed exists in cache 1407 or not through cache checking section 1403. In the case where the image data to be processed exists in cache 1407, the image data to be processed is sent to image data analysis section 1408.

On the other hand, in the case where the image data to be processed does not exist in cache 1407, the request is converted to an image data acquisition request by request conversion section 1404 and data request transmission section 1405 sends a request for the image data to contents server 1210.

Contents server 1210 receives the request for the image data through request reception section 1301, acquires the requested image data from database 1304 via information acquisition section 1303 and sends the image data to agent apparatus 1220 through data transmission section 1302.

Agent apparatus 1220 receives the image data sent from contents server 1210 through data reception section 1406.

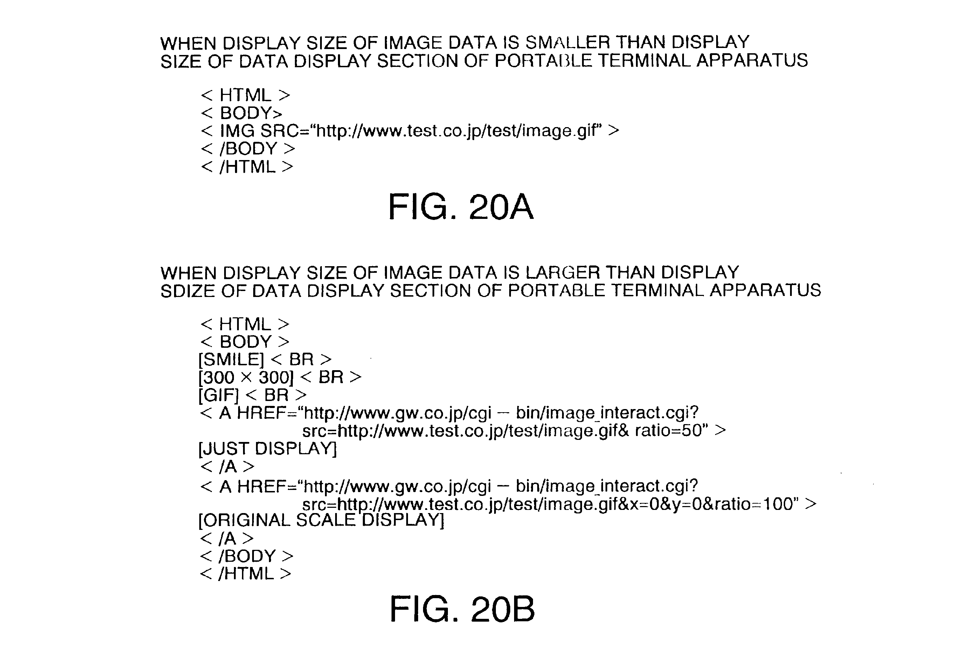

The image data acquired from the cache 1407 or contents server 1210 is analyzed by image data analysis section 1409, it is checked whether the display size of the image data is smaller than the display size of data display section 1505 of portable terminal apparatus 1230 or not, and in the case where the display size of the image data is smaller, document data is created as a reference of the image data. FIG.20A shows an example of document data created when the display size of the image data is smaller.

In the case where the display size of the image data is larger than the display size of data display section 1505, document data creation section 1410 creates document data that has attribute information such as the size and format of the image data and information of a link to selection information of the image data display method.

FIG.20B shows an example of document data created when the display size of the image data is larger. In FIG.20B, [300×300] and [GIF] indicate attribute information; [300×300] indicates the display size of the image data and [GIF] indicates the image data format. [JUST DISPLAY] and [ORIGINAL SCALE DISPLAY] described in tag A indicate selection items of the display method. Link information that requests processing corresponding to the display method linked to [JUST DISPLAY] and [ORIGINAL SCALE DISPLAY] is described in the <A HREF=...> format.

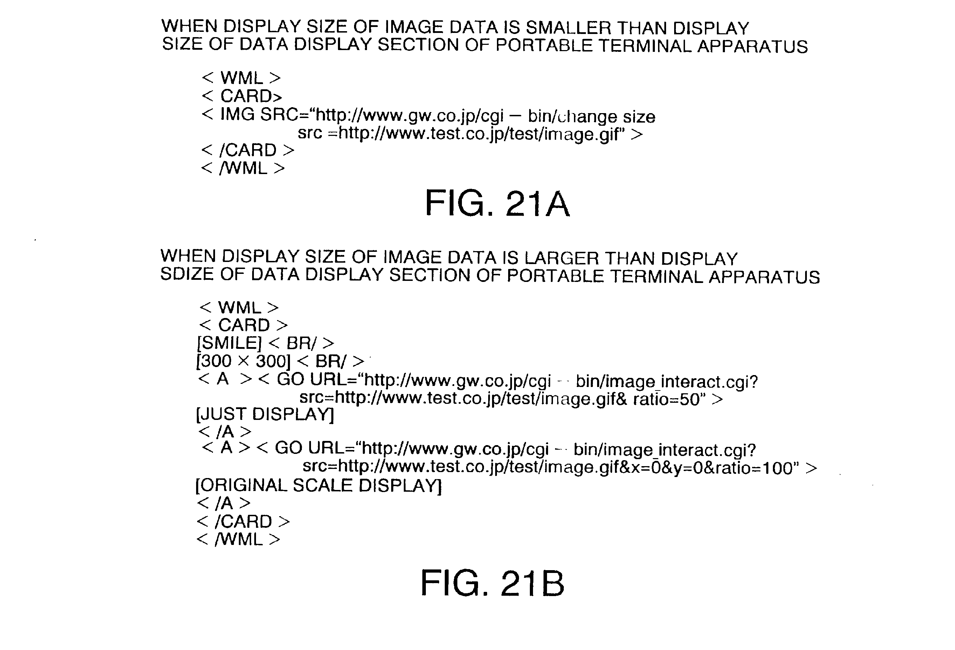

Then, the document data created by document data creation section 1410 is converted to document data described in a structural description language (e.g., WML) suitable for a portable terminal. FIG.21A is an example of conversion of the document data in FIG.20A and FIG.21B is an example of conversion of the document data in FIG.20B.

In the case where the display size of the image data is smaller than the display size of data display section 1505 of portable terminal apparatus 1230, the reference of the image data involving format conversion is described as shown in the example of FIG.21A and the document data created is sent from data transmission section 1413 to portable terminal apparatus 1230.

Portable terminal apparatus 1230 analyzes the document data received by data reception section 1503 through data analysis section 1504, displays the document data through data display section 1505 and requests agent apparatus 1220 to send the image data through data request transmission section 1502 according to the reference.

Agent apparatus 1220 receives the request for the image data involving format conversion from request reception section 1401, analyzes the request through request analysis section 1402, checks whether the requested image data exists in cache 1407 or not through cache checking section 1403, and in the case where the requested image data exists in cache 1407, sends the requested image data to image data processing section 1411, and in the case where the requested image data does not exist, converts the request through request conversion section 1404 and sends a request for the image data to contents server 1210 through data request transmission section 1405.

Contents server 1210 receives the data request from agent apparatus 1220 through request reception section 1301, acquires the data from database 1304 through information acquisition section 1303 and sends the acquired data to agent apparatus 1220 through data transmission section 1302.

Agent apparatus 1220 receives the image data through data reception section 1406, stores the data in the cache 1407 and at the same time sends the data to image data processing section 1411, and data processing section 1411 processes the image data sent from data reception section 1406 or read from cache 1407 according to the analysis result of request analysis section 1402 and sends the processed image data to portable terminal apparatus 1230 through data transmission section 1413.

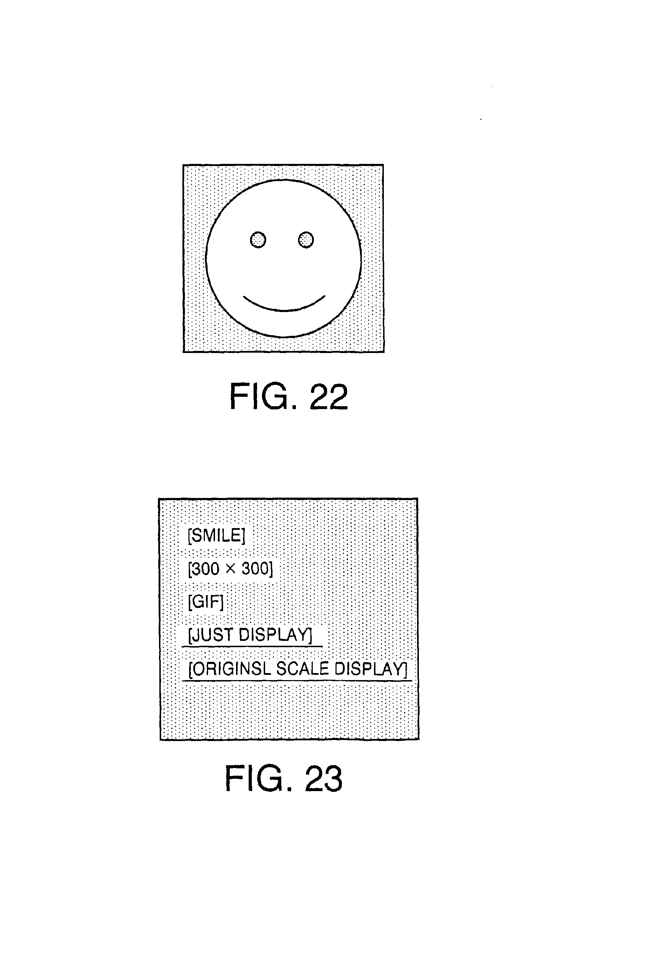

Portable terminal apparatus 1230 receives the image data through data reception section 1503, via data analysis section 1504, displays the image data through data display section 1505. FIG.22 shows an example of the display screen that displays the image data.

Then, in the case where the display size of the image data is larger than the display size of data display section 1505 of portable terminal apparatus 1230, attribute information of the image data and a link to the optional information of the display method are described in the document data as shown in the example of FIG.21B and sent to portable terminal apparatus 1230 through data transmission section 1413.

Portable terminal apparatus 1230 that has received the document data from reception section 1503 analyzes the document data through data analysis section 1504 and displays the analysis result through data display section 1505. FIG.23 shows the screen that displays the attribute information and selection items ([JUST DISPLAY] and [ORIGINAL SCALE DISPLAY]) of the display method instead of the referenced image.

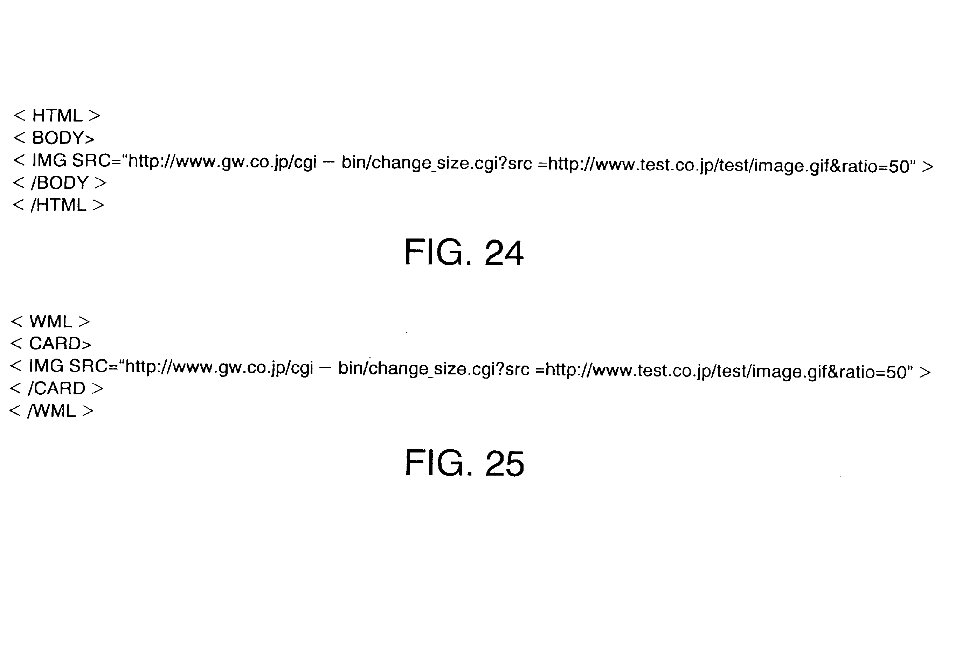

When the user requests for just display of the image data by clicking on the selection item of [JUST DISPLAY] from input section 1501, the request is sent to agent apparatus 1220 through data request transmission section 1502. Agent apparatus 1220 receives the just display request of the image data through request reception section 1401, analyzes the request through request analysis section 1402 and creates document data from the image data through document data creation section 1410 in a just size on data display section 1505 of portable terminal apparatus 1230. FIG.24 shows an example of document data created by document data creation section 1410 at this time.

The document data created by document data creation section 1410 (FIG.24) is converted to document data described in a structural description language (e.g., Wireless Markup Language, that is, WML) suitable for a portable terminal through document data conversion section 1412. FIG.25 shows a conversion example of the document data in FIG.24. The converted document data (FIG.25) is sent to portable terminal apparatus 1230 through data transmission section 1413.

Portable terminal apparatus 1230 that has received the document data above (FIG.25) through data reception section 1503 analyzes the document data through data analysis section 1504 and sends a request for processing the image to be just-displayed to agent apparatus 1220 through data request transmission section 1502.

Agent apparatus 1220 analyzes the request for processing the image to be just-displayed through request analysis section 1402, checks whether the image data to be processed exists in cache 1407 or not through cache checking section 1403, and in the case where the image data to be processed exists in cache 1407, sends the image data to be processed to image data processing section 1411, and in the case where the image data to be processed does not exist, converts the request through request conversion section 1404 and sends a request for the image data to contents server 1210 through data request transmission section 1405.

Contents server 1210 receives the image data request from agent apparatus 1220 through request reception section 1301, acquires the image data from database 1304 through information acquisition section 1303 and sends the acquired image data to agent apparatus 1220 through data transmission section 1302.

Agent apparatus 1220 receives the image data through data reception section 1406, stores the image data in cache 1407 and at the same time sends the image data to data processing section 1411. Image data processing section 1411 processes the image data sent from reception section 1406 or read from cache 1407 according to the analysis result of request analysis section 1402. That is, image data processing section 1411 converts the image data to a size that can be just-displayed on portable terminal apparatus 1230 by performing scaling processing on the acquired image data at a scaling factor indicated in the analysis result. This processed image data is sent to portable terminal apparatus 1230 through data transmission section 1413.

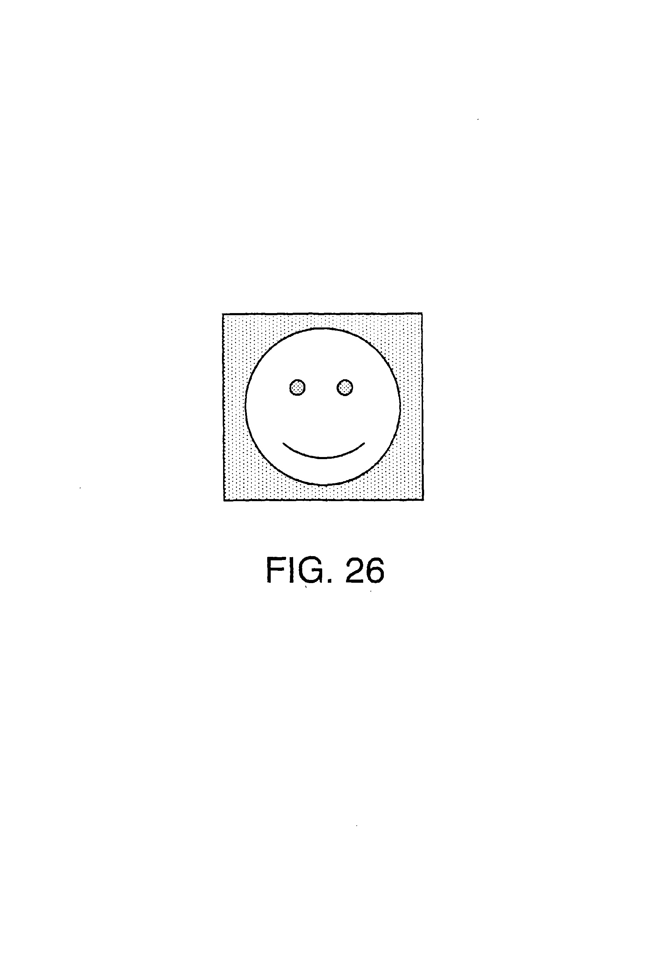

Portable terminal apparatus 1230 receives the image data through data reception section 1503 and via data analysis section 1504, displays the image data through data display section 1505. FIG.26 shows the display example above. The referenced image is shown just fitted in the display screen of portable terminal apparatus 1230.

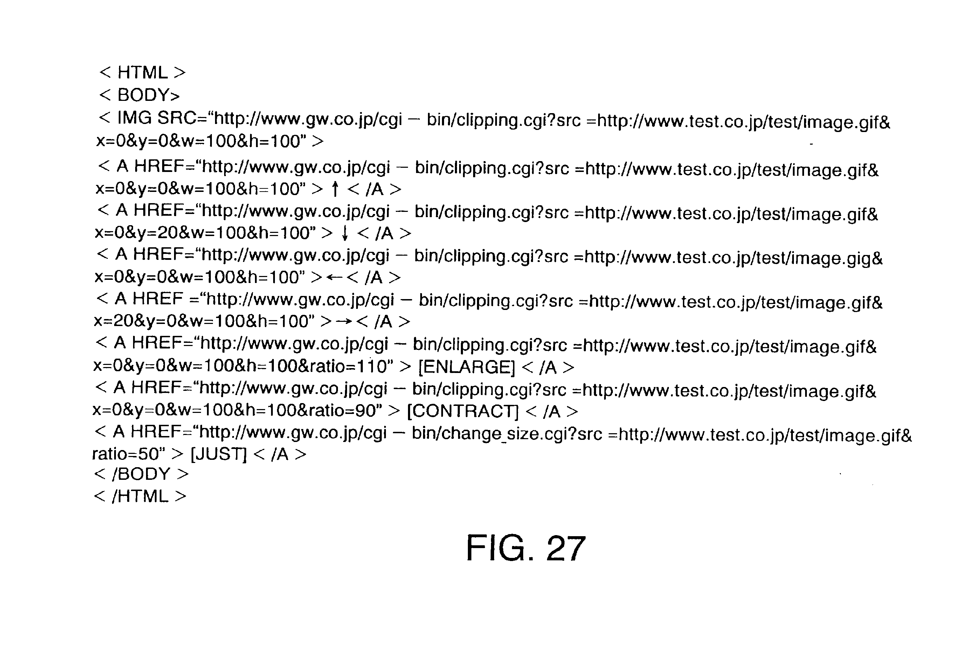

Furthermore, when the user requests that the image data be displayed in the original scale through input section 1501, the request is sent to agent apparatus 1220 through data request transmission section 1502. Agent apparatus 1220 receives the request for displaying the image data in the original scale through request reception section 1401 and analyzes the request through request analysis section 1402. Document data creation section 1410 performs clipping on the image data based on the analysis result and creates document data including a reference description that references a partial image displayed in the original scale on data display section 1505 of portable terminal apparatus 1230, a description to display information specifying the image data clipping position and selection items of the scaling factor of the image data, and link information corresponding to each selection item. FIG.27 shows an example of document data to be created. In FIG.27, it is requested that processing of clipping a partial image at a predetermined position be executed from the referenced image in the original scale through the description <IMG SRC=...> and that the clipped partial image be returned. First to fourth tags A comprise a description that displays the mark to indicate the method of moving the clipping position, a description requesting that processing of clipping a partial image be executed from the clipping position specified by a mark, which is shifted from the current clipping position when the mark is selected and a description requesting that the clipped partial image be returned. Fifth to seventh tags A comprise a description that displays selection items ([ENLARGE] [CONTRACT] [JUST]) of the display method, a description requesting that image processing corresponding to the selected display method be applied to the referenced image when the selection item of the display method is selected, and a description requesting that the image with the image processing applied be returned.

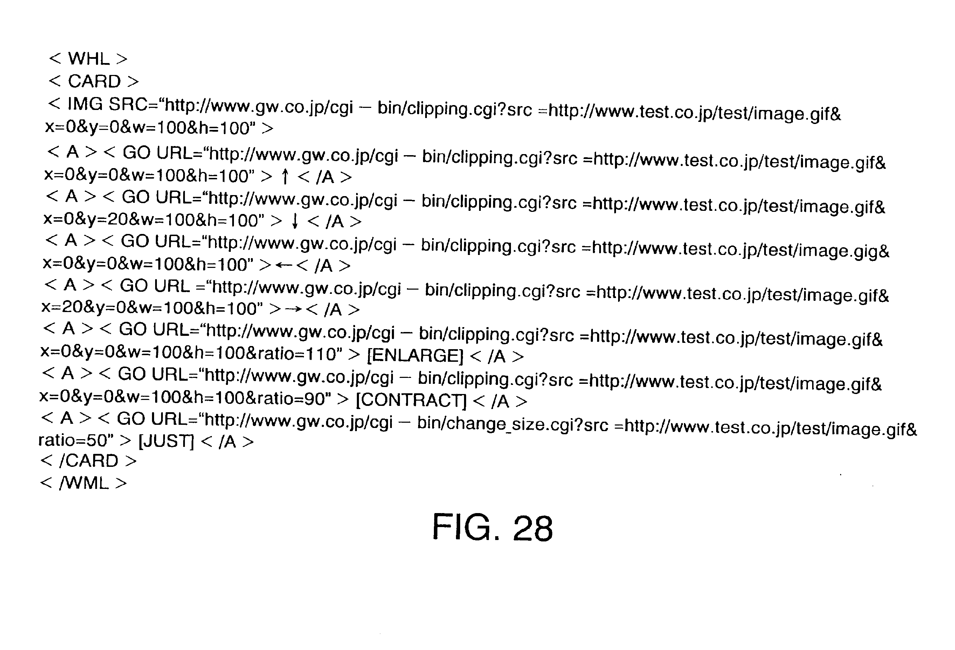

The document data created by document data creation section 1410 is converted to document data described in a structural description language (e.g., WML) suitable for a portable terminal by document data conversion section 1412. FIG.28 shows an example of conversion of the document data in FIG.27. The document data converted to a WML format is sent to portable terminal apparatus 1230 through data transmission section 1413.

Portable terminal apparatus 1230 receives the document data above (FIG.28) through data reception section 1503 and analyzes the document data through data analysis section 1504. Portable terminal apparatus 1230 displays the document data on data display section 1505 based on the analysis result, and requests clipping on the image data based on the reference description in the document data (FIG.28) and processing to display the clipped partial image in the original scale to agent apparatus 1220 through data request transmission section 1502.

Agent apparatus 1220 receives the image processing request to display the image in the original scale through request reception section 1401, analyzes the request through request analysis section 1402 and checks whether the image data to be processed exists in cache 1407 or not through cache checking section 1403. In the case where the image data to be processed exists in cache 1407, agent apparatus 1220 sends the image data to be processed to image data processing section 1411, but in the case where the image data to be processed does not exist in cache1407, converts the request through request conversion section 1404 and then sends a request for the image data to contents server 1210 through data request transmission section 1405.

Contents server 1210 receives the data request from agent apparatus 1220 through request reception section 1301, acquires the data from database 1304 through information acquisition section 1303, and sends the acquired data to agent apparatus 1220 through data transmission section 1302.

Agent apparatus 1220 receives the image data through data reception section 1406, stores the image data in cache 1407, sends the image data to image data processing section 1411, and image data processing section 1411 processes the image data sent from data reception section 1406 or read from cache 1407 according to the analysis result of request analysis section 1402 and data transmission section 1413 sends the processed image data to portable terminal apparatus 1230.

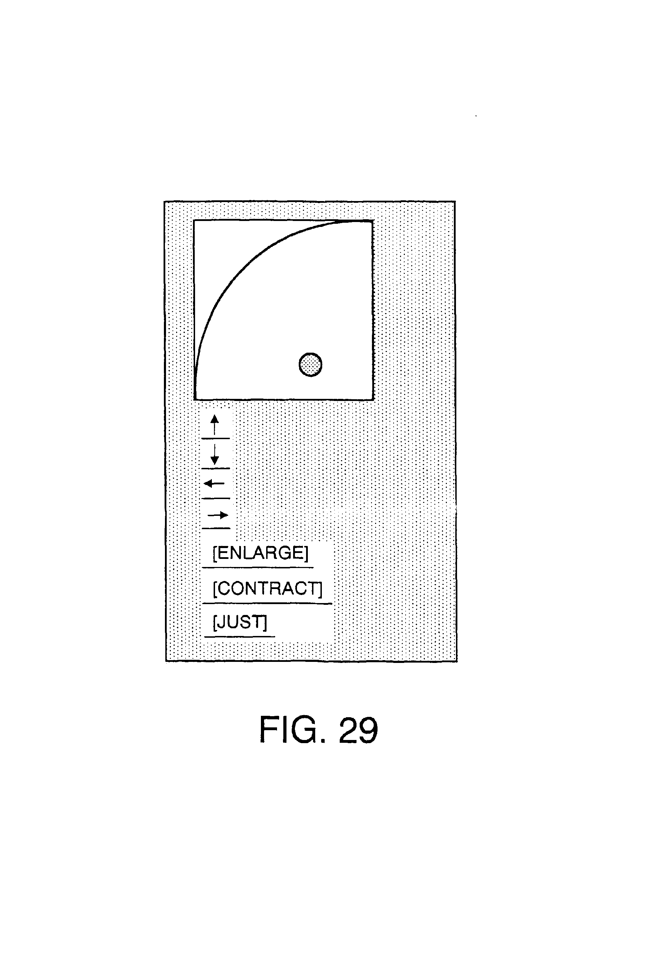

Portable terminal apparatus 1230 receives the image data through data reception section 1503 and via data analysis section 1504, displays the image data in the document data already displayed through data display section 1505. FIG.29 shows the display example above. The partial image in the original scale, mark indicating the clipping position and selection items to select from the three display methods are displayed on the display screen of portable terminal apparatus 1230.

Furthermore, when the user sends a request for moving the clipping position by clicking on the mark indicating the clipping position from input section 1501, the request is sent to agent apparatus 1220 through data request transmission section 1502.

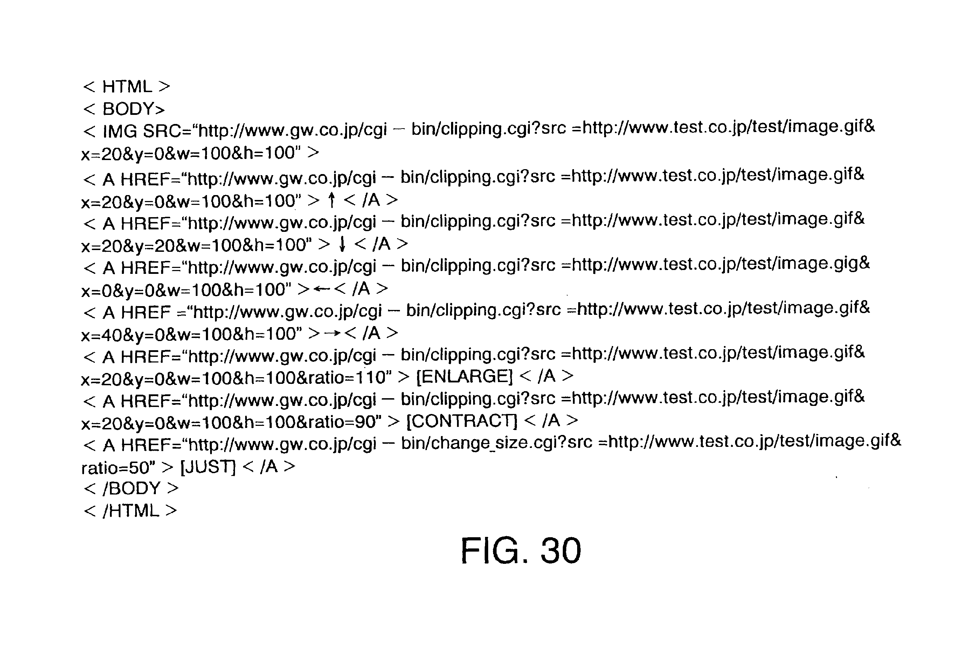

Upon receipt of the request for moving the clipping position of the image data through request reception section 1401, agent apparatus 1220 analyzes the request through request analysis section 1402. Document data creation section 1410 creates document data including a reference description of the clipping image that is clipped from the position after movement indicated by the user, information specifying the image data clipping position, selection items of the scaling factor of the image data and link information corresponding to the selection items. FIG.30 shows an example of document data created when the user requests that the image data be moved rightward.

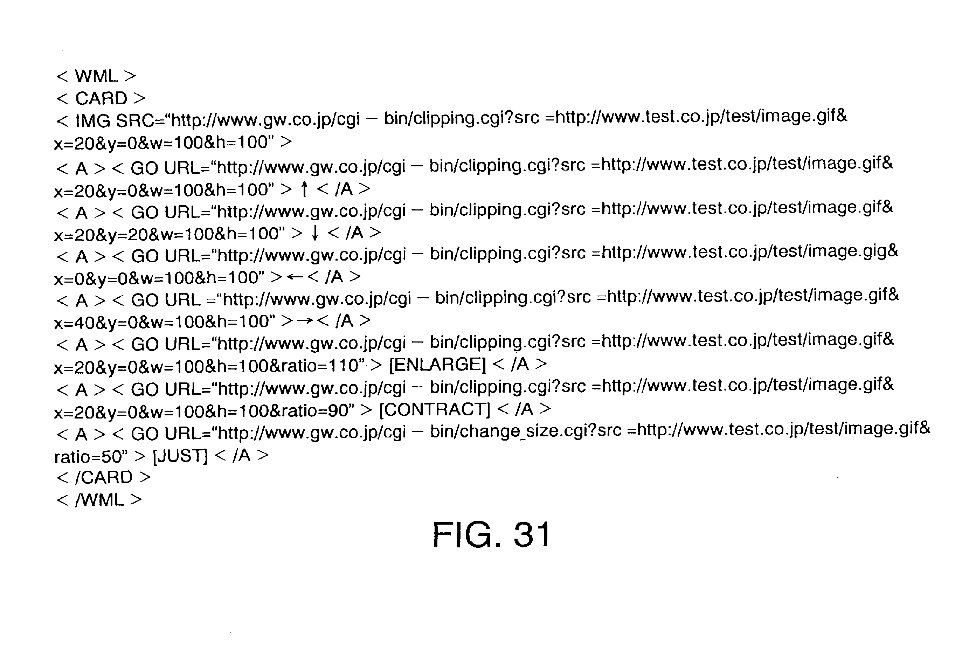

Then, the document data created by document data creation section 1410 is converted to document data described in a structural description language (e.g., WML) suitable for a portable terminal apparatus by document data conversion section 1412. FIG.31 shows an example of conversion of the document data in FIG.30. The converted document data (FIG.31) is sent to portable terminal apparatus 1230 through data transmission section 1413.

Portable terminal apparatus 1230 that has received the document data above (FIG.31) through data reception section 1503 analyzes the document data through data analysis section 1504. Data display section 1505 displays the document data according to the analysis result and data request transmission section 1502 sends the image processing request for clipping on the image data based on the reference description in the document data (FIG.31) and for clipping and displaying the image data in the original scale to agent apparatus 1220.

Agent apparatus 1220 receives the image processing request to display the image in the original scale through request reception section 1401, analyzes the request through request analysis section 1402 and checks whether the image data to be processed exists in cache 1407 or not through cache checking section 1403. In the case where the image data to be processed exists in cache 1407, the image data to be processed is sent to image data processing section 1411, and in the case where the image data to be processed does not exist in cache 1407, the request is converted by request conversion section 1404 and data request transmission section 1405 sends a request for the image data to contents server 1210.

Contents server 1210 receives the request for the image data from agent apparatus 1220 through request reception section 1301, acquires the image data from database 1304 through information acquisition section 1303 and sends the acquired data to agent apparatus 1220 through data transmission section 1302.

Agent apparatus 1220 receives the image data through data reception section 1406, stores the image data in cache 1407 and sends the image data to image data processing section 1411. Image data processing section 1411 processes the image data sent from data reception section 1406 or read from cache 1407 according to the analysis result of request analysis section 1402. That is, image data processing section 1411 clips the partial image from the clipping position (clipping position specified by the user) of the referenced image in the original scale specified by request analysis section 1402. For the clipped partial image, the image data processed by data transmission section 1413 is sent to portable terminal apparatus 1230.

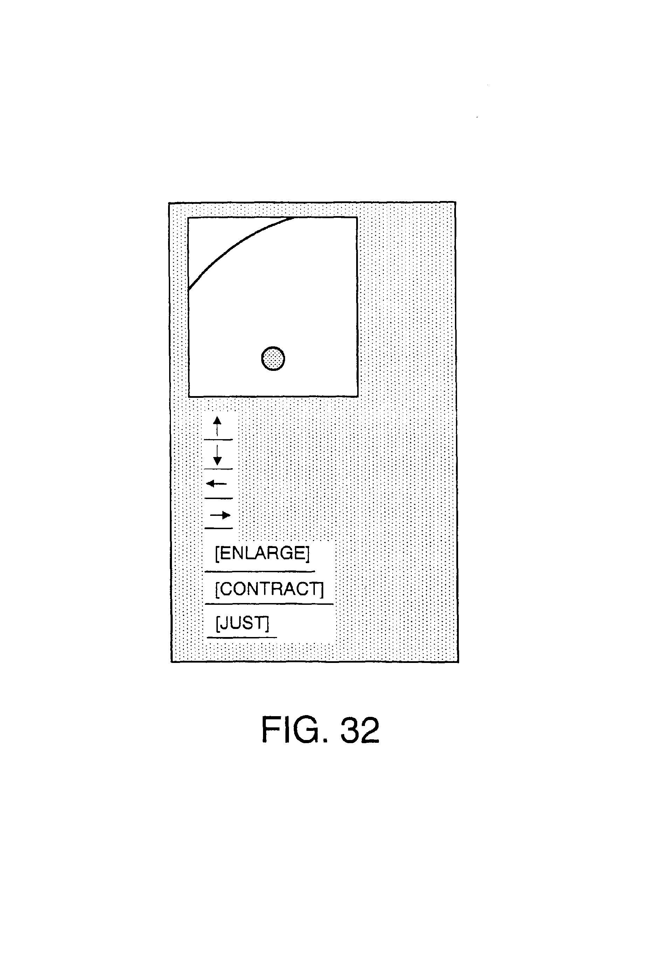

Portable terminal apparatus 1230 receives the shifted partial image through data reception section 1503, and via data analysis section 1504, displays the image data in the document data already displayed by data display section 1505. FIG.32 shows the display example above.

Furthermore, when the user clicks the display item [EXPAND] from input section 1501, a request for expanding the image data is sent through a link associated with the [EXPAND] display item. The request is sent to agent apparatus 1220 through data request transmission section 1502.

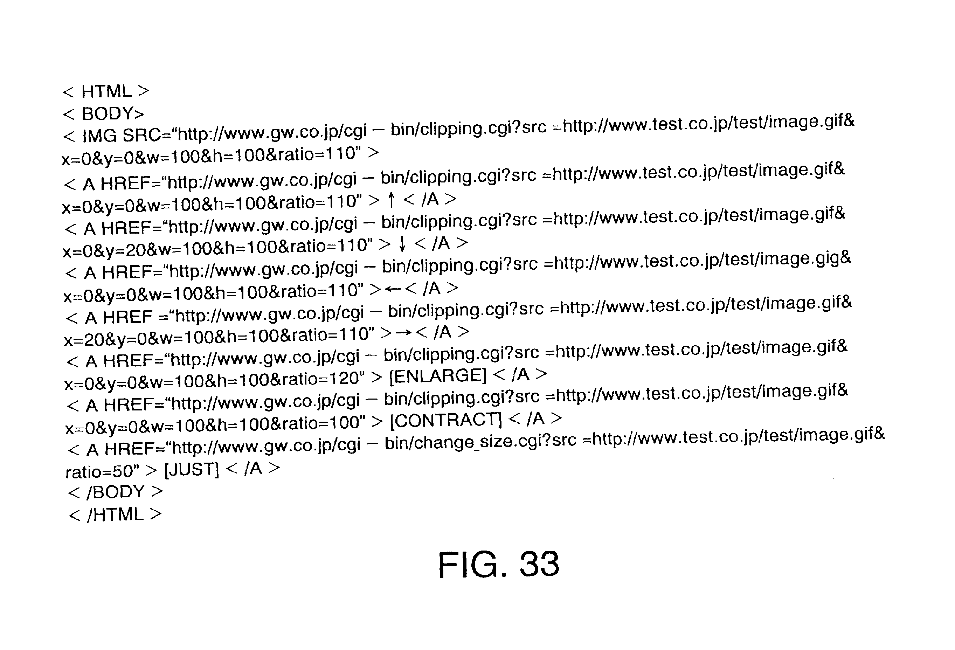

Agent apparatus 1220 receives the image data expansion request through request reception section 1401 and analyzes the request through request analysis section 1402. Document data creation section 1410 creates document data including a reference description of the expanded image including the request for expanding the image data, information for specifying the clipping position of the image data and the selection information of the scaling factor of the image data according to the analysis result of request analysis section 1402. FIG.33 shows an example of the document data created when the user sends a request for expanding the image data in FIG.29. The image reference description <IMG SRC=...> is replaced with a 110% expanded image.

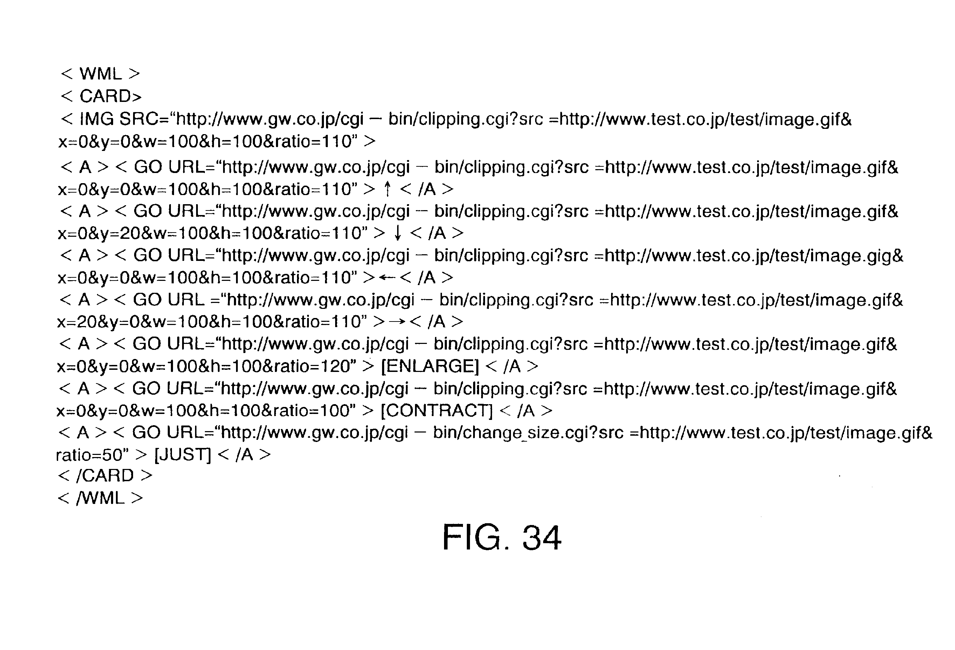

Then, the document data created by document data creation section 1410 is converted to document data described in a structural description language (WML) suitable for a portable terminal by document data conversion section 1412. FIG.34 shows an example of conversion of the document data in FIG.33. The converted document data (FIG.34) is sent to portable terminal apparatus 1230 through data transmission section 1413.

Upon reception of the document data (FIG.34) through data reception section 1503, portable terminal apparatus 1230 analyzes the document data through data analysis section 1504. Portable terminal apparatus 1230 displays the document data through data display section 1505 and sends a request for image processing of clipping the image data and displaying an expanded view through data request transmission section 1502 based on the reference description of the expanded image to agent apparatus 1220.

Agent apparatus 1220 receives the request for displaying an expanded view of the image through request reception section 1401, analyzes the request through request analysis section 1402, checks whether the image data to be processed exists in cache 1407 or not through cache checking section 1403, and in the case where the image data to be processed exists in cache 1407, sends the image data to be processed to image data processing section 1411, and in the case where the image data to be processed does not exist in cache 1407, converts the request through request conversion section 1404 and sends a request for the image data to contents server 1210 through data request transmission section 1405.

Contents server 1210 receives the data request from agent apparatus 1220 through request reception section 1301, acquires the data from database 1304 through information acquisition section 1303 and sends the acquired data to agent apparatus 1220 through data transmission section 1302.

Agent apparatus 1220 receives the image data through data reception section 1406, stores the image data in cache 1407, sends the image data to image data processing section 1411, and image data processing section 1411 processes the image data sent from data reception section 1406 or read from cache 1407 according to the analysis result of request analysis section 1402 and sends the processed data to portable terminal apparatus 1230 through data transmission section 1413.

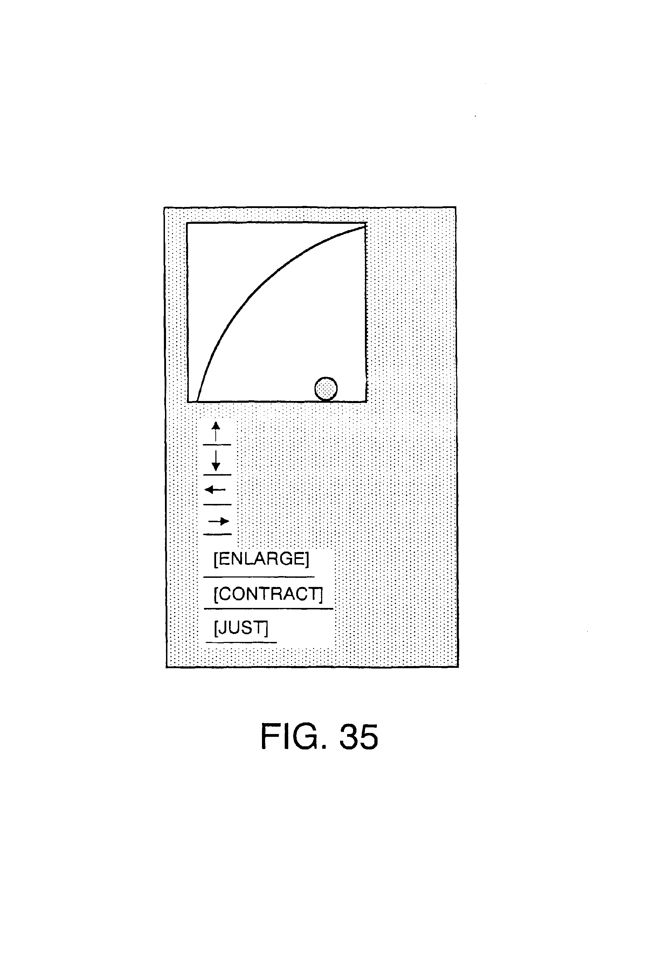

Portable terminal apparatus 1230 receives the image data through data reception section 1503 and via data analysis section 1504, displays the image data in the document data already displayed by data display section 1505. FIG.35 shows the display example above.

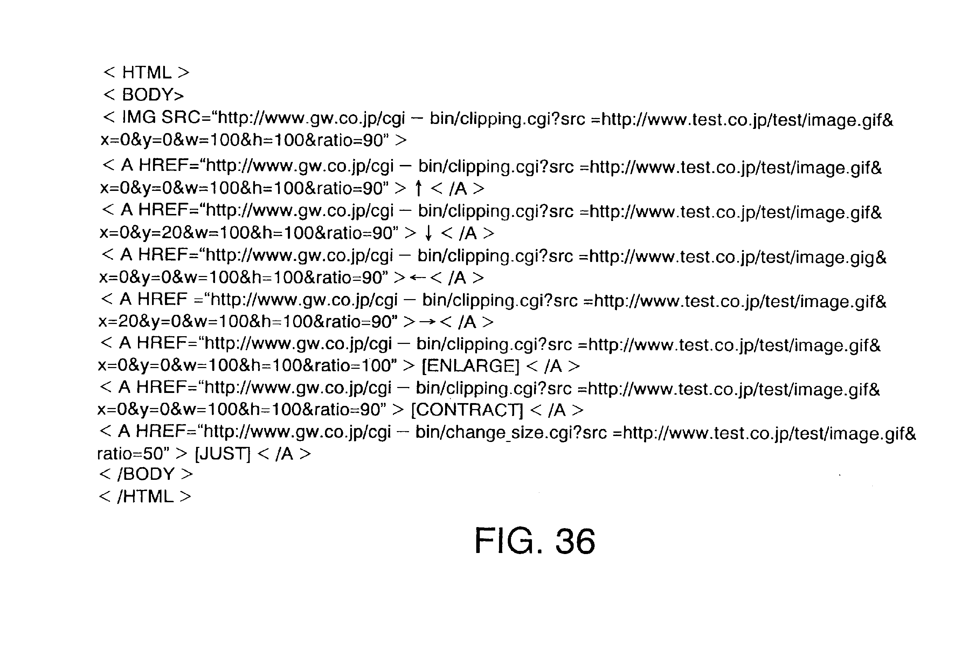

Furthermore, when the user clicks on the selection item [CONTRACT] from input section 1501 and sends a request for contracting the image data, the request is sent to agent apparatus 1220 through data request transmission section 1502. Agent apparatus 1220 receives the image data contraction request through request reception section 1401 and analyzes the request through request analysis section 1402. Document data creation section 1410 contracts the image data, displays the image data on the data display section 1505 of portable terminal apparatus 1230 and creates document data including information for specifying the clipping position of the image data and the selection information of the scaling factor of the image data. FIG.36 shows an example of document data created when the user sends a request for contracting the image data in FIG.29.

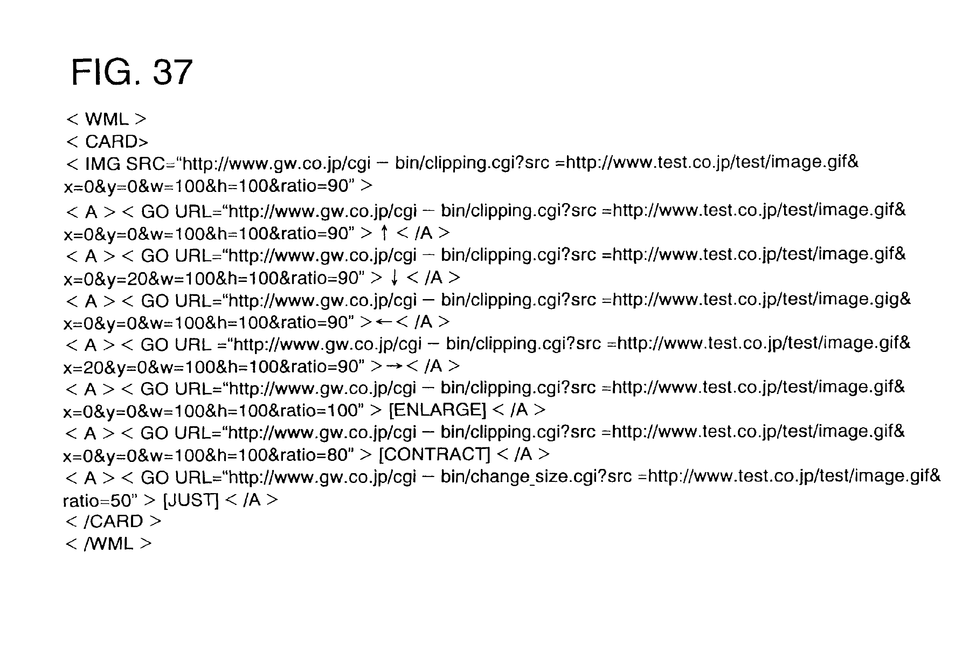

Then, the document data created by document data creation section 1410 is converted to document data described in a structural description language (WML) suitable for a portable terminal by document data conversion section 1412. FIG.37 shows an example of conversion of the document data in FIG.36.

The converted document data is sent to portable terminal apparatus 1230 through data transmission section 1413.

Upon reception of the document data above through data reception section 1503, portable terminal apparatus 1230 analyzes the document data through data analysis section 1504, displays the document data through data display section 1505 and sends a request for image processing of clipping the image data and displaying a contracted view through data request transmission section 1502 to agent apparatus 1220.

Agent apparatus 1220 that has received the request for displaying a contracted view of the image through request reception section 1401 analyzes the request through request analysis section 1402, checks whether the image data to be processed exists in cache 1407 or not through cache checking section 1403, and in the case where the image data to be processed exists in cache 1407, sends the image data to be processed to image data processing section 1411, and in the case where the image data to be processed does not exist in cache 1407, converts the request through request conversion section 1404 and sends a request for the image data to contents server 1210 through data request transmission section 1405.

Contents server 1210 receives the data request from agent apparatus 1220 through request reception section 1301, acquires the data from database 1304 through information acquisition section 1303 and sends the acquired data to agent apparatus 1220 through data transmission section 1302.

Agent apparatus 1220 receives the image data through data reception section 1406, stores the image data in cache 1407, sends the image data to image data processing section 1411, and image data processing section 1411 processes the image data sent from data reception section 1406 or read from cache 1407 according to the analysis result of request analysis section 1402 and sends the processed image data to portable terminal apparatus 1230 through data transmission section 1413.

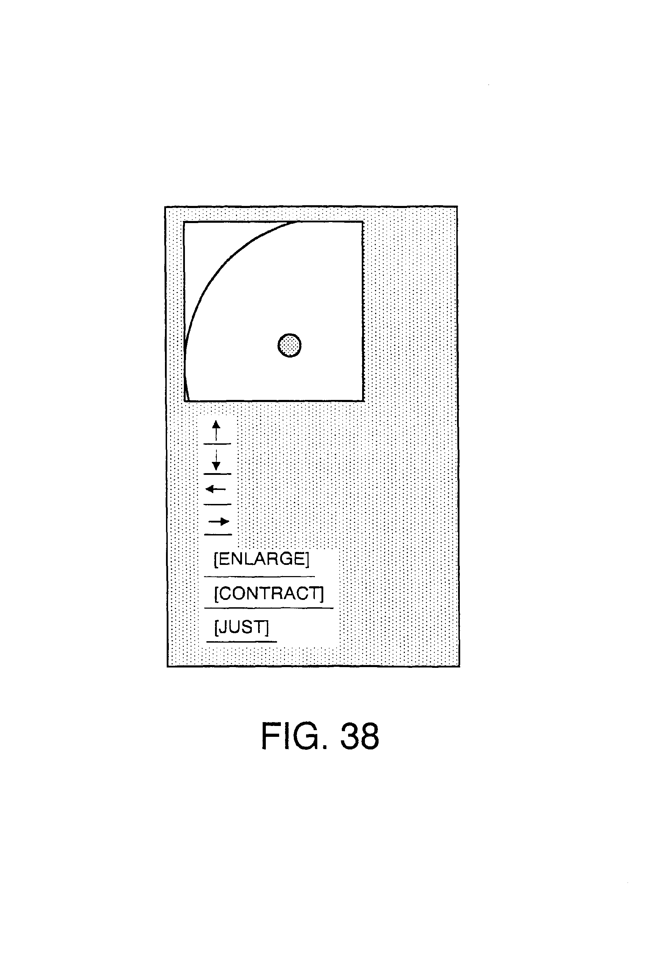

Portable terminal apparatus 1230 receives the image data through data reception section 1503 and via data analysis section 1504, displays the image data in the document data already displayed by data display section 1505. FIG.38 shows the display example above.

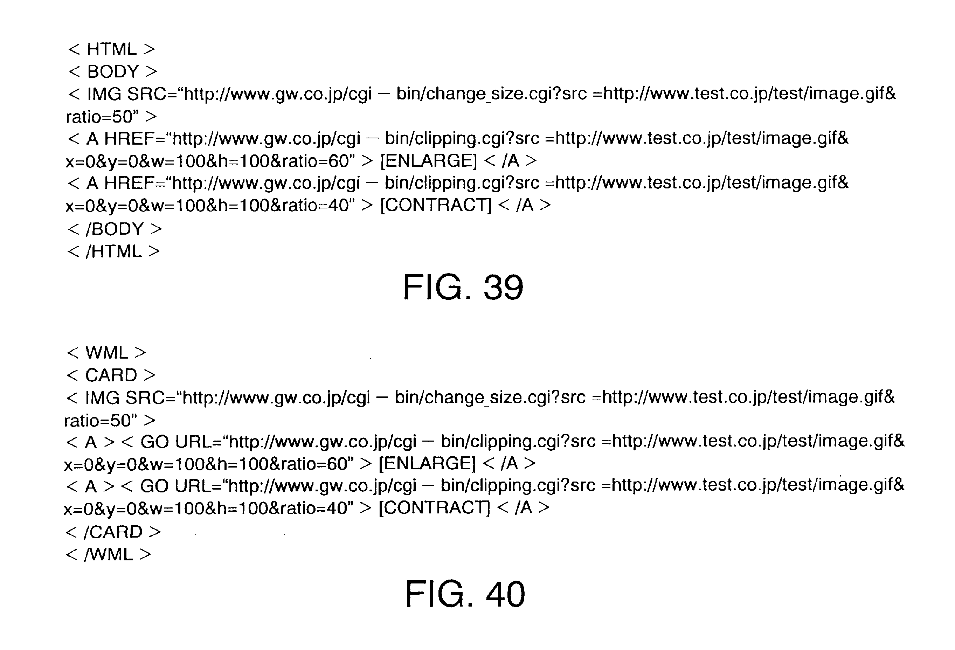

Furthermore, when the user makes a request for just display of the image data from input section 1501, the request is sent to agent apparatus 1220 through data request transmission section 1502. Agent apparatus 1220 receives the image data just display request through request reception section 1401 and analyzes the request through request analysis section 1402. Document data creation section 1410 displays the image data on the data display section 1505 of portable terminal apparatus 1230 in a just size and creates document data including the optional information of the scaling factor of the image data. FIG.39 shows an example of document data created when the user makes a request for just display of the image data in FIG.29.

Then, the document data created by document data creation section 1410 is converted to document data described in a structural description language (WML) suitable for a portable terminal by document data conversion section 1412. FIG.40 shows an example of conversion of the document data in FIG.39. The converted document data is sent to portable terminal apparatus 1230 through data transmission section 1413.

Upon reception of the document data above through data reception section 1503, portable terminal apparatus 1230 analyzes the document data through data analysis section 1504, displays the document data through data display section 1505 and sends a request for image processing for just display of the image data through data request transmission section 1502 to agent apparatus 1220.

Agent apparatus 1220 that has received the request for image processing for just display of the image data through request reception section 1401 analyzes the request through request analysis section 1402, checks whether the image data to be processed exists in cache 1407 or not through cache checking section 1403, and in the case where the image data to be processed exists in cache 1407, sends the image data to be processed to image data processing section 1411, and in the case where the image data to be processed does not exist in cache 1407, converts the request through request conversion section 1404 and sends a request for the image data to contents server 1210 through data request transmission section 1405.

Contents server 1210 receives the data request from agent apparatus 1220 through request reception section 1301, acquires the data from database 1304 through information acquisition section 1303 and sends the acquired data to agent apparatus 1220 through data transmission section 1302.

Agent apparatus 1220 receives the image data through data reception section 1406, stores the image data in cache 1407, and at the same time sends the image data to image data processing section 1411, and image data processing section 1411 processes the image data sent from data reception section 1406 or read from cache 1407 according to the analysis result of request analysis section 1402 and sends the processed image data to portable terminal apparatus 1230 through data transmission section 1413.

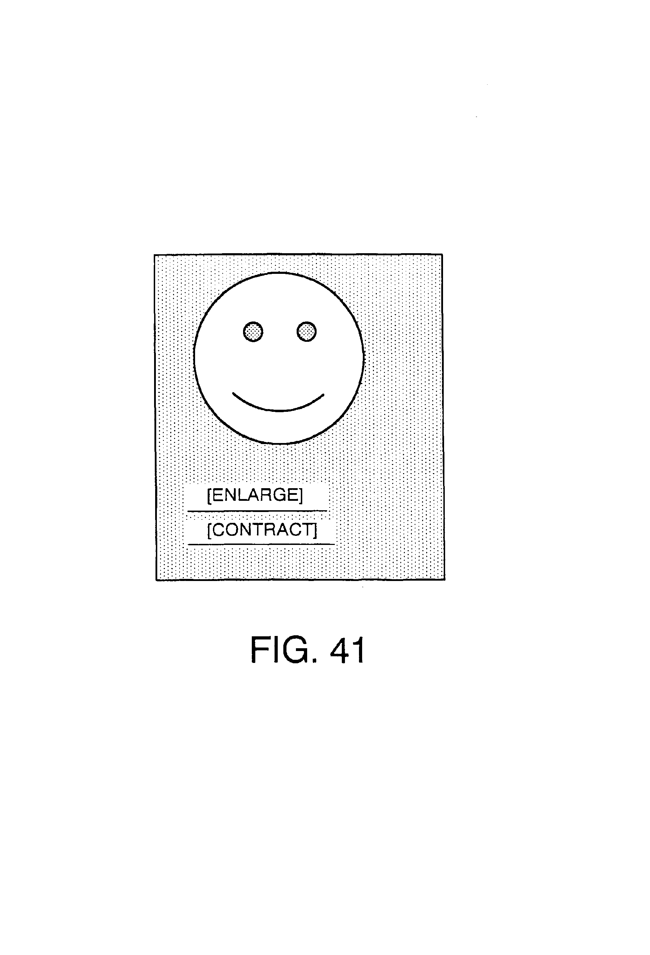

Portable terminal apparatus 1230 receives the image data through data reception section 1503 and via data analysis section 1504, displays the image data in the document data already displayed by data display section 1505. FIG.41 shows the display example above.

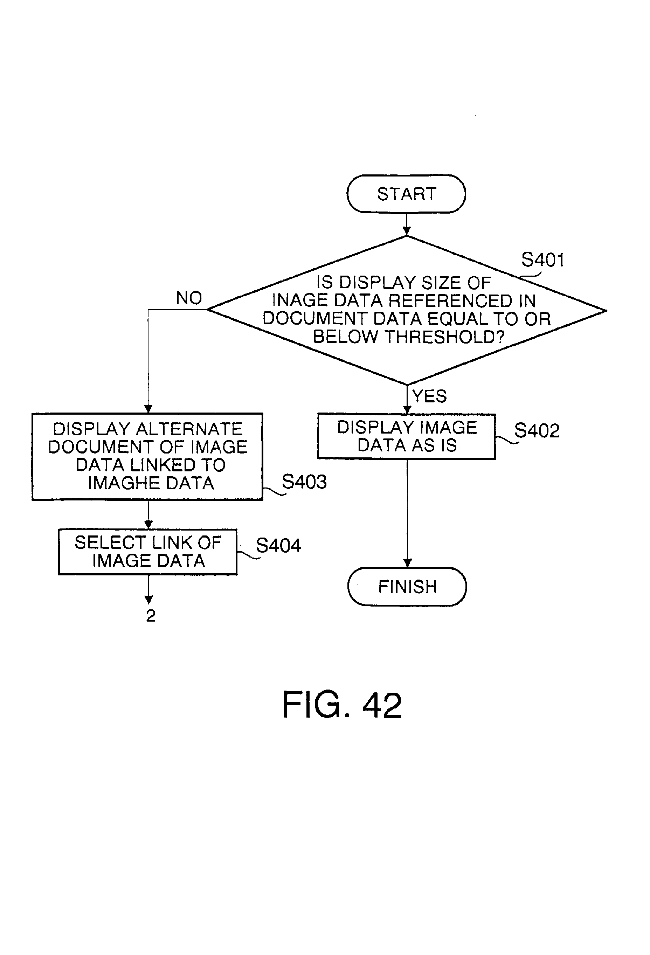

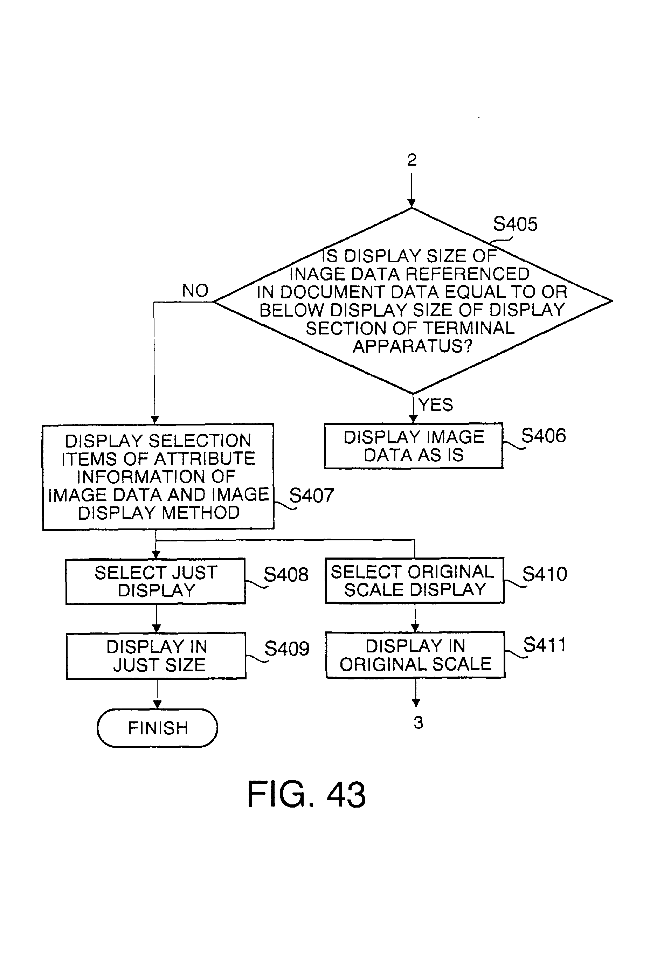

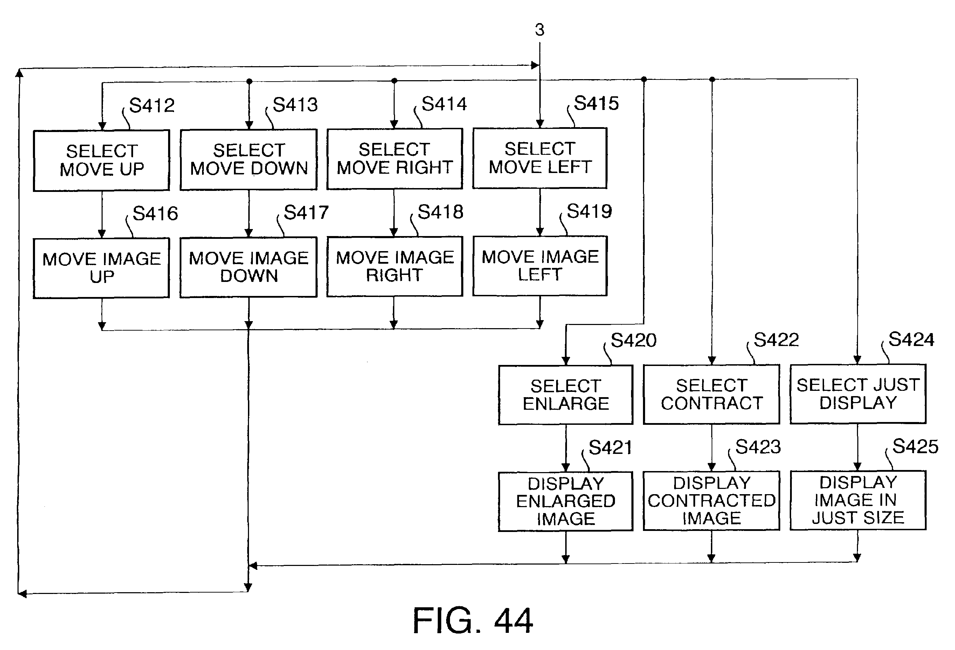

FIG.42, FIG.43 and FIG.44 show a flow of a series of processing regarding the data display on data display section 1505 of portable terminal apparatus 1230 as a flow chart. In portable terminal apparatus 1230, when the display size of image data referenced in the document data is equal to or smaller than a threshold (S401), the image data is displayed as is (S402) as described above, but when the display size of the image data is larger than the threshold, an alternate document of the image data linked to the image data is displayed (S403). When the link to the image data is selected (S404) by clicking on the alternate document displayed, the subsequent processing is branched (S405) depending on whether the display size of the image data referenced in the document data is equal to or smaller than the display size of data display section 1505 of portable terminal apparatus 1230 or not. When the display size of the image data is equal to or smaller than the display size of data display section 1505 of portable terminal apparatus 1230, the image data is displayed as is (S406). On the other hand, when the display size of the image data is larger than the display size of data display section 1505 of portable terminal apparatus 1230, attribute information of the image data and items for selecting an image display method are displayed (S407). Here, in the case where an item "JUST DISPLAY" is selected (S408) as the display method, the image data is displayed in a just size on data display section 1505 according to the above-described processing (S409). In the case where an item "ORIGINAL SCALE DISPLAY" is selected (S410), the image data is displayed in the original scale as shown in FIG.29 (S411). On the display screen in FIG.29, when any one of items "MOVE UP/DOWN/RIGHT/LEFT" is selected (S412 to S415), an image in the original scale is displayed extracted from the extraction position which has been moved in the selected direction according to the above-described processing (S416 to S419). On the other hand, when an item "ENLARGE" is selected on the display screen in FIG.29 (S420), an enlarged image is displayed according to above-described processing (S421). Furthermore, when an item "CONTRACT" is selected on the display screen in FIG.29 (S422), a contracted image is displayed according to above-described processing (S423) and when an item "JUST DISPLAY" is selected (S424), the image is displayed in a just size according to above-described processing (S425). Thus, according to this embodiment, it is possible to display image data according to a selected display method by simply selecting an item of the display method on the screen displayed on data display section 1505 of portable terminal apparatus 1230 and move the image data displayed in the original scale (a fractional image of the original image) in a desired direction by simply selecting one of items "MOVE UP/DOWN/RIGHT/LEFT".

### [Fourth embodiment]

A fourth embodiment of the present invention will be explained with reference to the attached drawings.

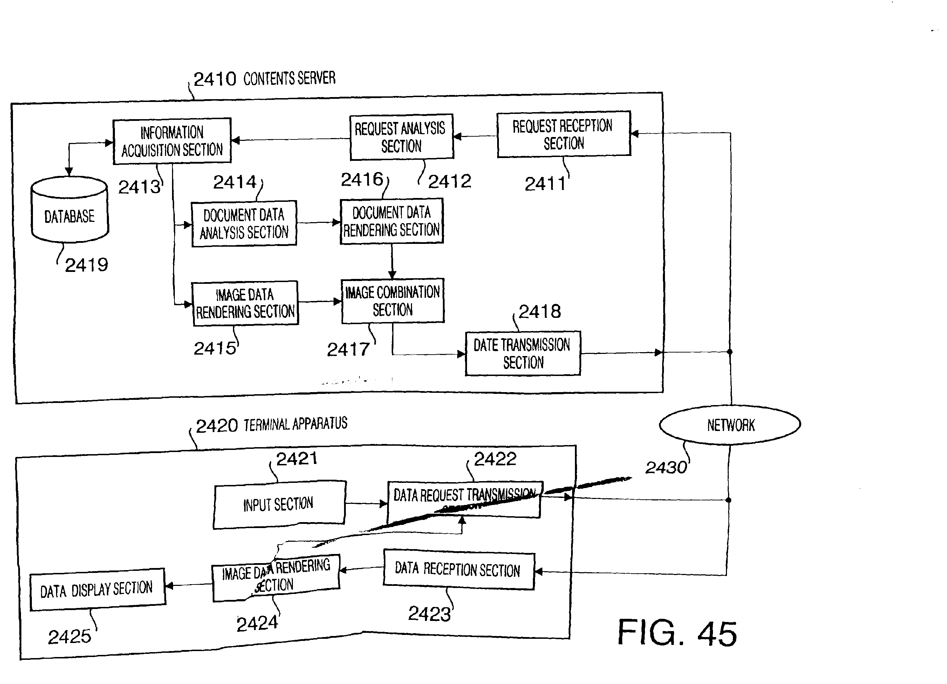

FIG.45 is a block diagram showing a system configuration according to the fourth embodiment of the present invention. In FIG.45, contents server 2410 and terminal apparatus 2420 are connected to network 2430 such as the Internet.

Contents server 2410 comprises request reception section 2411 that receives a data request from terminal apparatus 2420, request analysis section 2412 that analyzes the received request, information acquisition section 2413 that acquires information from database 2419 according to the request, database 2419 that controls and stores multimedia data such as document data and image data, document data analysis section 2414 that analyzes the requested document data, image data rendering section 2415 that performs rendering on the requested image data, document data rendering section 2416 that performs rendering on the requested document data, image combination section 2417 that combines the rendered document data and image data, and data transmission section 2418 that transmits the image data combined by image combination section 2417 to terminal apparatus 2420.

Terminal apparatus 2420 is implemented by using, for example, a cellular phone, and comprises input section 2421 that accepts inputs from the user, data request transmission section 2422 that sends a data request according to the input, data reception section 2423 that receives the requested data, image data rendering section 2424 that performs rendering on the received image data and data display section 2425 that displays the rendered image, making it possible to send a data request to contents server 2410 according to the user's operations, receive the requested data and display the information.

The user requests document data described in a structural description language (e.g., HTML) by specifying an identifier (e.g., URL) from input section 2421 of terminal apparatus 2420 and the request is sent from data request transmission section 2422 to contents server 2410.

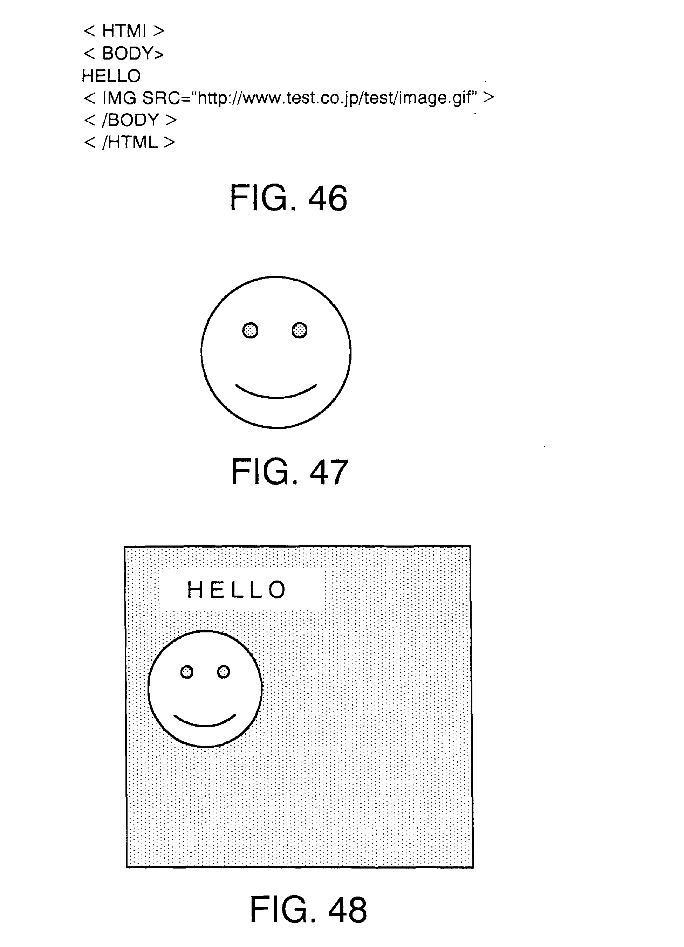

Contents server 2410 receives the request through request reception section 2411, analyzes the request through request analysis section 2412 and acquires the requested data through information acquisition section 2413 from database 2419. FIG.46 shows an example of the acquired document data.

Then, the acquired document data is analyzed by document data analysis section 2414. In the case where there is image data referenced in the document data, the referenced image data is acquired from database 2419 by information acquisition section 2413 and the image data is subjected to rendering by image data rendering section 2415. For example, image data rendering section 2415 opens the image (gif file) referenced in the HTML contents into a bitmap data format. FIG.47 shows an example of the rendering result of the image data referenced in the document data example shown in FIG.46.

Moreover, the analyzed document data is sent to document data rendering section 2416 and subjected to rendering. For example, document data rendering section 2416 converts a text code such as a character code to bitmap data as image data according to the HTML contents.

Then, the two images rendered by document data rendering section 2416 and image data rendering section 2415 are combined by image combination section 2417 and sent from data transmission section 2418 to terminal apparatus 2420.

Terminal apparatus 2420 that has received the image data through data reception section 2423 subjects the image data to rendering through image data rendering section 2424 and displays the rendered image through data display section 2425. FIG.48 shows a display example of the document data shown in FIG.46 on data display section 2425.

According to this embodiment, after a contents server 2410 transforms the HTML contents requested from terminal apparatus 2420 to an image, the image is sent to terminal apparatus 2420 and displayed, and therefore terminal apparatus 2420 can display the HTML contents if terminal apparatus 2420 only has an image rendering function. That is, terminal apparatus 2420 can display the HTML contents without any WEB function (function of analyzing a syntax of HTML, requesting the server for the image referenced in the contents and converting a character code to an image, etc.).

Furthermore, it is possible to eliminate such a problem that the original image of the HTML contents is too large to see on terminal apparatus 2420, by converting the image combined by image combination section 2417 to a maximum displayable size for terminal apparatus 2420 and then sending the image to terminal apparatus 2420.

### [Fifth embodiment]

A fifth embodiment of the present invention will be explained with reference to the attached drawings.

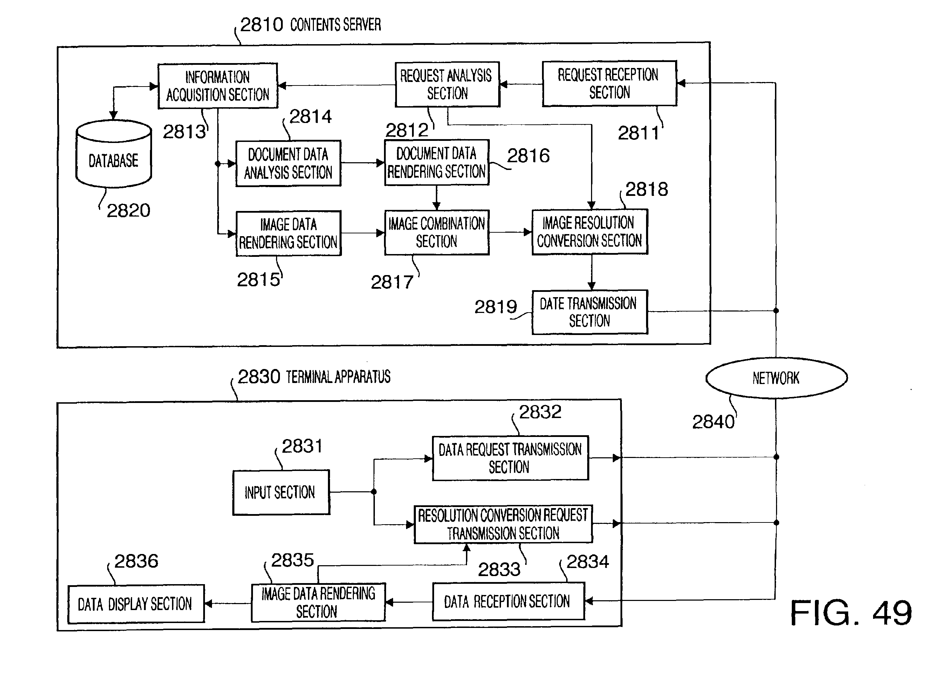

FIG.49 is a block diagram showing a system configuration according to the fifth embodiment of the present invention. In FIG.49, contents server 2810 and terminal apparatus 2830 are connected to network 2840 such as the Internet.

Contents server 2810 comprises request reception section 2811 that receives a data request from terminal apparatus 2830, request analysis section 2812 that analyzes the received request, information acquisition section 2813 that acquires information from database 2820 according to the request, database 2820 that controls and stores multimedia data such as document data and image data, document data analysis section 2814 that analyzes the requested document data, image data rendering section 2815 that performs rendering on the requested image data, document data rendering section 2816 that performs rendering on the requested document data, image combination section 2817 that combines the rendered document data and image data, image resolution conversion section 2818 that converts resolution of the image data combined by image combination section 2817 according to a request from terminal apparatus 2830, and data transmission section 2819 that transmits the image data with converted resolution to terminal apparatus 2830.

Terminal apparatus 2830 is implemented by using, for example, a cellular phone, and comprises input section 2831 that accepts inputs from the user, data request transmission section 2832 that sends a data request according to the input, resolution conversion request transmission section 2833 that sends a request for conversion of resolution according to the input, data reception section 2834 that receives the requested data, image data rendering section 2835 that performs rendering on the received image data and data display section 2836 that displays the rendered image, making it possible to send a data request to contents server 2810 according to the user's operations, receive the requested data, request conversion of resolution of the received data and display the data with converted resolution.

The user requests document data described in a structural description language (e.g., HTML) by specifying an identifier (e.g., URL) from input section 2831 of terminal apparatus 2830 and the request is sent from data request transmission section 2832 to contents server 2810. Contents server 2810 receives the request through request reception section 2811, analyzes the request through request analysis section 2812 and acquires the requested data through information acquisition section 2813 from database 2820. FIG.46 shows an example of the acquired document data.

Then, the acquired document data is analyzed by document data analysis section 2814. In the case where there is image data referenced in the document data, the referenced image data is acquired from database 2820 by information acquisition section 2813 and the image data is subjected to rendering by image data rendering section 2815. FIG.47 shows an example of the rendering result of the image data referenced in the document data example shown in FIG.46.

Moreover, the analyzed document data is sent to document data rendering section 2816 and subjected to rendering.

Then, the images rendered by document data rendering section 2816 and image data rendering section 2815 are combined by image combination section 2817 and the combined image is sent to image resolution conversion section 2818.

In the case where no resolution conversion request is received from terminal apparatus 2830, image resolution conversion section 2818 directly sends the image data sent from image combination section 2817 to data transmission section 2819 and data transmission section 2819 sends the image data received from image resolution conversion section 2818 to terminal apparatus 2830.

Terminal apparatus 2830 that has received the image data through data reception section 2834 subjects the image data to rendering through image data rendering section 2835 and displays the rendered image through data display section 2836. FIG.48 shows a display example of the document data shown in FIG.46 on data display section 2836.

Then, when the user requests conversion of resolution of the image data displayed from input section 2831, the request is sent from resolution conversion request transmission section 2833 to contents server 2810.

Contents server 2810 receives the resolution conversion request from terminal apparatus 2830 through request reception section 2811, analyzes the request through request analysis section 2812 and sends the resolution conversion request to information acquisition section 2813 and image resolution conversion section 2818.

Information acquisition section 2813 acquires the requested data from database 2820 according to the received image resolution conversion request.

Then, the acquired document data is analyzed by document data analysis section 2814. In the case where there is image data referenced in the document data, the referenced image data is acquired from database 2820 by information acquisition section 2813 and the image data is subjected to rendering by image data rendering section 2815.

Moreover, the analyzed document data is sent to document data rendering section 2816 and subjected to rendering. Then, the images rendered by document data rendering section 2816 and image data rendering section 2815 are combined by image combination section 2817 and the combined image is sent to image resolution conversion section 2818.

Image resolution conversion section 2818 receives the resolution conversion request from request analysis section 2812 and receives the image data from image combination section 2817. The resolution of the received image data is converted according to the resolution conversion request and the image data with converted resolution is sent from data transmission section 2819 to terminal apparatus 2830.

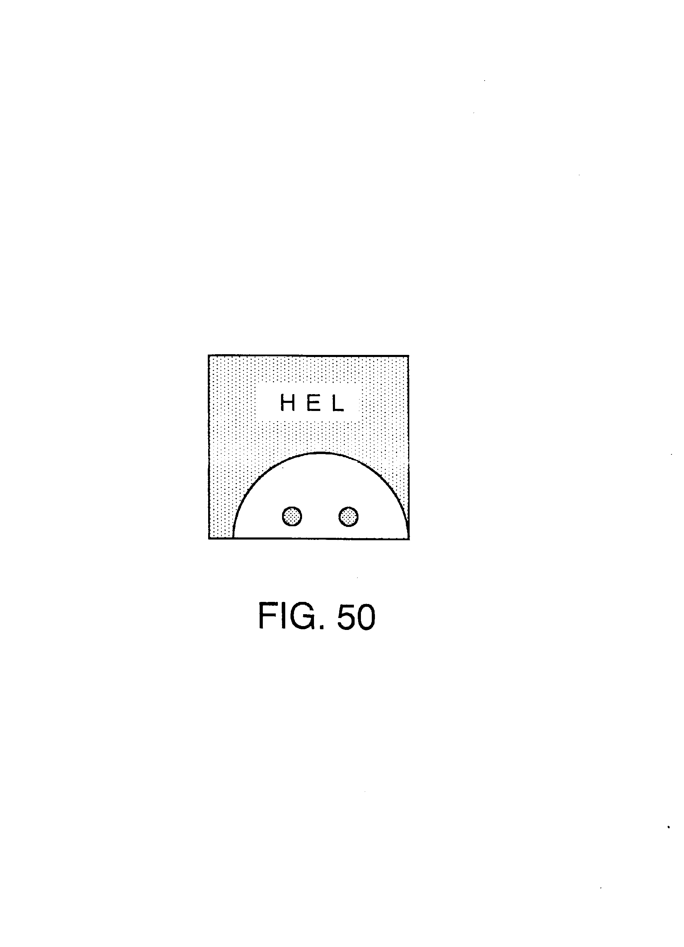

Terminal apparatus 2830 that has received the image data through data reception section 2834 subjects the image data to rendering through image data rendering section 2835 and displays the rendered image through data display section 2836. FIG.50 shows a display example of the document data shown in FIG.46 whose resolution is requested to be improved on data display section 2836.

According to this embodiment, when terminal apparatus 2830 sends a request for resolution conversion and resolution to contents server 2810, the combined image output from image combination section 2817 is converted to requested resolution and then sent to terminal apparatus 2830, and therefore the user can see the contents image with desired resolution.

### [Sixth embodiment]

A sixth embodiment of the present invention will be explained with reference to the attached drawings.

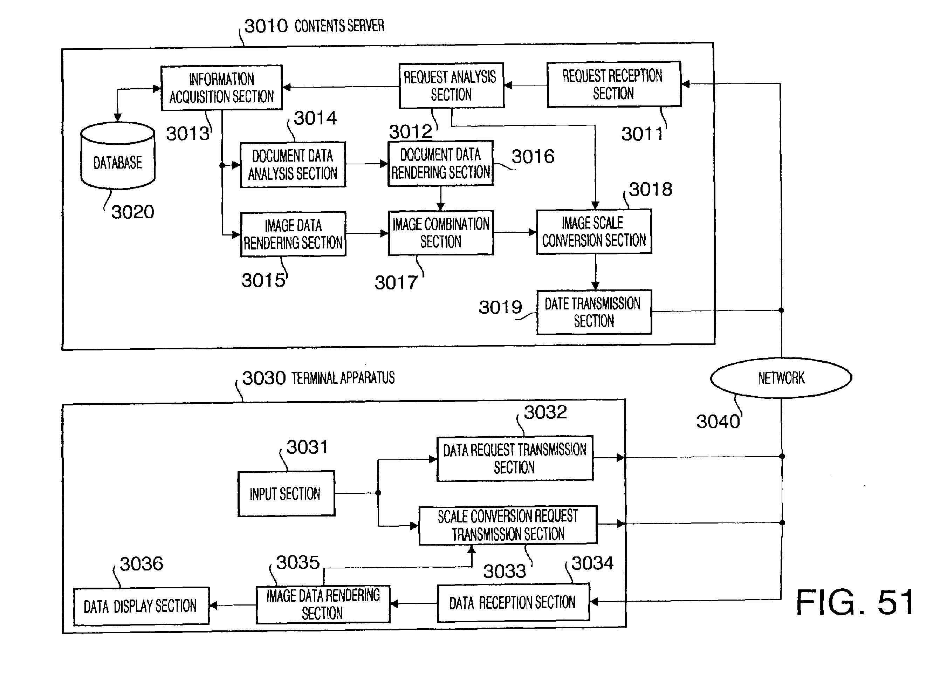

FIG.51 is a block diagram showing a system configuration according to the sixth embodiment of the present invention. In FIG.51, contents server 3010 and terminal apparatus 3030 are connected to network 3040 such as the Internet.

Contents server 3010 comprises request reception section 3011 that receives a data request from terminal apparatus 3030, request analysis section 3012 that analyzes the received request, information acquisition section 3013 that acquires information from database 3020 according to the request, database 3020 that controls and stores multimedia data such as document data and image data, document data analysis section 3014 that analyzes the requested document data, image data rendering section 3015 that performs rendering on the requested image data, document data rendering section 3016 that performs rendering on the requested document data, image combination section 3017 that combines the rendered document data and image data, image scale conversion section 3018 that converts the scale of the image data combined by image combination section 3017 according to a request from terminal apparatus 3030, and data transmission section 3019 that transmits the image data with the converted scale to terminal apparatus 3030.

Terminal apparatus 3030 is implemented by using, for example, a cellular phone, and comprises input section 3031 that accepts inputs from the user, data request transmission section 3032 that sends a data request according to the input, image scale conversion request transmission section 3033 that sends a request for scale conversion according to the input, data reception section 3034 that receives the requested data, image data rendering section 3035 that performs rendering on the received image data and data display section 3036 that displays the rendered image, making it possible to send a data request to contents server 3010 according to the user's operations, receive the requested data, display the data, request for scale conversion of the received data and display the data the with converted scale.

The user requests document data described in a structural description language (e.g., HTML) by specifying an identifier (e.g., URL) from input section 3031 of terminal apparatus 3030 and the request is sent from data request transmission section 3032 to contents server 3010. Contents server 3010 receives the request through request reception section 3011, analyzes the request through request analysis section 3012 and acquires the requested data through information acquisition section 3013 from database 3020. FIG.46 shows an example of the acquired document data.

Then, the acquired document data is analyzed by document data analysis section 3014. In the case where there is image data referenced in the document data, the referenced image data is acquired from database 3020 by information acquisition section 3013 and the image data is subjected to rendering by image data rendering section 3015. FIG.47 shows an example of the rendering result of the image data referenced in the document data example shown in FIG.46.

Moreover, the analyzed document data is sent to document data rendering section 3016 and subjected to rendering. Then, the text image rendered by document data rendering section 3016 and the image rendered by image data rendering section 3015 are combined by image combination section 3017 and the combined image is sent to image scale conversion section 3018.

In the case where no scale conversion request is received from terminal apparatus 3030, image scale conversion section 3018 directly sends the image data sent from image combination section 3017 to data transmission section 3019 and data transmission section 3019 sends the image data received from image scale conversion section 3018 to terminal apparatus 3030.

Terminal apparatus 3030 that has received the image data through data reception section 3034 subjects the image data to rendering through image data rendering section 3035 and displays the rendered image through data display section 3036. FIG.48 shows a display example of the document data shown in FIG.46 on data display section 3036.

Then, when the user requests scale conversion of the image data displayed from input section 3031, the request is sent from scale conversion request transmission section 3033 to contents server 3010. For example, information on a scaling factor is also input from input section 3031 together with the scale conversion request. It is desirable that information on the scale conversion request and scaling factor be made selectable on a screen. For example, it is desirable that an selection item such as 10% enlargement or 10% contraction be displayed on the terminal screen and that conversion of the contents image with the scaling factor corresponding to the selected option item be automatically requested to contents server 3010.

Contents server 3010 receives the scale conversion request from terminal apparatus 3030 through request reception section 3011, analyzes the request through request analysis section 3012 and sends the image scale conversion request to information acquisition section 3013 and image scale conversion section 3018.

Information acquisition section 3013 acquires the requested data from database 3020 according to the received image scale conversion request.

Then, the acquired document data is analyzed by document data analysis section 3014. In the case where there is image data referenced in the document data, the referenced image data is acquired from database 3020 by information acquisition section 3013 and the image data is subjected to rendering by image data rendering section 3015.

Moreover, the analyzed document data is sent to document data rendering section 3016 and subjected to rendering. Then, the images rendered by document data rendering section 3016 and image data rendering section 3015 are combined by image combination section 3017 and the combined image is sent to image scale conversion section 3018.

Image scale conversion section 3018 receives the scale conversion request from request analysis section 3012 and the image data from image combination section 3017. The scale of the received image data is converted according to the scale conversion request and the image data with the converted scale is sent from data transmission section 3019 to terminal apparatus 3030.

Terminal apparatus 3030 that has received the image data through data reception section 3034 subjects the image data to rendering through image data rendering section 3035 and displays the rendered image through data display section 3036. FIG.50 shows a display example of the document data shown in FIG.46 whose scale is requested to be increased on data display section 3036.

According to this embodiment, when the HTML contents are accessed, it is possible to download a contents image converted to a desired scaling factor to terminal apparatus 3030 and display by sending information on scale conversion and the scaling factor from terminal apparatus 3030 to contents server 3010. Thus, the user can display a contents image described in a structural description language in a desired size on the terminal apparatus through simple operations and without the need to incorporate a special function in terminal apparatus 3030.

### [Seventh embodiment]

A seventh embodiment of the present invention will be explained with reference to the attached drawings.

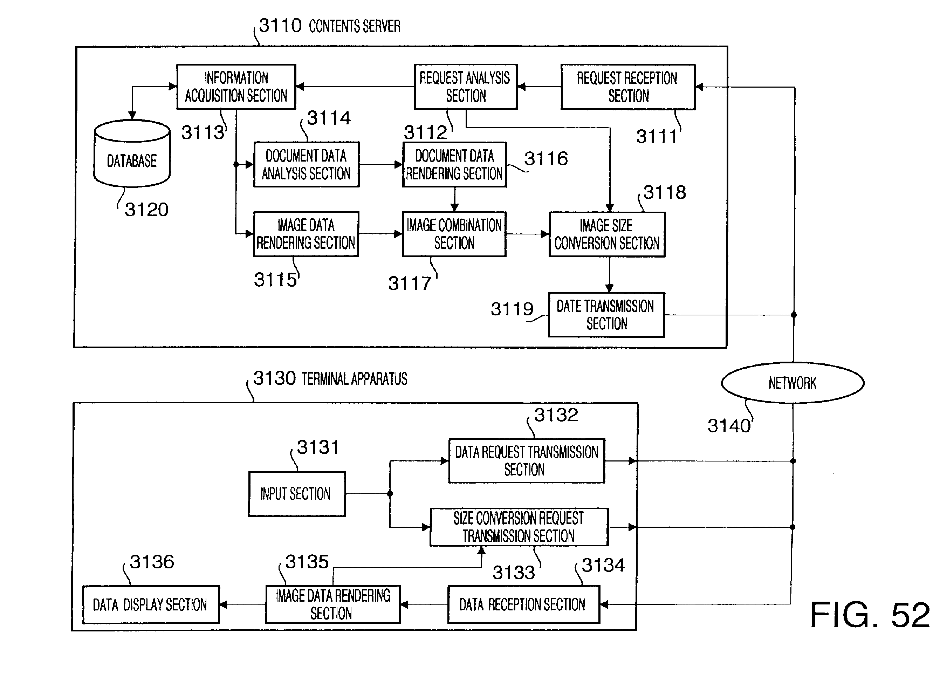

FIG.52 is a block diagram showing a system configuration according to the seventh embodiment of the present invention. In FIG.52, contents server 3110 and terminal apparatus 3130 are connected to network 3140 such as the Internet.

Contents server 3110 comprises request reception section 3111 that receives a data request from terminal apparatus 3130, request analysis section 3112 that analyzes the received request, information acquisition section 3113 that acquires information from database 3120 according to the request, database 3120 that controls and stores multimedia data such as document data and image data, document data analysis section 3114 that analyzes the requested document data, image data rendering section 3115 that performs rendering on the requested image data, document data rendering section 3116 that performs rendering on the requested document data, image combination section 3117 that combines the rendered document data and image data, image size conversion section 3118 that converts the size of the image data combined by image combination section 3117 according to a request from terminal apparatus 3130, and data transmission section 3119 that transmits the image data with the converted size to terminal apparatus 3130.

Terminal apparatus 3130 is implemented by using, for example, a cellular phone, and comprises input section 3131 that accepts inputs from the user, data request transmission section 3132 that sends a data request according to the input, size conversion request transmission section 3133 that sends a request for conversion of the size according to the input, data reception section 3134 that receives the requested data, image data rendering section 3135 that performs rendering on the received image data and data display section 3136 that displays the rendered image, making it possible to send a data request to contents server 3110 according to the user's operations, receive the requested data, display the data, request conversion of the size of the received data and display the data with the converted size.

The user requests document data described in a structural description language (e.g., HTML) by specifying an identifier (e.g., URL) from input section 3131 of terminal apparatus 3130 and the request is sent from data request transmission section 3132 to contents server 3110.

Contents server 3110 receives the request through request reception section 3111, analyzes the request through request analysis section 3112 and acquires the requested data through information acquisition section 3113 from database 3120. FIG.46 shows an example of the acquired document data.

Then, the acquired document data is analyzed by document data analysis section 3114. In the case where there is image data referenced in the document data, the referenced image data is acquired from database 3120 by information acquisition section 3113 and the image data is subjected to rendering by image data rendering section 3115. FIG.47 shows an example of the rendering result of the image data (gif file) referenced in the document data shown in FIG.46.

Moreover, the analyzed document data is sent to document data rendering section 3116 and subjected to rendering and converted to a text image.

Then, the images subjected to rendering by document data rendering section 3116 and image data rendering section 3115 are combined by image combination section 3117 and the combined image is sent to image size conversion section 3118.

In the case where no size conversion request is received from terminal apparatus 3130, image size conversion section 3118 directly sends the image data sent from image combination section 3117 to data transmission section 3119 and data transmission section 3119 sends the image data received from image size conversion section 3118 to terminal apparatus 3130.

Terminal apparatus 3130 that has received the image data through data reception section 3134 subjects the image data to rendering through image data rendering section 3135 and displays the rendered image through data display section 3136. FIG.48 shows a display example of the document data shown in FIG.46 on data display section 3136.

Then, when the user requests conversion of the size of the image data displayed from input section 3131, the request is sent from size conversion request transmission section 3133 to contents server 3110. Here, it is desirable that a plurality of selection items with different conversion sizes be displayed on data display section 3136 and that a request for conversion to the conversion size corresponding to the selected selection item be automatically sent to contents server 3110.

Contents server 3110 receives the size conversion request from terminal apparatus 3130 through request reception section 3111, analyzes the request through request analysis section 3112 and sends the image size conversion request to information acquisition section 3113 and image size conversion section 3118.

Information acquisition section 3113 acquires the requested data from database 3120 according to the received image size conversion request. Then, the acquired document data is analyzed by document data analysis section 3114. In the case where there is image data referenced in the document data, the referenced image data is acquired from database 3120 by information acquisition section 3113 and the image data is subjected to rendering by image data rendering section 3115.

Moreover, the analyzed document data is sent to document data rendering section 3116 and subjected to rendering. Then, the text image rendered by document data rendering section 3116 and the image rendered by image data rendering section 3115 are combined by image combination section 3117 and the combined image is sent to image size conversion section 3118.

Image size conversion section 3118 that has received the size conversion request from request analysis section 3112 and received the image data from image combination section 3117 converts the size of the received image data according to the size conversion request. The image data with the converted size is sent from data transmission section 3119 to terminal apparatus 3130.

Terminal apparatus 3130 that has received the image data through data reception section 3134 subjects the image data to rendering through image data rendering section 3135 and displays the rendered image through data display section 3136. FIG.50 shows a display example of the document data shown in FIG.46 whose size is requested to be increased on data display section 3136.

According to this embodiment, when the HTML contents are accessed, it is possible to download a contents image converted to a desired image size to terminal apparatus 3130 and display by sending information on size conversion and the image size from terminal apparatus 3130 to contents server 3110. Thus, the user can display a contents image described in a structural description language in a desired size on the terminal apparatus through simple operations and without the need to incorporate a special function in terminal apparatus 3130.

### [Eighth embodiment]

An eighth embodiment of the present invention will be explained with reference to the attached drawings.

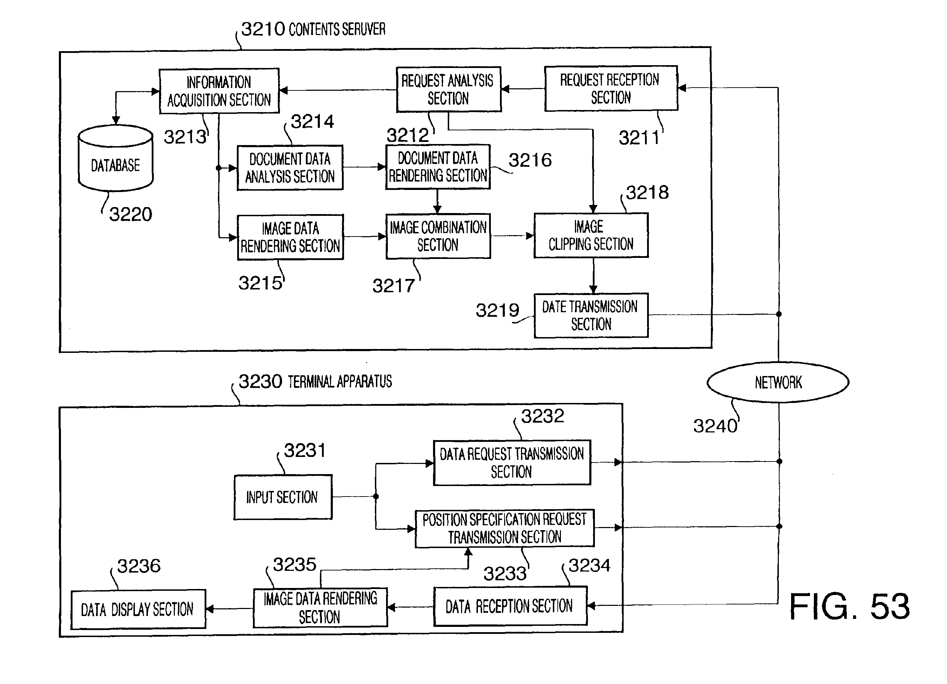

FIG.53 is a block diagram showing a system configuration according to the eighth embodiment of the present invention. In FIG.53, contents server 3210 and terminal apparatus 3230 are connected to network 3240 such as the Internet.

Contents server 3210 comprises request reception section 3211 that receives a data request from terminal apparatus 3230, request analysis section 3212 that analyzes the received request, information acquisition section 3213 that acquires information from database 3220 according to the request, database 3220 that controls and stores multimedia data such as document data and image data, document data analysis section 3214 that analyzes the requested document data, image data rendering section 3215 that performs rendering on the requested image data, document data rendering section 3216 that performs rendering on the requested document data, image combination section 3217 that combines the rendered document data and image data, image clipping section 3218 that performs clipping on the image data combined by image combination section 3217 according to a position specification request from terminal apparatus 3230, and data transmission section 3219 that transmits the clipped image data to terminal apparatus 3230.

Terminal apparatus 3230 is implemented by using, for example, a cellular phone, and comprises input section 3231 that accepts inputs from the user, data request transmission section 3232 that sends a data request according to the input, position specification request transmission section 3233 that sends a position specification request according to the input, data reception section 3234 that receives the requested data, image data rendering section 3235 that performs rendering on the received image data and data display section 3236 that displays the rendered image, making it possible to send a data request to contents server 3210 according to the user's operations, receive the requested data, display the data, request for clipping of the received data and display the clipped data.

The user requests document data described in a structural description language (e.g., HTML) by specifying an identifier (e.g., URL) from input section 3231 of terminal apparatus 3230 and the request is sent from data request transmission section 3232 to contents server 3210. Contents server 3210 receives the request through request reception section 3211, analyzes the request through request analysis section 3212 and acquires the requested data through information acquisition section 3213 from database 3220. FIG.46 shows an example of the acquired document data.

Then, the acquired document data is analyzed by document data analysis section 3214. In the case where there is image data referenced in the document data, the referenced image data is acquired from database 3220 by information acquisition section 3213 and the image data is subjected to rendering by image data rendering section 3215. FIG.47 shows an example of the rendering result of the image data referenced in the document data shown in FIG.46.

Moreover, the analyzed document data is sent to document data rendering section 3216 and subjected to rendering. Then, the text image subjected to rendering by document data rendering section 3216 and the image subjected to rendering by image data rendering section 3215 are combined by image combination section 3217 and the combined image is sent to image clipping section 3218.

In the case where no position specification request is received from terminal apparatus 3230, image clipping section 3218 directly sends the image data sent from image combination section 3217 to data transmission section 3219 and data transmission section 3219 sends the image data received from image clipping section 3218 to terminal apparatus 3230.

Terminal apparatus 3230 that has received the image data through data reception section 3234 subjects the image data to rendering through image data rendering section 3235 and displays the rendered image through data display section 3236. FIG.48 shows a display example of the document data shown in FIG.46 on data display section 3236.

Then, when the user requests change of the position of the image data displayed from input section 3231, the request is sent from position specification request transmission section 3233 to contents server 3210. Here, it is possible to allow the image display position and position specification request to be input from the screen or specify the direction of movement up or down or right or left from input section 3231.

Contents server 3210 receives the position specification request from terminal apparatus 3230 through request reception section 3211, analyzes the request through request analysis section 3212 and sends the image position specification request to information acquisition section 3213 and image clipping section 3218.

Information acquisition section 3213 acquires the requested data from database 3220 according to the received image position specification request. Then, the acquired document data is analyzed by document data analysis section 3214. In the case where there is image data referenced in the document data, the referenced image data is acquired from database 3220 by information acquisition section 3213 and the image data is subjected to rendering by image data rendering section 3215.

Moreover, the analyzed document data is sent to document data rendering section 3216 and subjected to rendering. Then, the text image rendered by document data rendering section 3216 and the image rendered by image data rendering section 3215 are combined by image combination section 3217 and the combined image is sent to image clipping section 3218.

Image clipping section 3218 that has received the position specification request from request analysis section 3212 and received the image data from image combination section 3217 clips the received image data according to the position specification request. The clipped image data is sent from data transmission section 3219 to terminal apparatus 3230.

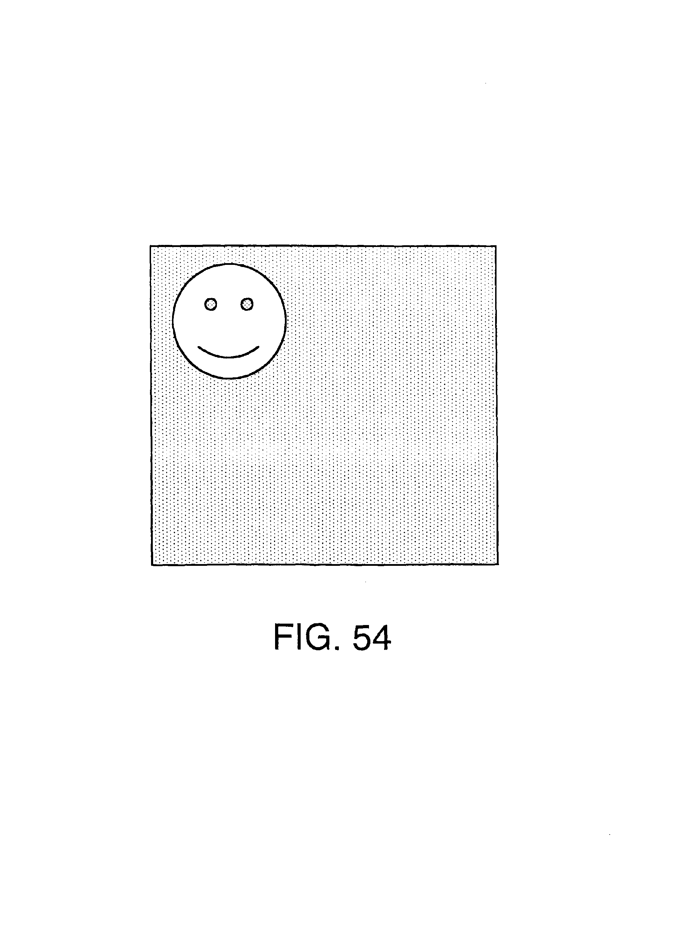

Terminal apparatus 3230 that has received the image data through data reception section 3234 subjects the image data to rendering through image data rendering section 3235 and displays the rendered image through data display section 3236. FIG.54 shows a display example on data display section 3236 of the image (FIG.48) displayed according to the document data shown in FIG.46 whose display position is requested to be moved up.

According to this embodiment, for an image displayed by accessing the HTML contents, it is possible to download to terminal apparatus 3230 and display the image whose display position is moved toward a desired direction by only specifying the display position to contents server 3210 from terminal apparatus 3230. Thus, the user can move the display position of a contents image described in a structural description language on the terminal apparatus through simple operations and without the need to incorporate a special function in terminal apparatus 3230.

### [Ninth embodiment]

A ninth embodiment of the present invention will be explained with reference to the attached drawings.

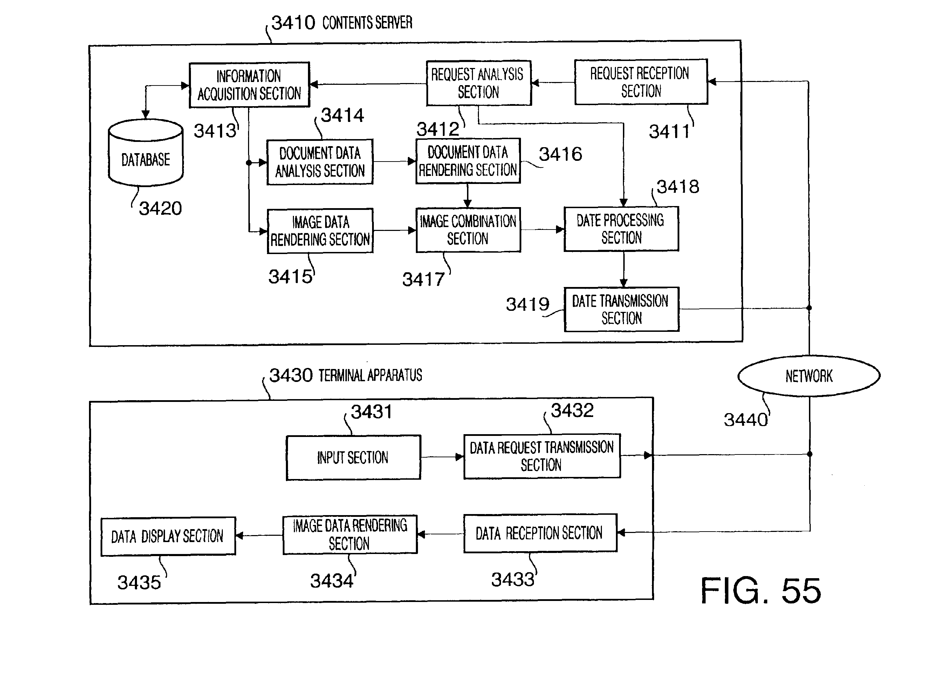

FIG.55 is a block diagram showing a system configuration according to the ninth embodiment of the present invention. In FIG.55, contents server 3410 and terminal apparatus 3430 are connected to network 3440 such as the Internet.

Contents server 3410 comprises request reception section 3411 that receives a data request from terminal apparatus 3430, request analysis section 3412 that analyzes the received request, information acquisition section 3413 that acquires information from database 3420 according to the request, database 3420 that controls and stores multimedia data such as document data and image data, document data analysis section 3414 that analyzes the requested document data, image data rendering section 3415 that performs rendering on the requested image data, document data rendering section 3416 that performs rendering on the requested document data, image combination section 3417 that combines the rendered document data and image data, image processing section 3418 that converts the size and performs clipping on the image data combined by image combination section 3417 according to a data request from terminal apparatus 3430, and data transmission section 3419 that transmits the processed image data to terminal apparatus 3430.

Terminal apparatus 3430 is implemented by using, for example, a cellular phone, and comprises input section 3431 that accepts inputs from the user, data request transmission section 3432 that sends a data request according to the input, data reception section 3433 that receives the requested data, image data rendering section 3434 that performs rendering on the received image data and data display section 3435 that displays the rendered image, making it possible to send a data request to contents server 3410 according to the user's operations, receive the requested data, display the data, request a change of the size and position of the received data and display the data whose size and position have been changed.

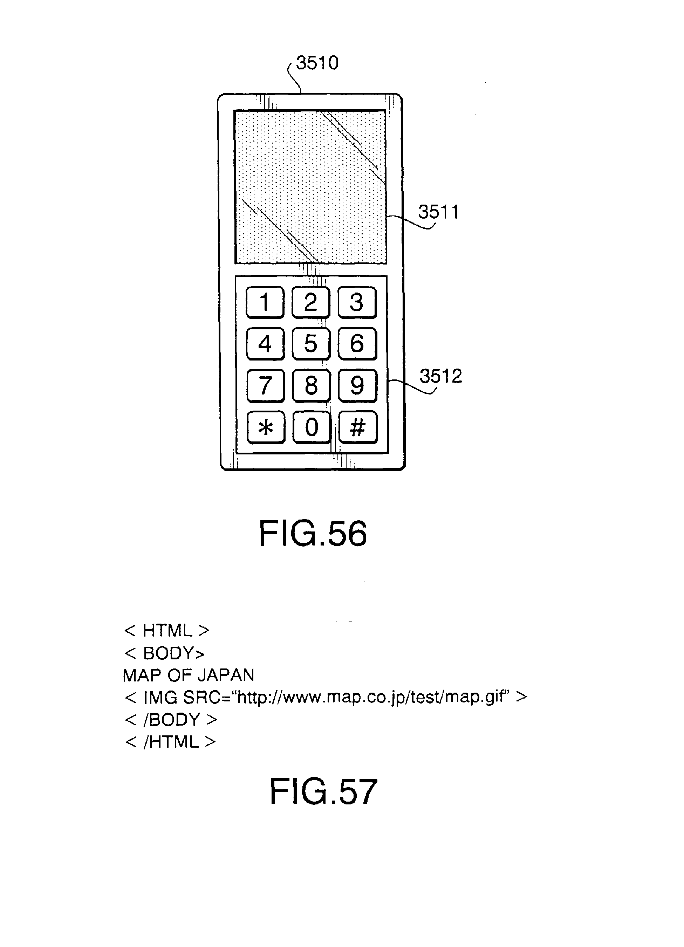

FIG.56 is a schematic plan view of terminal apparatus 3430. In FIG.56, reference numeral 3511 corresponds to data display section 3435 in FIG.55 and 3512 corresponds to input section 3431 in FIG.55.

The user requests document data described in a structural description language (e.g., HTML) by specifying an identifier (e.g., URL) from input section 3431 of terminal apparatus 3430 and the request is sent from data request transmission section 3432 to contents server 3410.

Contents server 3410 receives the request through request reception section 3411, analyzes the request through request analysis section 3412 and acquires the requested data through information acquisition section 3413 from database 3420. FIG.57 shows an example of the acquired document data.

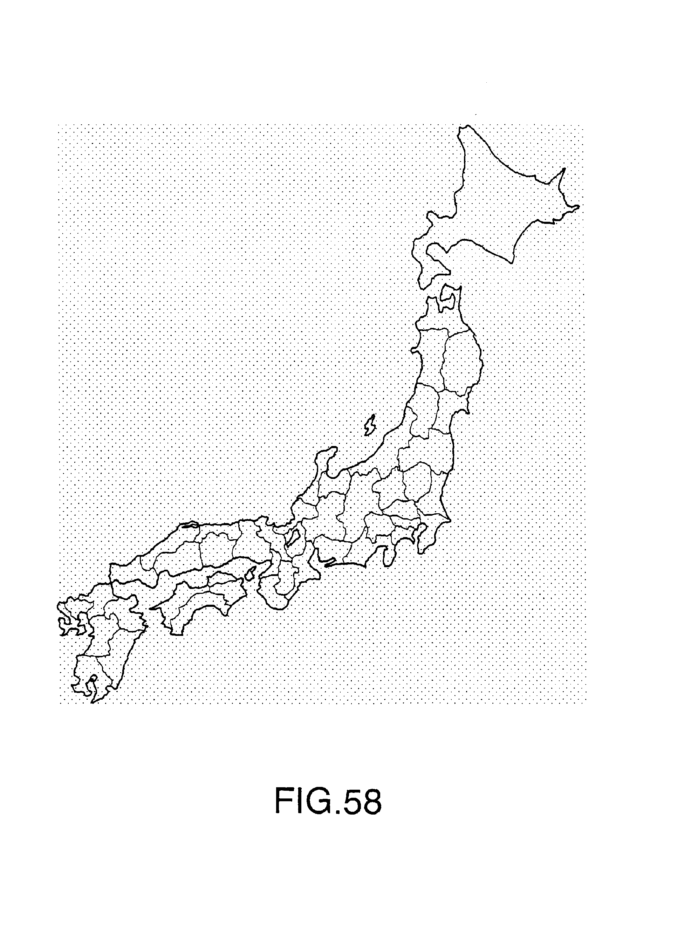

Then, the acquired document data is analyzed by document data analysis section 3414. In the case where there is image data referenced in the document data, the referenced image data is acquired from database 3420 by information acquisition section 3413 and the image data is subjected to rendering by image data rendering section 3415. FIG.58 shows an example of the rendering result of the image data referenced in the document data shown in FIG.57.

Moreover, the analyzed document data is sent to document data rendering section 3416 and subjected to rendering. Then, the text image subjected to rendering by document data rendering section 3416 and the image subjected to rendering by image data rendering section 3415 are combined by image combination section 3417 and the combined image is sent to image processing section 3418.

In the case where no size and position specification request is received from terminal apparatus 3430, image processing section 3418 directly sends the image data sent from image combination section 3417 to data transmission section 3419 and data transmission section 3419 sends the image data received from image processing section 3418 to terminal apparatus 3430.

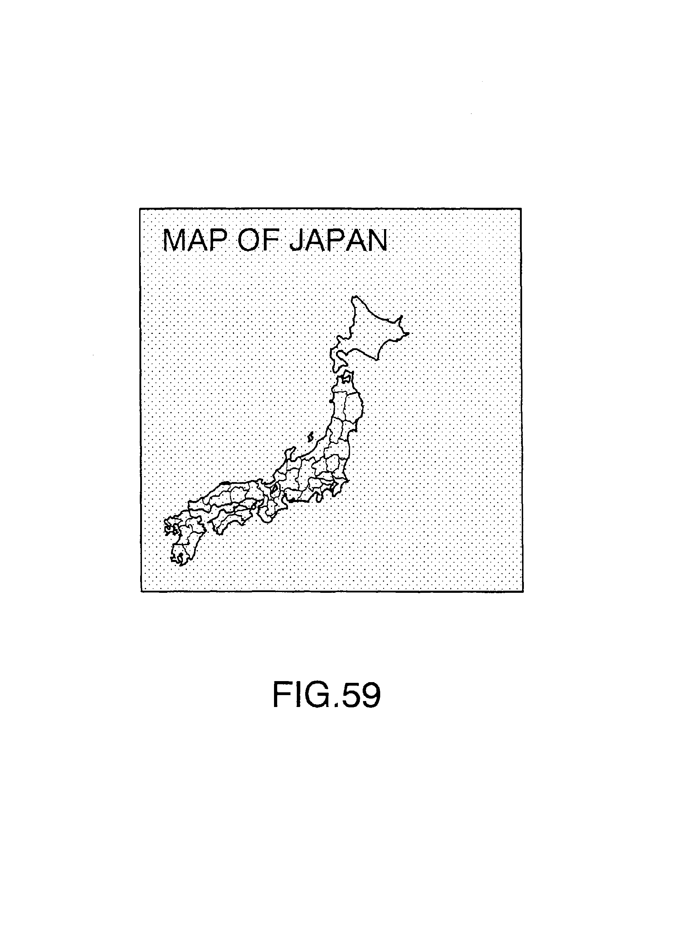

Terminal apparatus 3430 that has received the image data through data reception section 3433 subjects the image data to rendering through image data rendering section 3434 and displays the rendered image through data display section 3435. FIG.59 shows a display example of the document data shown in FIG.57 on data display section 3435.

Then, the case where the user requests changing the size and position of the image data displayed from input section 3431 will be explained.

In this embodiment, the request respect to a change of the size and position of the image data displayed on data display section 3511 has a one-to-one correspondence with each key of input section 3512.

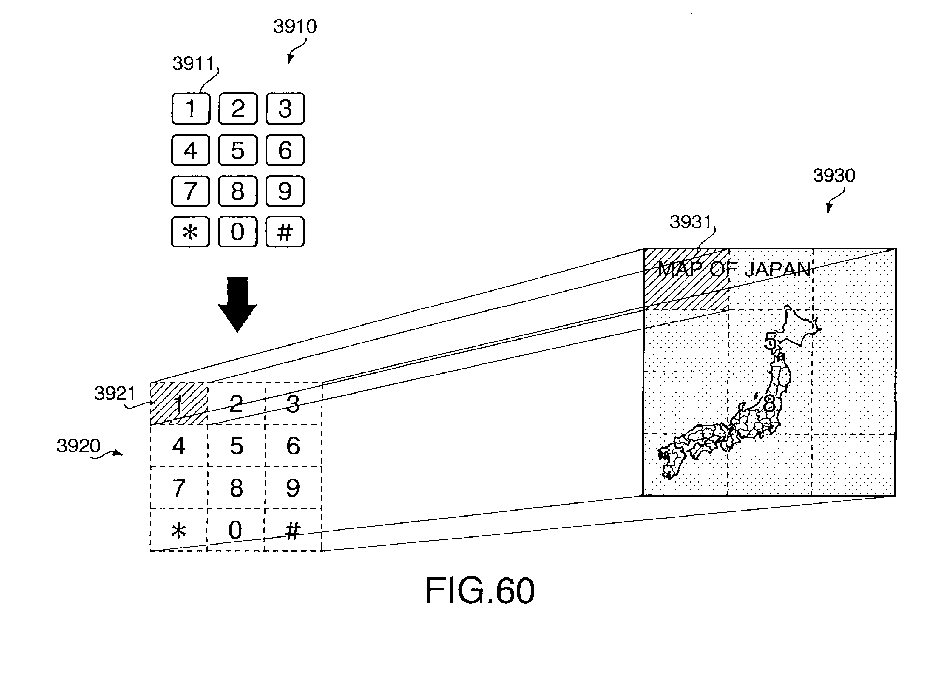

The method of establishing the correspondence between an image and size and position change request will be explained using FIG.60. First, reference numerals 3910 and 3930 in FIG.60 correspond to input section 3512 and data display section 3511, respectively. As shown in 3920, each key of input section 3512 corresponds to each block of the whole area, which has been divided into blocks. Whole area 3920 and each block correspond to whole image 3930 and each block, respectively.

As shown above, a one-to-one correspondence is established between each key of input section 3512 and each block of image data displayed on data display section 3511.

In the case where key 3911 is selected, it is assumed that area 3921 is selected and it is further assumed that area 3931 of the image data is selected. Then, the position of area 3931 is specified and it is requested that the image data in the specified area be enlarged to full size 3930.

In this way, a one-to-one correspondence is established between each key of input section 3512 and a request for position specification and size change of the image displayed on data display section 3511.

As shown above, by establishing a one-to-one correspondence between a request for a size and position change of an image and each key of input section 3512 and by the user pressing a key of input section 3512, the request for the size and position change of the image is sent to contents server 3410 from data request transmission section 3432.

Contents server 3410 receives the size and position change request from terminal apparatus 3430 through request reception section 3411, analyzes the request through request analysis section 3412 and sends the image size and position change request to information acquisition section 3413 and image processing section 3418.

Information acquisition section 3413 acquires the requested data from database 3420 according to the received image size and position change request.

Then, the acquired document data is analyzed by document data analysis section 3414. In the case where there is image data referenced in the document data, the referenced image data is acquired from database 3420 by information acquisition section 3413 and the image data is subjected to rendering by image data rendering section 3415.

Moreover, the analyzed document data is sent to document data rendering section 3416 and subjected to rendering. Then, the text rendered by document data rendering section 3416 and the image rendered by image data rendering section 3415 are combined by image combination section 3417 and the combined image is sent to image processing section 3418.

Image processing section 3418 receives the image size and position change request from request analysis section 3412 and receives the image data from image combination section 3417. Image processing section 3418 then changes the size of the received image data and clips according to the size and position change request. The processed image data is sent from data transmission section 3419 to terminal apparatus 3430.

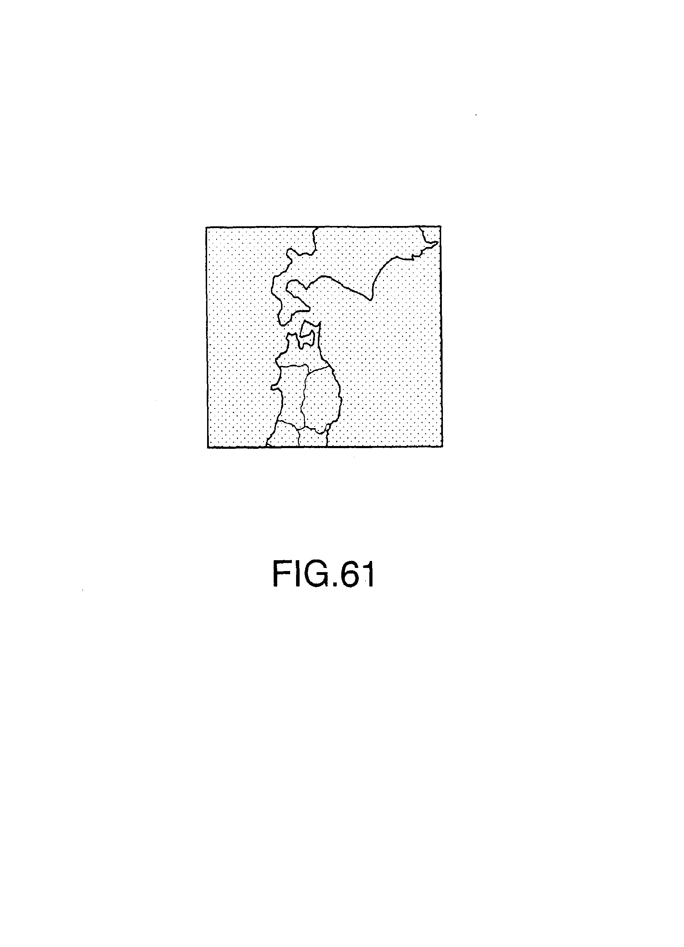

Terminal apparatus 3430 that has received the image data through data reception section 3433 subjects the image data to rendering through image data rendering section 3434 and displays the rendered image through data display section 3435. FIG.61 shows a display example of the image displayed on data display section 3435 when the user presses key 5 of input section 3512 for the document data shown in FIG.57.

According to this embodiment, a one-to-one correspondence is established between the key layout of input section 3910 and blocks of the display image which has been divided into blocks, and the user can specify a position change request and change position using a key of input section 3910, allowing the user to easily have an enlarged view of a desired part.

### [Tenth embodiment]

A tenth embodiment of the present invention will be explained with reference to the attached drawings.

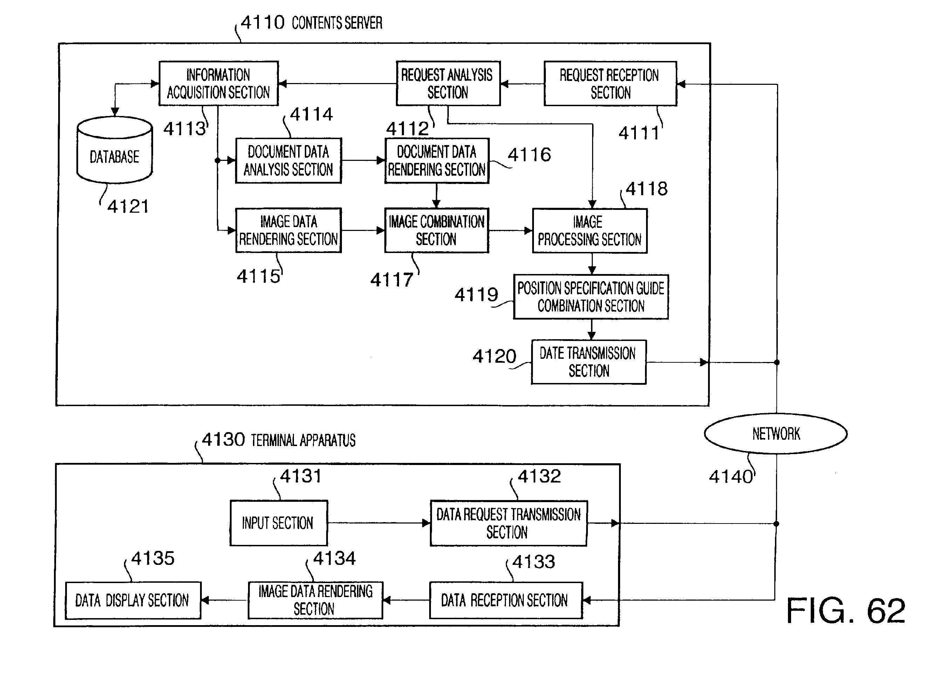

FIG.62 is a block diagram showing a system configuration according to the tenth embodiment of the present invention. In FIG.62, contents server 4110 and terminal apparatus 4130 are connected to network 4140 such as the Internet.

Contents server 4110 comprises request reception section 4111 that receives a data request from terminal apparatus 4130, request analysis section 4112 that analyzes the received request, information acquisition section 4113 that acquires information from database 4121 according to the request, database 4121 that controls and stores multimedia data such as document data and image data, document data analysis section 4114 that analyzes the requested document data, image data rendering section 4115 that performs rendering on the requested image data, document data rendering section 4116 that performs rendering on the requested document data, image combination section 4117 that combines the rendered document data and image data, image processing section 4118 that converts the size of the image and performs clipping on the image data combined by image combination section 4117 according to a data request from terminal apparatus 4130, position specification guide combination section 4119 that overlays the image of a position specification guide over the processed image data and data transmission section 4120 that transmits the image data with the position specification guide combined by position specification guide combination section 4119 to terminal apparatus 4130.

Terminal apparatus 4130 is implemented by using, for example, a cellular phone, and comprises input section 4131 that accepts inputs from the user, data request transmission section 4132 that sends a data request according to the input, data reception section 4133 that receives the requested data, image data rendering section 4134 that performs rendering on the received image data and data display section 4135 that displays the rendered image, making it possible to send a data request to contents server 4110 according to the user's operations, receive the requested data, display the data, request a change of the size and position of the received data and display the data whose size and position have been changed.

FIG.56 is an appearance example of terminal apparatus 4130. In FIG.56, reference numeral 3511 corresponds to data display section 4135 in FIG.62 and 3512 corresponds to input section 4131 in FIG.62.

The user requests document data described in a structural description language (e.g., HTML) by specifying an identifier (e.g., URL) from input section 4131 of terminal apparatus 4130 and the request is sent from data request transmission section 4132 to contents server 4110. Contents server 4110 receives the request through request reception section 4111, analyzes the request through request analysis section 4112 and acquires the requested data through information acquisition section 4113 from database 4121. FIG.57 shows an example of the acquired document data.

Then, the acquired document data is analyzed by document data analysis section 4114. In the case where there is image data referenced in the document data, the referenced image data is acquired from database 4121 by information acquisition section 4113 and the image data is subjected to rendering by image data rendering section 4115. FIG.58 shows an example of the rendering result of the image data referenced in the document data shown in FIG.57.

Moreover, the analyzed document data is sent to document data rendering section 4116 and subjected to rendering. Then, the text image subjected to rendering by document data rendering section 4116 and the image subjected to rendering by image data rendering section 4115 are combined by image combination section 4117 and the combined image is sent to image processing section 4118.

In the case where no size and position specification request is received from terminal apparatus 4130, image processing section 4118 directly sends the image data sent from image combination section 4117 to position specification guide combination section 4119. Position specification guide combination section 4119 overlays the image of a position specification guide over the image sent from image processing section 4118 and sends the overlaid data to data transmission section 4120 and data transmission section 4120 sends the image data to terminal apparatus 4130.

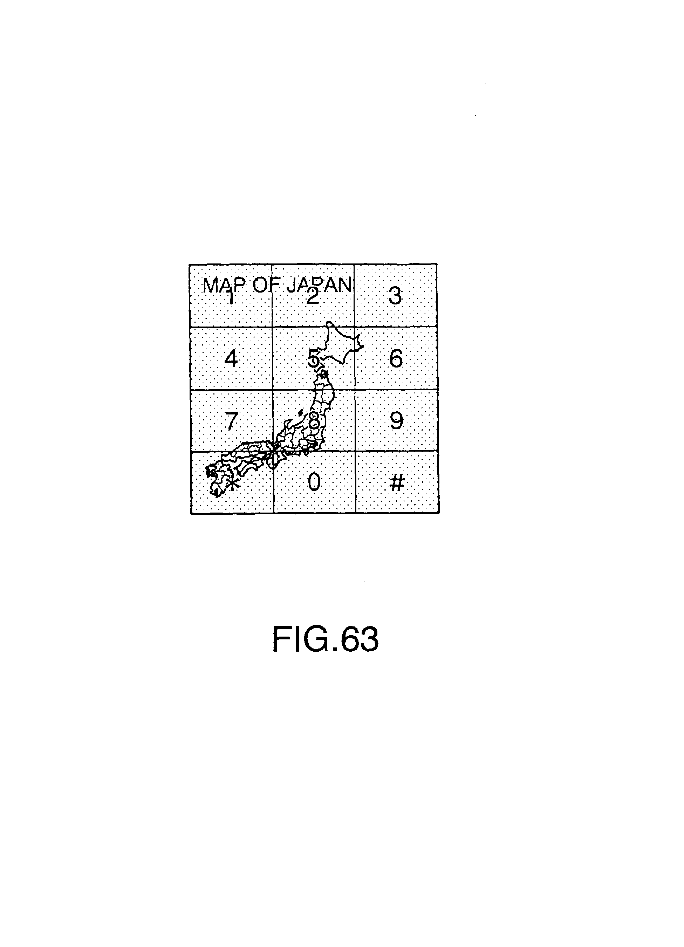

FIG.63 shows an example of the image data sent to terminal apparatus 4130. As shown in FIG.63, block lines are drawn on the contents image subjected to rendering and a numerical value corresponding to each key of key input section 3512 of input section 4131 is shown in each block.

Terminal apparatus 4130 that has received the image data through data reception section 4133 subjects the image data to rendering through image data rendering section 4134 and displays the rendered image through data display section 4135.

Then, the case where the user requests for changing the size and position of the image data from input section 4131 will be explained.

In this embodiment, as shown in FIG.56, the request respect to a change of the size and position of the image data displayed on data display section 3511 has a one-to-one correspondence with each key of input section 3512.

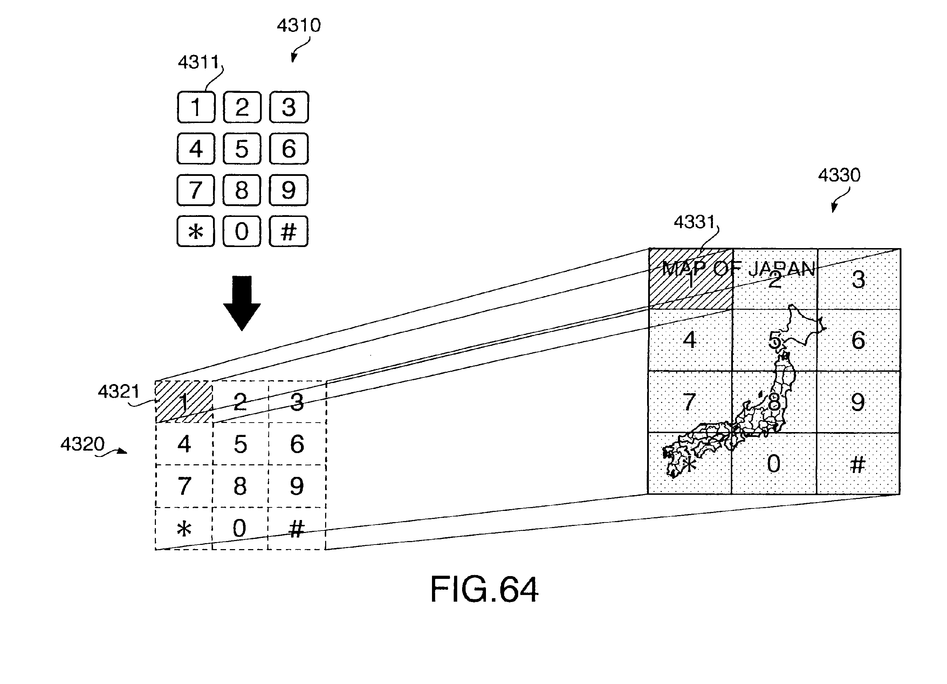

The method of correspondence between an image and size and position change request will be explained using FIG.64.

First, reference numerals 4310 and 4330 in FIG.64 correspond to key input section 3512 and data display section 3511, respectively.

As shown in 4320, each key of key input section 3512 corresponds to each block of the whole key area, which has been divided into blocks. The whole area and each block indicated by 4320 correspond to the full image and each block displayed on the data display section indicated by 4330, respectively.

As shown above, a one-to-one correspondence is established between each key of key input section 3512 and image data displayed on data display section 3511.

In the case where key 4311 is selected, it is assumed that area 4321 is selected and it is further assumed that area 4331 of the image data is selected. Then, the position of area 4331 is specified and it is requested that the image data in the area be enlarged to full size 4330.

In this way, a one-to-one correspondence is established between each key of key input section 3512 and a request for position specification and size change of an image displayed on data display section 3511.

As shown above, by establishing a one-to-one correspondence between a request for a size and position change of an image and each key of key input section 3512 and by the user pressing a key of key input section 3512, the request for the size and position change of the image is sent to contents server 4110 from data request transmission section 4132.

Contents server 4110 receives the size and position change request from terminal apparatus 4130 through request reception section 4111, analyzes the request through request analysis section 4112 and sends the image size and position change request to information acquisition section 4113 and image processing section 4118.

Information acquisition section 4113 acquires the requested data from database 4121 according to the received image size and position change request.

Then, the acquired document data is analyzed by document data analysis section 4114. In the case where there is image data referenced in the document data, the referenced image data is acquired from database 4121 by information acquisition section 4113 and the image data is subjected to rendering by image data rendering section 4115.

Moreover, the analyzed document data is sent to document data rendering section 4116 and subjected to rendering.

Then, the images rendered by document data rendering section 4116 and image data rendering section 4115 are combined by image combination section 4117 and the combined image is sent to image processing section 4118.

Image processing section 4118 that has received the size and position change request from request analysis section 4112 and received the image data from image combination section 4117 changes the size of the image and performs clipping on the received image data according to the size and position change request and sends the processed image data to position specification guide combination section 4119. Position specification guide combination section 4119 overlays the image of the position specification guide over the image sent from image processing section 4118 and sends the overlaid image from data transmission section 4120 to terminal apparatus 4130.

Terminal apparatus 4130 that has received the image data through data reception section 4133 subjects the image data to rendering through image data rendering section 4134 and displays the rendered image through data display section 4135.

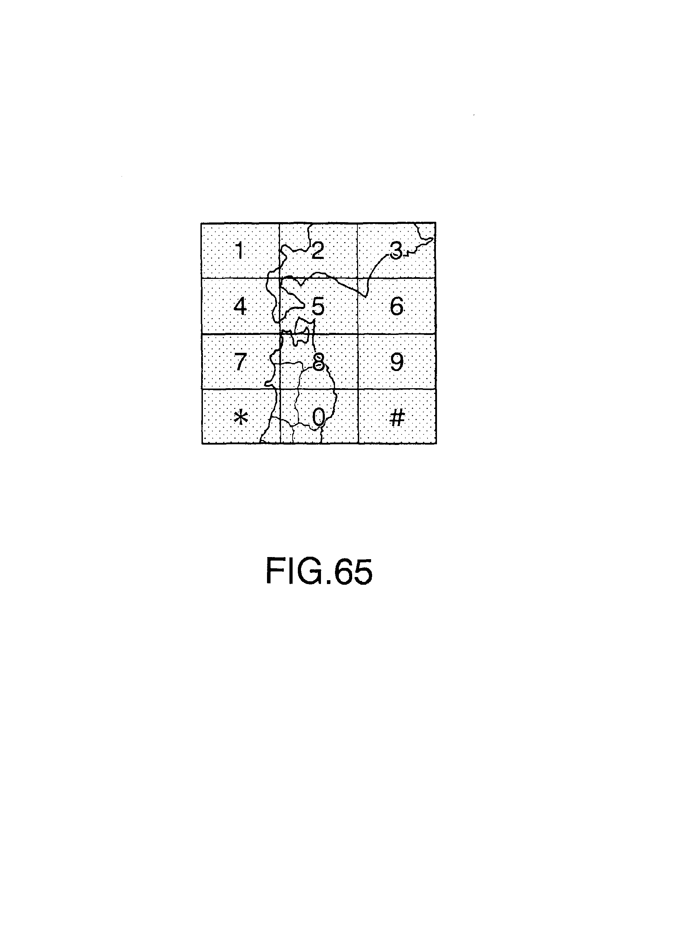

FIG.65 shows a display example of the image displayed on data display section 4135 when the user presses key number 5 of key input section 3512 for the document data shown in FIG.57.

According to this embodiment, a position specification guide is overlaid over a contents image subjected to rendering, thus allowing the user to easily select the specified position.

### [Eleventh embodiment]

An eleventh embodiment of the present invention will be explained with reference to the attached drawings.

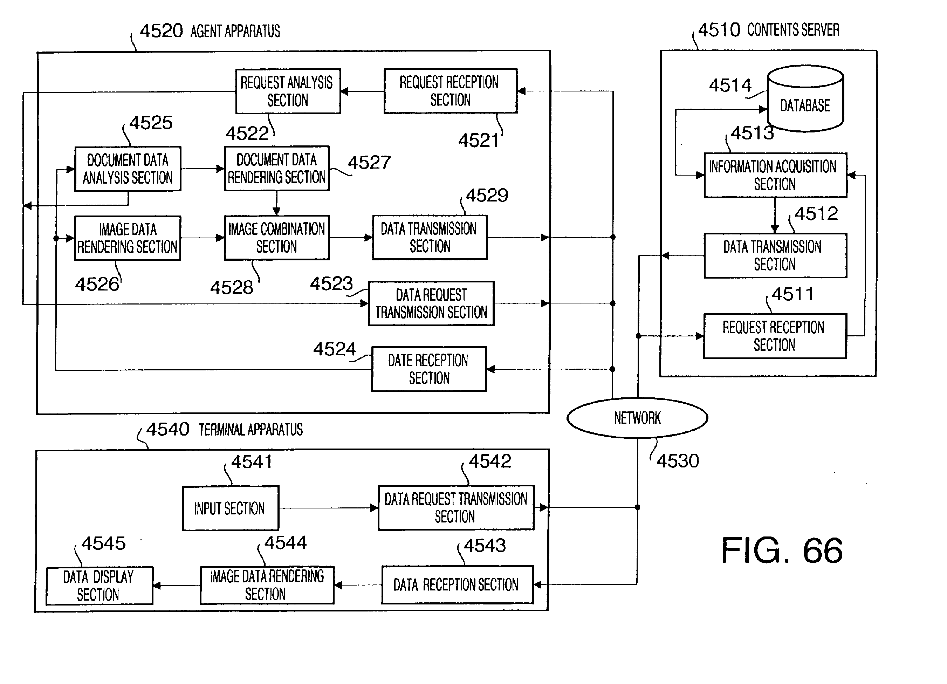

FIG.66 is a block diagram showing a system configuration according to the eleventh embodiment of the present invention. In FIG.66, contents server 4510, agent apparatus 4520 and terminal apparatus 4540 are connected to network 4530 such as the Internet.

Contents server 4510 comprises request reception section 4511 that receives a data request from agent apparatus 4520 and terminal apparatus 4540, information acquisition section 4513 that acquires information from database 4514 according to the request, database 4514 that controls and stores multimedia data such as document data and image data and data transmission section 4512 that transmits the acquired data to agent apparatus 4520 or terminal apparatus 4540.

Agent apparatus 4520 comprises request reception section 4521 that receives a data request from terminal apparatus 4540, request analysis section 4522 that analyzes the received request, data request transmission section 4523 that requests contents server 4510 to acquire data, data reception section 4524 that receives the data sent from contents server 4510 according to the request, document data analysis section 4525 that analyzes the received document data, image data rendering section 4526 that performs rendering on the requested image data, document data rendering section 4527 that performs rendering on the requested document data, image combination section 4528 that combines the rendered document data and image data and data transmission section 4529 that transmits the combined image data to terminal apparatus 4540.

Terminal apparatus 4540 is implemented by, for example, a cellular phone, and comprises input section 4541 that accepts inputs from the user, data request transmission section 4542 that sends a data request according to the input, data reception section 4543 that receives the requested data, image data rendering section 4544 that performs rendering on the received image data and data display section 4545 that displays the rendered image, making it possible to send a data request to agent apparatus 4520 according to the user's operations, receive the requested data and display the information.

The user requests document data described in a structural description language (e.g., HTML) by specifying an identifier (e.g., URL) from input section 4541 of terminal apparatus 4540 and the request is sent from data request transmission section 4542 to agent apparatus 4520.

Agent apparatus 4520 receives the request through request reception section 4521, analyzes the request through request analysis section 4522 and sends a request for the requested data to contents server 4510 through data request transmission section 4523.

Contents server 4510 receives the data request from agent apparatus 4520 through request reception section 4511, acquires data from database 4514 through information acquisition section 4513 and sends the acquired data to agent apparatus 4520 through data transmission section 4512.

Agent apparatus 4520 that has received the data sent from contents server 4510 through data reception section 4524 analyzes the acquired document data through document data analysis section 4525. In the case where the referenced image data exists, agent apparatus 4520 sends a request for the requested data to contents server 4510 through data request transmission section 4523.

Contents server 4510 receives the data request from agent apparatus 4520 through request reception section 4511, acquires data from database 4514 through information acquisition section 4513 and sends the acquired data to agent apparatus 4520 through data transmission section 4512. FIG.46 shows an example of the document data transmitted.

Agent apparatus 4520 receives data through data reception section 4524, sends the received image data to image data rendering section 4526 and image data rendering section 4526 performs rendering on the image data. FIG.47 shows the result of rendering of an example of the image data referenced in the document data shown in FIG.46.

Moreover, the analyzed document data is sent to document data rendering section 4525 and subjected to rendering. Then, the text image subjected to rendering by document data rendering section 4525 and the image subjected to rendering by image data rendering section 4526 are combined by image combination section 4528 and the combined image is sent to terminal apparatus 4540 from data transmission section 4529.

Terminal apparatus 4540 that has received the image data through data reception section 4543 subjects the image data to rendering through image data rendering section 4544 and displays the rendered image through data display section 4545. FIG.48 shows a display example of the document data shown in FIG.46 on data display section 4545.

According to this embodiment, agent apparatus 4520 performs rendering on the contents and the image referenced in the contents and contents server 4510 apart from agent apparatus 4520 stores the contents and referenced image, thus making it possible to separate the server that receives a request from the terminal from the server that controls and stores the contents.

### [Twelfth embodiment]

An twelfth embodiment of the present invention will be explained with reference to the attached drawings.

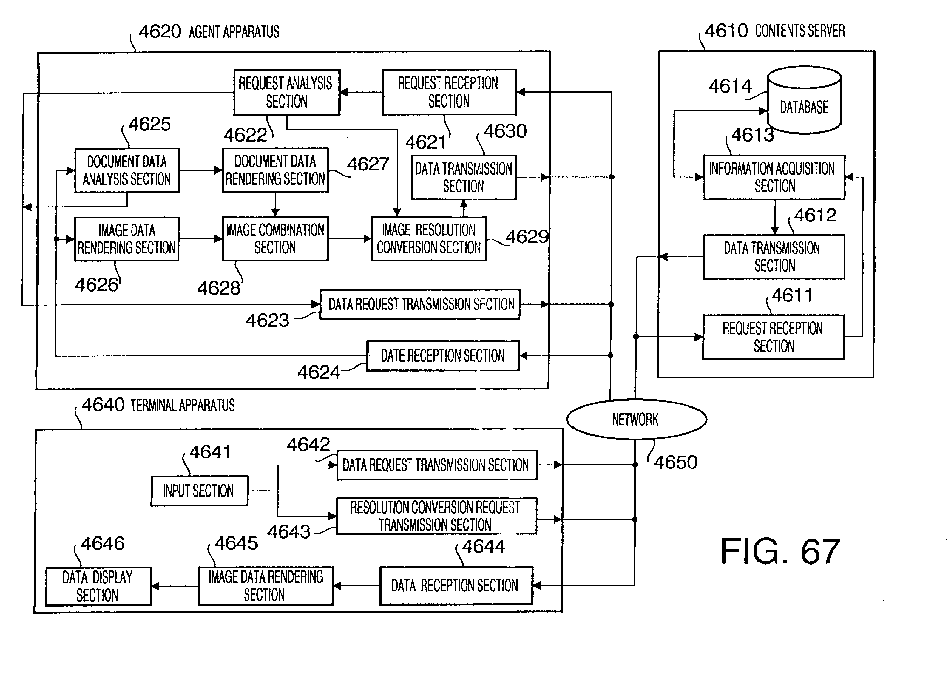

FIG.67 is a block diagram showing a system configuration according to the twelfth embodiment of the present invention. In FIG.67, contents server 4610, agent apparatus 4620 and terminal apparatus 4640 are connected to network 4650 such as the Internet.

Contents server 4610 comprises request reception section 4611 that receives a data request from agent apparatus 4620 and terminal apparatus 4640, information acquisition section 4613 that acquires information from database 4614 according to the request, database 4614 that controls and stores multimedia data such as document data and image data and data transmission section 4612 that transmits the acquired data to contents server 4620 or terminal apparatus 4640.

Agent apparatus 4620 comprises request reception section 4621 that receives a data request from terminal apparatus 4640, request analysis section 4622 that analyzes the received request, data request transmission section 4623 that requests contents server 4610 to acquire data, data reception section 4624 that receives the data sent from contents server 4610 according to the request, document data analysis section 4625 that analyzes the received document data, image data rendering section 4626 that performs rendering on the requested image data, document data rendering section 4627 that performs rendering on the requested document data, image combination section 4628 that combines the rendered document data and image data, image resolution conversion section 4629 that converts the resolution of the image data combined by image combination section 4628 according to the request from terminal apparatus 4640 and data transmission section 4630 that transmits the image data with the converted resolution to terminal apparatus 4640.

Terminal apparatus 4640 is implemented by, for example, a cellular phone, and comprises input section 4641 that accepts inputs from the user, data request transmission section 4642 that sends a data request according to the input, resolution conversion request transmission section 4643 that sends a resolution conversion request according to the input, data reception section 4644 that receives the requested data, image data rendering section 4645 that performs rendering on the received image data and data display section 4646 that displays the rendered image, making it possible to send a data request to agent apparatus 4620 according to the user's operations, receive the requested data, display the data, request conversion of the received data and display the data with the converted resolution.

The user requests document data described in a structural description language (e.g., HTML) by specifying an identifier (e.g., URL) from input section 4641 of terminal apparatus 4640 and the request is sent from data request transmission section 4642 to agent apparatus 4620. Agent apparatus 4620 receives the request through request reception section 4621, analyzes the request through request analysis section 4622 and sends a request for the requested data to contents server 4610 through data request transmission section 4623.

Contents server 4610 receives the data request from agent apparatus 4620 through request reception section 4611, acquires data from database 4614 through information acquisition section 4613 and sends the acquired data to agent apparatus 4620 through data transmission section 4612.

Agent apparatus 4620 that has received the data sent from contents server 4610 through data reception section 4624 analyzes the acquired document data through document data analysis section 4625. In the case where the referenced image data exists, agent apparatus 4620 sends a request for the referenced image data to contents server 4610 through data request transmission section 4623.

Contents server 4610 receives the referenced image request from agent apparatus 4620 through request reception section 4611, acquires data from database 4614 through information acquisition section 4613 and sends the acquired data to agent apparatus 4620 through data transmission section 4612. FIG.46 shows an example of the document data transmitted.

Agent apparatus 4620 receives data through data reception section 4624, sends the received image data to image data rendering section 4626 and image data rendering section 4626 performs rendering on the image data. FIG.47 shows the result of rendering of an example of the image data referenced in the document data shown in FIG.46.

Moreover, the analyzed document data is sent to document data rendering section 4627 and subjected to rendering. Then, the text image subjected to rendering by document data rendering section 4627 and the image subjected to rendering by image data rendering section 4626 are combined by image combination section 4628 and the combined image is sent to image resolution conversion section 4629.

In the case where no resolution conversion request has been received from terminal apparatus 4640, image resolution conversion section 4629 sends the image data sent from image combination section 4628 directly to data transmission section 4630 and data transmission section 4630 sends the image data received from image resolution conversion section 4629 to terminal apparatus 4640.

Terminal apparatus 4640 that has received the image data through data reception section 4644 subjects the image data to rendering through image data rendering section 4645 and displays the rendered image through data display section 4646. FIG.48 shows a display example of the document data shown in FIG.46 on data display section 4646.

Then, when the user requests for conversion of the resolution of the displayed image from input section 4641, the request is sent from resolution conversion request transmission section 4643 to agent apparatus 4620, and agent apparatus 4620 receives the resolution conversion request from terminal apparatus 4640 from request reception section 4621, analyzes the request through request analysis section 4622 and sends the image resolution conversion request to data request transmission section 4623 and image resolution conversion section 4629.

Data request transmission section 4623 sends a request for the requested data to contents server 4610 according to the received image resolution conversion request.

Contents server 4610 receives the data request from agent apparatus 4620 through request reception section 4611, acquires data from database 4614 through information acquisition section 4613 and sends the acquired data to agent apparatus 4620 through data transmission section 4612.

Agent apparatus 4620 that has received the data sent from contents server 4610 through data reception section 4624 analyzes the acquired document data through document data analysis section 4625. In the case where the referenced image data exists, agent apparatus 4620 sends a request for the referenced image to contents server 4610 through data request transmission section 4623.

Contents server 4610 receives the referenced image request from agent apparatus 4620 through request reception section 4611, acquires the referenced image data from database 4614 through information acquisition section 4613 and sends the acquired data to agent apparatus 4620 through data transmission section 4612.

Agent apparatus 4620 receives the referenced image data through data reception section 4624, sends the received image data to image data rendering section 4626 and image data rendering section 4626 performs rendering on the image data.

Moreover, the analyzed document data is sent to document data rendering section 4627 and subjected to rendering.

Then, the images subjected to rendering by document data rendering section 4627 and image data rendering section 4626 are combined by image combination section 4628 and the combined image is sent to image resolution conversion section 4629.

Image resolution conversion section 4629 that has received the resolution conversion request from request analysis section 4622 and the image data from image combination section 4628 converts the resolution of the received image data according to the resolution conversion request and the image data with the converted resolution is sent to terminal apparatus 4640 through data transmission section 4630.

Terminal apparatus 4640 that has received the image data through data reception section 4644 subjects the image data to rendering through image data rendering section 4645 and displays the rendered image through data display section 4646. FIG.50 shows a display example of the document data shown in FIG.46 on data display section 4646 whose resolution is requested to be improved.

According to this embodiment, agent apparatus 4620 can perform resolution conversion requested from terminal apparatus 4640.

### [Thirteenth embodiment]

A thirteenth embodiment of the present invention will be explained with reference to the attached drawings.

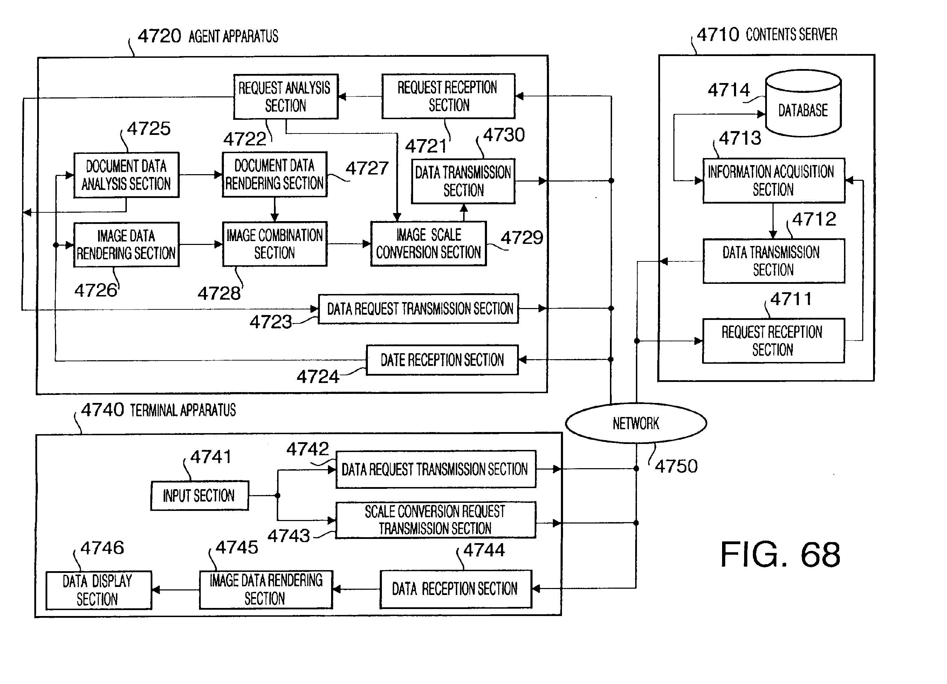

FIG.68 is a block diagram showing a system configuration according to the thirteenth embodiment of the present invention. In FIG.68, contents server 4710, agent apparatus 4720 and terminal apparatus 4740 are connected to network 4750 such as the Internet.

Contents server 4710 comprises request reception section 4711 that receives a data request from agent apparatus 4720 and terminal apparatus 4740, information acquisition section 4713 that acquires information from database 4714 according to the request, database 4714 that controls and stores multimedia data such as document data and image data and data transmission section 4712 that transmits the acquired data to agent apparatus 4720 or terminal apparatus 4740.

Agent apparatus 4720 comprises request reception section 4721 that receives a data request from terminal apparatus 4740, request analysis section 4722 that analyzes the received request, data request transmission section 4723 that requests contents server 4710 to acquire data, data reception section 4724 that receives the data sent from contents server 4710 according to the request, document data analysis section 4725 that analyzes the received document data, image data rendering section 4726 that performs rendering on the requested image data, document data rendering section 4727 that performs rendering on the requested document data, image combination section 4728 that combines the rendered document data and image data, image scale conversion section 4729 that converts the scale of the image data combined by image combination section 4728 according to the request from terminal apparatus 4740 and data transmission section 4730 that transmits the image data with the converted scale to terminal apparatus 4740.

Terminal apparatus 4740 is implemented by, for example, a cellular phone, and comprises input section 4741 that accepts inputs from the user, data request transmission section 4742 that sends a data request according to the input, scale conversion request transmission section 4743 that sends a scale conversion request according to the input, data reception section 4744 that receives the requested data, image data rendering section 4745 that performs rendering on the received image data and data display section 4746 that displays the rendered image, making it possible to send a data request to agent apparatus 4720 according to the user's operations, receive the requested data, display the data, request conversion of the scale of the received data and display the data with the converted scale.

The user requests document data described in a structural description language (e.g., HTML) by specifying an identifier (e.g., URL) from input section 4741 of terminal apparatus 4740 and the request is sent from data request transmission section 4742 to agent apparatus 4720. Agent apparatus 4720 receives the request through request reception section 4721, analyzes the request through request analysis section 4722 and sends a request for the requested data to contents server 4710 through data request transmission section 4723.

Contents server 4710 receives the data request from agent apparatus 4720 through request reception section 4711, acquires data from database 4714 through information acquisition section 4713 and sends the acquired data to agent apparatus 4720 through data transmission section 4712.

Agent apparatus 4720 that has received the data sent from contents server 4710 through data reception section 4724 analyzes the acquired document data through document data analysis section 4725. In the case where the referenced image data exists, agent apparatus 4720 sends a request for the referenced image data to contents server 4710 through data request transmission section 4723. FIG.46 shows an example of the document data transmitted.

Contents server 4710 receives the referenced image request from agent apparatus 4720 through request reception section 4711, acquires the referenced image data from database 4714 through information acquisition section 4713 and sends the acquired image data to agent apparatus 4720 through data transmission section 4712.

Agent apparatus 4720 receives image data through data reception section 4724, sends the received image data to image data rendering section 4726 and image data rendering section 4726 performs rendering on the image data.

FIG.47 shows the result of rendering of an example of the image data referenced in the document data shown in FIG.46.

Moreover, the analyzed document data is sent to document data rendering section 4727 and subjected to rendering.

Then, the images subjected to rendering by document data rendering section 4727 and image data rendering section 4726 are combined by image combination section 4728 and the combined image is sent to image scale conversion section 4729.

In the case where no scale conversion request has been received from terminal apparatus 4740, image scale conversion section 4729 sends the image data sent from image combination section 4728 directly to data transmission section 4730 and data transmission section 4730 sends the image data received from image scale conversion section 4729 to terminal apparatus 4740.

Terminal apparatus 4740 that has received the image data through data reception section 4744 subjects the image data to rendering through image data rendering section 4745 and displays the rendered image through data display section 4746.

FIG.48 shows a display example of the document data shown in FIG.46 on data display section 4746.

Then, when the user requests for conversion of the scale of the displayed image data from input section 4741, the request is sent from scale conversion request transmission section 4743 to agent apparatus 4720, and agent apparatus 4720 receives the scale conversion request from terminal apparatus 4740 from request reception section 4721, analyzes the request through request analysis section 4722 and sends the image scale conversion request to data request transmission section 4723 and image scale conversion section 4729.

Data request transmission section 4723 sends a request for the requested data to contents server 4710 according to the received image scale conversion request.

Contents server 4710 receives the data request from agent apparatus 4720 through request reception section 4711, acquires data from database 4714 through information acquisition section 4713 and sends the acquired data to agent apparatus 4720 through data transmission section 4712.

Agent apparatus 4720 that has received the data sent from contents server 4710 through data reception section 4724 analyzes the acquired document data through document data analysis section 4725. In the case where the referenced image data exists, agent apparatus 4720 sends a request for the referenced image data to contents server 4710 through data request transmission section 4723.

Contents server 4710 receives the referenced image request from agent apparatus 4720 through request reception section 4711, acquires the referenced image data from database 4714 through information acquisition section 4713 and sends the acquired image data to agent apparatus 4720 through data transmission section 4712.

Agent apparatus 4720 receives the referenced image data through data reception section 4724, sends the received image data to image data rendering section 4726 and image data rendering section 4726 performs rendering on the image data.

Moreover, the analyzed document data is sent to document data rendering section 4727 and subjected to rendering.

Then, the images subjected to rendering by document data rendering section 4727 and image data rendering section 4726 are combined by image combination section 4728 and the combined image is sent to image scale conversion section 4729.

Image scale conversion section 4729 that has received the scale conversion request from request analysis section 4722 and the image data from image combination section 4728 converts the scale of the received image data according to the scale conversion request and the image data with the converted scale is sent to terminal apparatus 4740 through data transmission section 4730.

Terminal apparatus 4740 that has received the image data through data reception section 4744 subjects the image data to rendering through image data rendering section 4745 and displays the rendered image through data display section 4746.

FIG.50 shows a display example of the document data shown in FIG.46 on data display section 4746 whose scale is requested to be increased.

### [Fourteenth embodiment]

A fourteenth embodiment of the present invention will be explained with reference to the attached drawings.

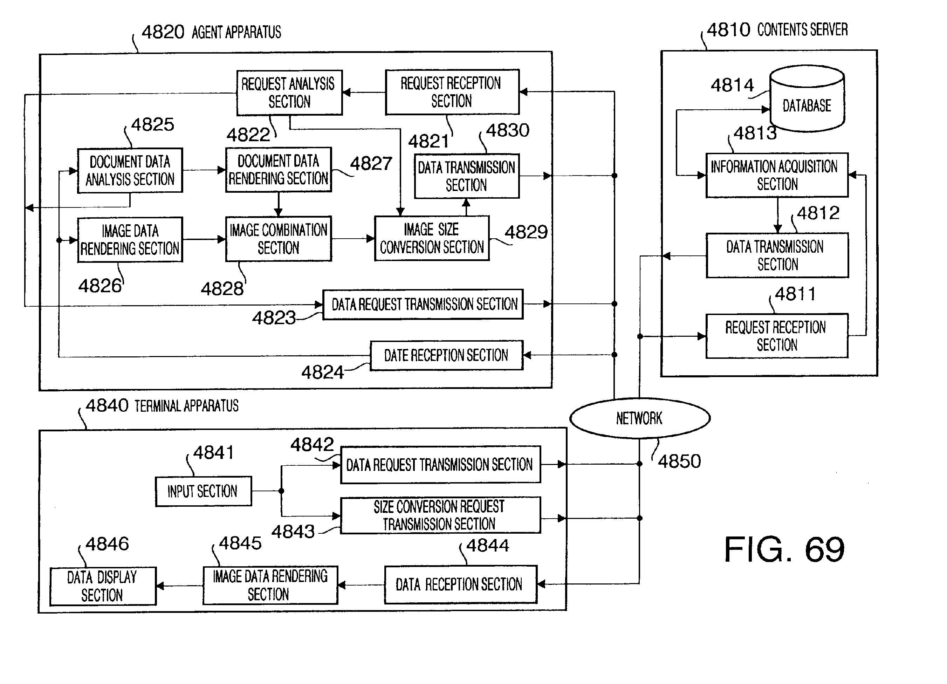

FIG.69 is a block diagram showing a system configuration according to the fourteenth embodiment of the present invention. In FIG.69, contents server 4810, agent apparatus 4820 and terminal apparatus 4840 are connected to network 4850 such as the Internet.

Contents server 4810 comprises request reception section 4811 that receives a data request from agent apparatus 4820 and terminal apparatus 4840, information acquisition section 4813 that acquires information from database 4814 according to the request, database 4814 that controls and stores multimedia data such as document data and image data and data transmission section 4812 that transmits the acquired data to agent apparatus 4820 or terminal apparatus 4840.

Agent apparatus 4820 comprises request reception section 4821 that receives a data request from terminal apparatus 4840, request analysis section 4822 that analyzes the received request, data request transmission section 4823 that requests contents server 4810 to acquire data, data reception section 4824 that receives the data sent from contents server 4810 according to the request, document data analysis section 4825 that analyzes the received document data, image data rendering section 4826 that performs rendering on the requested image data, document data rendering section 4827 that performs rendering on the requested document data, image combination section 4828 that combines the rendered document data and image data, image size conversion section 4829 that converts the size of the image data combined by image combination section 4828 according to the request from terminal apparatus 4840 and data transmission section 4830 that transmits the image data with the converted size to terminal apparatus 4840.

Terminal apparatus 4840 is implemented by, for example, a cellular phone, and comprises input section 4841 that accepts inputs from the user, data request transmission section 4842 that sends a data request according to the input, size conversion request transmission section 4843 that sends a size conversion request according to the input, data reception section 4844 that receives the requested data, image data rendering section 4845 that performs rendering on the received image data and data display section 4846 that displays the rendered image, making it possible to send a data request to agent apparatus 4820 according to the user's operations, receive the requested data, display the data, request conversion of the size of the received data and display the data with the converted size.

The user requests document data described in a structural description language (e.g., HTML) by specifying an identifier (e.g., URL) from input section 4841 of terminal apparatus 4840 and the request is sent from data request transmission section 4842 to agent apparatus 4820. Agent apparatus 4820 receives the request through request reception section 4821, analyzes the request through request analysis section 4822 and sends a request for the requested data to contents server 4810 through data request transmission section 4823.

Contents server 4810 receives the data request from agent apparatus 4820 through request reception section 4811, acquires data from database 4814 through information acquisition section 4813 and sends the acquired data to agent apparatus 4820 through data transmission section 4812. FIG.46 shows an example of the document data transmitted.

Agent apparatus 4820 that has received the data sent from contents server 4810 through data reception section 4824 analyzes the acquired document data through document data analysis section 4825. In the case where the referenced image data exists, agent apparatus 4820 sends a request for the referenced image to contents server 4810 through data request transmission section 4823.

Contents server 4810 receives the referenced image request from agent apparatus 4820 through request reception section 4811, acquires the referenced image data from database 4814 through information acquisition section 4813 and sends the acquired image data to agent apparatus 4820 through data transmission section 4812.

Agent apparatus 4820 receives the referenced image data through data reception section 4824, sends the received image data to image data rendering section 4826 and image data rendering section 4826 performs rendering on the image data. FIG.47 shows the result of rendering of an example of the image data referenced in the document data shown in FIG.46.

Moreover, the analyzed document data is sent to document data rendering section 4827 and subjected to rendering. Then, the images subjected to rendering by document data rendering section 4827 and image data rendering section 4826 are combined by image combination section 4828 and the combined image is sent to image size conversion section 4829.

In the case where no size conversion request has been received from terminal apparatus 4840, image size conversion section 4829 sends the image data sent from image combination section 4828 directly to data transmission section 4830 and data transmission section 4830 sends the image data received from image size conversion section 4829 to terminal apparatus 4840.

Terminal apparatus 4840 that has received the image data through data reception section 4844 subjects the image data to rendering through image data rendering section 4845 and displays the rendered image through data display section 4846. FIG.48 shows a display example of the document data shown in FIG.46 on data display section 4846.

Then, when the user requests for conversion of the size of the displayed image data from input section 4841, the request is sent from size conversion request transmission section 4843 to agent apparatus 4820, and agent apparatus 4820 receives the size conversion request from terminal apparatus 4840 from request reception section 4821, analyzes the request through request analysis section 4822 and sends the image size conversion request to data request transmission section 4823 and image size conversion section 4829.

Data request transmission section 4823 sends a request for the requested data to contents server 4810 according to the received image size conversion request.

Contents server 4810 receives the data request from agent apparatus 4820 through request reception section 4811, acquires data from database 4814 through information acquisition section 4813 and sends the acquired data to agent apparatus 4820 through data transmission section 4812.

Agent apparatus 4820 that has received the data sent from contents server 4810 through data reception section 4824 analyzes the acquired document data through document data analysis section 4825. In the case where the referenced image data exists, agent apparatus 4820 sends a request for the referenced image data to contents server 4810 through data request transmission section 4823.

Contents server 4810 receives the referenced image data request from agent apparatus 4820 through request reception section 4811, acquires the referenced image data from database 4814 through information acquisition section 4813 and sends the acquired image data to agent apparatus 4820 through data transmission section 4812.

Agent apparatus 4820 receives the referenced image data through data reception section 4824, sends the received image data to image data rendering section 4826 and image data rendering section 4826 performs rendering on the image data.

Moreover, the analyzed document data is sent to document data rendering section 4827 and subjected to rendering. Then, the images subjected to rendering by document data rendering section 4827 and image data rendering section 4826 are combined by image combination section 4828 and the combined image is sent to image size conversion section 4829.

Image size conversion section 4829 that has received the size conversion request from request analysis section 4822 and the image data from image combination section 4828 converts the size of the received image data according to the size conversion request and the image data with the converted size is sent to terminal apparatus 4840 through data transmission section 4830.

Terminal apparatus 4840 that has received the image data through data reception section 4844 subjects the image data to rendering through image data rendering section 4845 and displays the rendered image through data display section 4846. FIG.50 shows a display example of the document data shown in FIG.46 on data display section 4846 whose size is requested to be increased.

### [Fifteenth embodiment]

A fifteenth embodiment of the present invention will be explained with reference to the attached drawings.

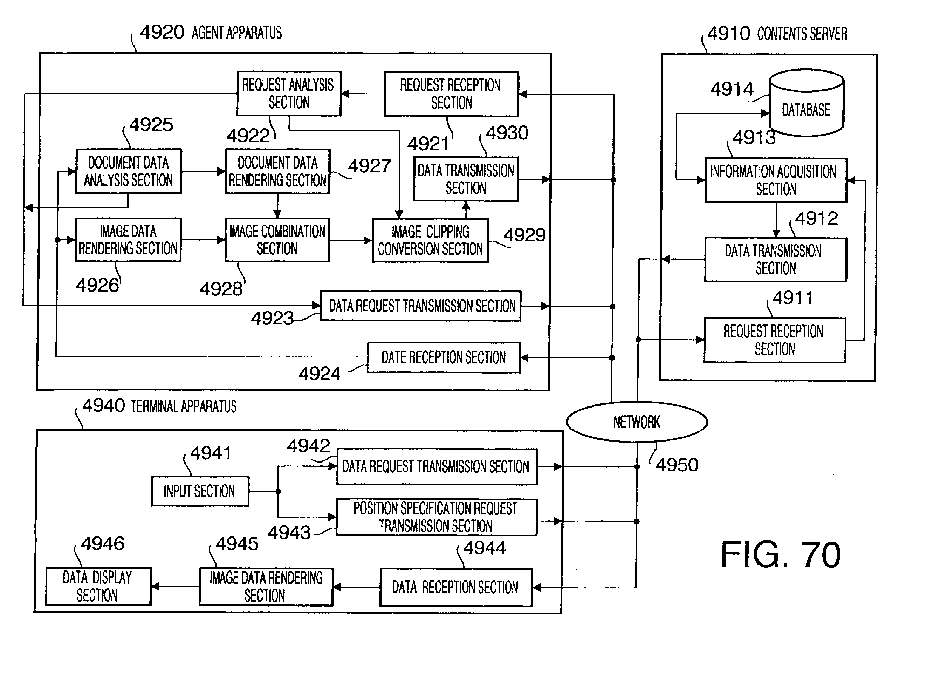

FIG.70 is a block diagram showing a system configuration according to the fifteenth embodiment of the present invention. In FIG.70, contents server 4910, agent apparatus 4920 and terminal apparatus 4940 are connected to network 4950 such as the Internet.

Contents server 4910 comprises request reception section 4911 that receives a data request from agent apparatus 4920 and terminal apparatus 4940, information acquisition section 4913 that acquires information from database 4914 according to the request, database 4914 that controls and stores multimedia data such as document data and image data and data transmission section 4912 that transmits the acquired data to agent apparatus 4920 or terminal apparatus 4940.

Agent apparatus 4920 comprises request reception section 4921 that receives a data request from terminal apparatus 4940, request analysis section 4922 that analyzes the received request, data request transmission section 4923 that requests contents server 4910 to acquire data, data reception section 4924 that receives the data sent from contents server 4910 according to the request, document data analysis section 4925 that analyzes the received document data, image data rendering section 4926 that performs rendering on the requested image data, document data rendering section 4927 that performs rendering on the requested document data, image combination section 4928 that combines the rendered document data and image data, image clipping section 4929 that performs clipping on the image data combined by image combination section 4928 according to the position request from terminal apparatus 4940 and data transmission section 4930 that transmits the clipped image data to terminal apparatus 4940.

Terminal apparatus 4940 is implemented by, for example, a cellular phone, and comprises input section 4941 that accepts inputs from the user, data request transmission section 4942 that sends a data request according to the input, position specification request transmission section 4943 that sends a position specification request according to the input, data reception section 4944 that receives the requested data, image data rendering section 4945 that performs rendering on the received image data and data display section 4946 that displays the rendered image, making it possible to send a data request to agent apparatus 4920 according to the user's operations, receive the requested data, display the data, request conversion of the size of the received data and display the data with the converted size.

The user requests document data described in a structural description language (e.g., HTML) by specifying an identifier (e.g., URL) from input section 4941 of terminal apparatus 4940 and the request is sent from data request transmission section 4942 to agent apparatus 4920. Agent apparatus 4920 receives the request through request reception section 4921, analyzes the request through request analysis section 4922 and sends a request for the requested data to contents server 4910 through data request transmission section 4923.

Contents server 4910 receives the data request from agent apparatus 4920 through request reception section 4911, acquires data from database 4914 through information acquisition section 4913 and sends the acquired data to agent apparatus 4920 through data transmission section 4912. FIG.46 shows an example of the document data transmitted.

Agent apparatus 4920 that has received the data sent from contents server 4910 through data reception section 4924 analyzes the acquired document data through document data analysis section 4925. In the case where the referenced image data exists, agent apparatus 4920 sends a request for the referenced image data to contents server 4910 through data request transmission section 4923.

Contents server 4910 receives the referenced image request from agent apparatus 4920 through request reception section 4911, acquires the referenced image data from database 4914 through information acquisition section 4913 and sends the acquired image data to agent apparatus 4920 through data transmission section 4912.

Agent apparatus 4920 receives the referenced image data through data reception section 4924, sends the received image data to image data rendering section 4926 and image data rendering section 4926 performs rendering on the image data. FIG.47 shows the result of rendering of an example of the image data referenced in the document data shown in FIG.46.

Moreover, the analyzed document data is sent to document data rendering section 4927 and subjected to rendering.

Then, the images subjected to rendering by document data rendering section 4927 and image data rendering section 4926 are combined by image combination section 4928 and the combined image is sent to image clipping section 4929.

In the case where no position specification request has been received from terminal apparatus 4940, image clipping section 4929 sends the image data sent from image combination section 4928 directly to data transmission section 4930 and data transmission section 4930 sends the image data received from image clipping section 4929 to terminal apparatus 4940.

Terminal apparatus 4940 that has received the image data through data reception section 4944 subjects the image data to rendering through image data rendering section 4945 and displays the rendered image through data display section 4946. FIG.48 shows a display example of the document data shown in FIG.46 on data display section 4946.

Then, when the user requests for conversion of the position of the displayed image data from input section 4941, the request is sent from position specification request transmission section 4943 to agent apparatus 4920, and agent apparatus 4920 receives the position specification request from terminal apparatus 4940 from request reception section 4921, analyzes the request through request analysis section 4922 and sends the image position specification request to data request transmission section 4923 and image clipping section 4929.

Data request transmission section 4923 sends a request for the requested data to contents server 4910 according to the received image position specification request.

Contents server 4910 receives the data request from agent apparatus 4920 through request reception section 4911, acquires data from database 4914 through information acquisition section 4913 and sends the acquired data to agent apparatus 4920 through data transmission section 4912.

Agent apparatus 4920 that has received the data sent from contents server 4910 through data reception section 4924 analyzes the acquired document data through document data analysis section 4925. In the case where the referenced image data exists, agent apparatus 4920 sends a request for the referenced image data to contents server 4910 through data request transmission section 4923.

Contents server 4910 receives the referenced image data request from agent apparatus 4920 through request reception section 4911, acquires the referenced image data from database 4914 through information acquisition section 4913 and sends the acquired image data to agent apparatus 4920 through data transmission section 4912.

Agent apparatus 4920 receives the referenced image data through data reception section 4924, sends the received image data to image data rendering section 4926 and image data rendering section 4926 performs rendering on the image data.

Moreover, the analyzed document data is sent to document data rendering section 4927 and subjected to rendering.

Then, the images subjected to rendering by document data rendering section 4927 and image data rendering section 4926 are combined by image combination section 4928 and the combined image is sent to image clipping section 4929.

Image clipping section 4929 that has received the position specification request from request analysis section 4922 and the image data from image combination section 4928 clips the received image data according to the position specification request and the clipped image data is sent to terminal apparatus 4940 through data transmission section 4930.

Terminal apparatus 4940 that has received the image data through data reception section 4944 subjects the image data to rendering through image data rendering section 4945 and displays the rendered image through data display section 4946. FIG.54 shows a display example of the document data shown in FIG.46 on data display section 4946 whose size is requested to be increased.

### [Sixteenth embodiment]

A sixteenth embodiment of the present invention will be explained with reference to the attached drawings.

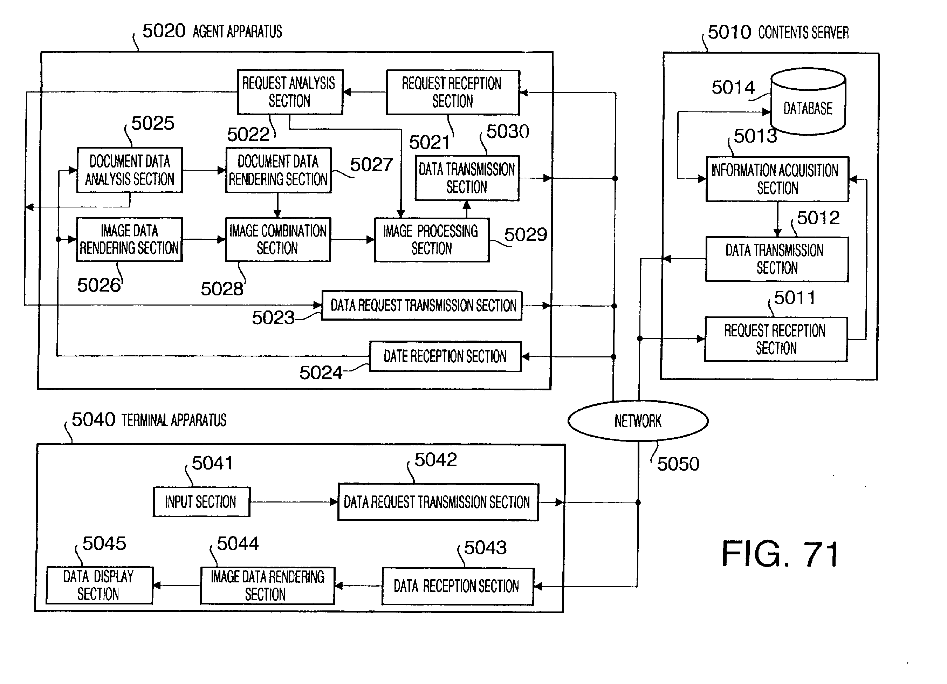

FIG.71 is a block diagram showing a system configuration according to the sixteenth embodiment of the present invention. In FIG.71, contents server 5010, agent apparatus 5020 and terminal apparatus 5040 are connected to network 5050 such as the Internet.

Contents server 5010 comprises request reception section 5011 that receives a data request from agent apparatus 5020 and terminal apparatus 5040, information acquisition section 5013 that acquires information from database 5014 according to the request, database 5014 that controls and stores multimedia data such as document data and image data and data transmission section 5012 that transmits the acquired data to agent apparatus 5020 or terminal apparatus 5040.

Agent apparatus 5020 comprises request reception section 5021 that receives a data request from terminal apparatus 5040, request analysis section 5022 that analyzes the received request, data request transmission section 5023 that requests contents server 5010 to acquire data, data reception section 5024 that receives the data sent from contents server 5010 according to the request, document data analysis section 5025 that analyzes the received document data, image data rendering section 5026 that performs rendering on the requested image data, document data rendering section 5027 that performs rendering on the requested document data, image combination section 5028 that combines the rendered document data and image data, image processing section 5029 that converts the size of the image and performs clipping on the image data combined by image combination section 5028 according to the data request from terminal apparatus 5040 and data transmission section 5030 that transmits the clipped image data to terminal apparatus 5040.

Terminal apparatus 5040 is implemented by, for example, a cellular phone, and comprises input section 5041 that accepts inputs from the user, data request transmission section 5042 that transmits request input from input section 5041 to agent apparatus 5020 or contents server 5010, data request transmission section 5042 that sends a data request according to the input, data reception section 5043 that receives the requested data, image data rendering section 5044 that performs rendering on the received image data and data display section 5045 that displays the rendered image, making it possible to send a data request to agent apparatus 5020 according to the user's operations, receive the requested data, display the data, request a change of the size and position of the received data and display the data with the changed size and position.

FIG.56 shows an appearance example of terminal apparatus 5040. In FIG.56, reference numeral 3511 corresponds to data display section 5045 in FIG.71 and 3512 corresponds to input section 5041 in FIG.71.

The user requests document data described in a structural description language (e.g., HTML) by specifying an identifier (e.g., URL) from input section 5041 of terminal apparatus 5040 and the request is sent from data request transmission section 5042 to agent apparatus 5020. Agent apparatus 5020 receives the request through request reception section 5021, analyzes the request through request analysis section 5022 and sends a request for the requested data to contents server 5010 through data request transmission section 5023.

Contents server 5010 receives the data request from agent apparatus 5020 through request reception section 5011, acquires data from database 5014 through information acquisition section 5013 and sends the acquired data to agent apparatus 5020 through data transmission section 5012. FIG.57 shows an example of the document data transmitted.

Agent apparatus 5020 that has received the data sent from contents server 5010 through data reception section 5024 analyzes the acquired document data through document data analysis section 5025. In the case where the referenced image data exists, agent apparatus 5020 sends a request for the referenced image data to contents server 5010 through data request transmission section 5023.

Contents server 5010 receives the referenced image data request from agent apparatus 5020 through request reception section 5011, acquires the referenced image data from database 5014 through information acquisition section 5013 and sends the acquired image data to agent apparatus 5020 through data transmission section 5012.

Agent apparatus 5020 receives the referenced image data through data reception section 5024, sends the received image data to image data rendering section 5026 and image data rendering section 5026 performs rendering on the image data. FIG.58 shows the result of rendering of an example of the image data referenced in the document data shown in FIG.57.

Moreover, the analyzed document data is sent to document data rendering section 5027 and subjected to rendering.

Then, the images subjected to rendering by document data rendering section 5027 and image data rendering section 5026 are combined by image combination section 5028 and the combined image is sent to image processing section 5029.

In the case where no size or position specification request has been received from terminal apparatus 5040, image processing section 5029 sends the image data sent from image combination section 5028 directly to data transmission section 5030 and data transmission section 5030 sends the image data received from image processing section 5029 to terminal apparatus 5040.

Terminal apparatus 5040 that has received the image data through data reception section 5043 subjects the image data to rendering through image data rendering section 5044 and displays the rendered image through data display section 5045. FIG.59 shows a display example of the document data shown in FIG.57 on data display section 5045.

Then, the case where the user requests for a change of the size and position of the displayed image data from input section 5041 will be explained.

In this embodiment, a request for a change of the size and position of the image displayed on data display section 3511 has a one-to-one correspondence with each key of key input section 3512.

The method of establishing the correspondence between an image and size/position change request will be explained using FIG.60.

First, reference numerals 3910 and 3930 in FIG.60 correspond to key input section 3512 and data display section 3511, respectively.

As shown in 3920, each key of key input section 3512 corresponds to each block of the whole key area, which has been divided into blocks.

Whole area 3920 and each block correspond to whole image 3930 and each block, respectively.

As shown above, a one-to-one correspondence is established between each key of key input section 3512 and each block of image data displayed on data display section 3511.

In the case where each key of 3911 is selected, it is assumed that area 3921 is selected and it is further assumed that area 3931 of the image data is selected. Then, the position of area 3931 is specified and it is requested that the image data in the specified area be enlarged to full size 3930.

In this way, a one-to-one correspondence is established between each key of key input section 3512 and a request for position specification and a change of the size of an image displayed on data display section 3511.

As shown above, by establishing a one-to-one correspondence between a request for a change of the size and position of an image and each key of key input section 3512 and by the user pressing a key of key input section 3512, the request for a change of the size and position of the image is sent from data request transmission section 5042 to agent apparatus 5020, and agent apparatus 5020 receives the request for a change of the size and position of an image from terminal apparatus 5040 through request reception section 5021, analyzes the request through request analysis section 5022 and sends the image size and position change request to data request transmission section 5023 and image processing section 5029.

Data request transmission section 5023 sends a request for the requested data to contents server 5010 according to the size and position change request of the received image.

Contents server 5010 receives the data request from agent apparatus 5020 through request reception section 5011, acquires data from database 5014 through information acquisition section 5013 and sends the acquired data to agent apparatus 5020 through data transmission section 5012.

Agent apparatus 5020 that has received the data sent from contents server 5010 through data reception section 5024 analyzes the acquired document data through document data analysis section 5025. In the case where the referenced image data exists, agent apparatus 5020 sends a request for the referenced image data to contents server 5010 through data request transmission section 5023.

Contents server 5010 receives the referenced image data request from agent apparatus 5020 through request reception section 5011, acquires the referenced image data from database 5014 through information acquisition section 5013 and sends the acquired image data to agent apparatus 5020 through data transmission section 5012.

Agent apparatus 5020 receives the referenced image data through data reception section 5024, sends the received image data to image data rendering section 5026 and image data rendering section 5026 performs rendering on the image data.

Moreover, the analyzed document data is sent to document data rendering section 5027 and subjected to rendering. Then, the images subjected to rendering by document data rendering section 5027 and image data rendering section 5026 are combined by image combination section 5028 and the combined image is sent to image processing section 5029.

Image processing section 5029 that has received the size and position change request from request analysis section 5022 and the image data from image combination section 5028 changes the size of the image and performs clipping on the received image data according to the size and position change request and the processed image data is sent to terminal apparatus 5040 through data transmission section 5030.

Terminal apparatus 5040 that has received the image data through data reception section 5043 subjects the image data to rendering through image data rendering section 5044 and displays the rendered image through data display section 5045. FIG.61 shows a display example of the document data shown in FIG.57 on data display section 5045 when the user presses key "5" of key input section 3512.

### [Seventeenth embodiment]

A seventeenth embodiment of the present invention will be explained with reference to the attached drawings.

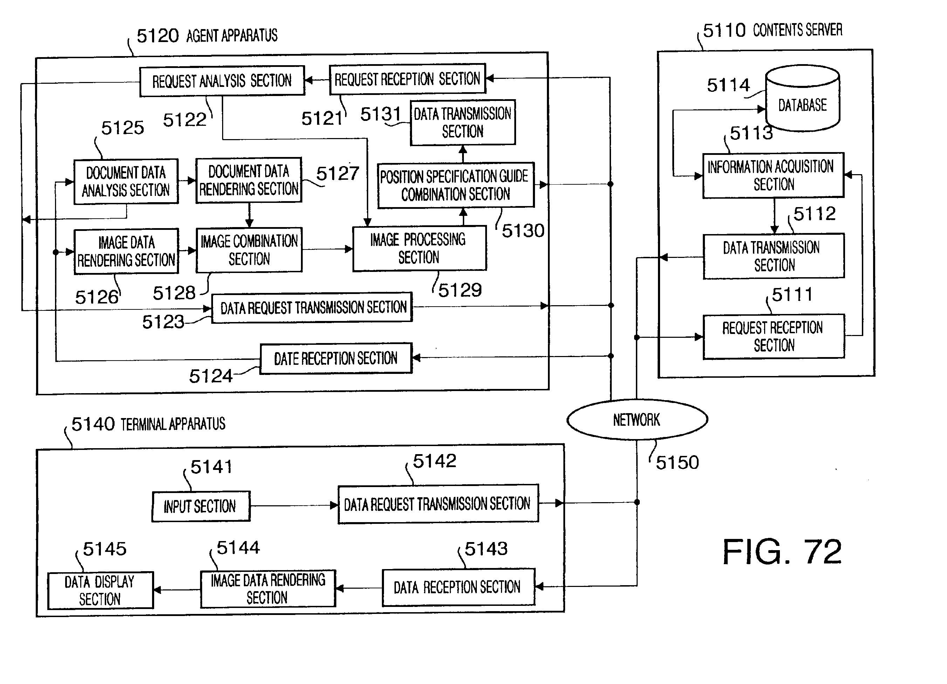

FIG.72 is a block diagram showing a system configuration according to the seventeenth embodiment of the present invention. In FIG.72, contents server 5110, agent apparatus 5120 and terminal apparatus 5140 are connected to network 5151 such as the Internet.

Contents server 5110 comprises request reception section 5111 that receives a data request from agent apparatus 5120 and terminal apparatus 5140, information acquisition section 5113 that acquires information from database 5114 according to the request, data transmission section 5112 that transmits the acquired data to agent apparatus 5120 or terminal apparatus 5140 and database 5114 that controls and stores multimedia data such as document data and image data.

Agent apparatus 5120 comprises request reception section 5121 that receives a data request from terminal apparatus 5140, request analysis section 5122 that analyzes the received request, data request transmission section 5123 that requests contents server 5110 to acquire data, data reception section 5124 that receives the data sent from contents server 5110 according to the request, document data analysis section 5125 that analyzes the received document data, image data rendering section 5126 that performs rendering on the requested image data, document data rendering section 5127 that performs rendering on the requested document data, image combination section 5128 that combines the rendered document data and image data, image processing section 5129 that converts the size of the image and performs clipping on the image data combined by image combination section 5128 according to the data request from terminal apparatus 5140, position specification guide combination section 5130 that overlays a position specification guide image over the processed image data and data transmission section 5131 that transmits the image data with a position specification guide combined by position specification guide combination section 5130 to terminal apparatus 5140.

Terminal apparatus 5140 is implemented by, for example, a cellular phone, and comprises input section 5141 that accepts inputs from the user, data request transmission section 5142 that sends a data request according to the input, data reception section 5143 that receives the requested data, image data rendering section 5144 that performs rendering on the received image data and data display section 5145 that displays the rendered image, making it possible to send a data request to agent apparatus 5120 according to the user's operations, receive the requested data, display the data, request a change of the size and position of the received data and display the data with the changed size and position.

FIG.56 shows an appearance example of terminal apparatus 5140. In FIG.56, reference numeral 3511 corresponds to data display section 5145 in FIG.72 and 3512 corresponds to input section 5141 in FIG.72.

The user requests document data described in a structural description language (e.g., HTML) by specifying an identifier (e.g., URL) from input section 5141 of terminal apparatus 5140 and the request is sent from data request transmission section 5142 to agent apparatus 5120. Agent apparatus 5120 receives the request through request reception section 5121, analyzes the request through request analysis section 5122 and sends a request for the requested data to contents server 5110 through data request transmission section 5123.

Contents server 5110 receives the data request from agent apparatus 5120 through request reception section 5111, acquires data from database 5114 through information acquisition section 5113 and sends the acquired data to agent apparatus 5120 through data transmission section 5112. FIG.57 shows an example of the document data transmitted.

Agent apparatus 5120 that has received the data sent from contents server 5110 through data reception section 5124 analyzes the acquired document data through document data analysis section 5125. In the case where the referenced image data exists, agent apparatus 5120 sends a request for the referenced image data to contents server 5110 through data request transmission section 5123.

Contents server 5110 receives the referenced image data request from agent apparatus 5120 through request reception section 5111, acquires the referenced image data from database 5114 through information acquisition section 5113 and sends the acquired image data to agent apparatus 5120 through data transmission section 5112.

Agent apparatus 5120 receives the referenced image data through data reception section 5124, sends the received image data to image data rendering section 5126 and image data rendering section 5126 performs rendering on the image data.

FIG.58 shows the result of rendering of an example of the image data referenced in the document data shown in FIG.57.

Moreover, the analyzed document data is sent to document data rendering section 5127 and subjected to rendering.

Then, the images subjected to rendering by document data rendering section 5127 and image data rendering section 5126 are combined by image combination section 5128 and the combined image is sent to image processing section 5129.

In the case where no size or position specification request has been received from terminal apparatus 5140, image processing section 5129 sends the image data sent from image combination section 5128 directly to position specification guide combination section 5130. Position specification guide combination section 5130 overlays a position specification guide image over the image sent from image processing section 5129 and sends the overlaid image to data transmission section 5131 and data transmission section 5131 sends the image data to terminal apparatus 5140.

FIG.63 shows an example of the image data sent to image data to terminal apparatus 5140.

Terminal apparatus 5140 that has received the image data through data reception section 5143 subjects the image data to rendering through image data rendering section 5144 and displays the rendered image through data display section 5145.

FIG.59 shows a display example of the document data shown in FIG.57 on data display section 5145.

Then, the case where the user requests for a change of the size and position of the displayed image data from input section 5141 will be explained.

In this embodiment, a request for a change of the size and position of the image displayed on data display section 3511 has a one-to-one correspondence with each key of key input section 3512.

The method of establishing the correspondence between an image and size and position change request will be explained using FIG.60.

First, reference numerals 3910 and 3930 in FIG.60 correspond to input section 3512 and data display section 3511, respectively.

As shown in 3920, each key of input section 3512 corresponds to each block of the whole key area, which has been divided into blocks.

Whole area 3920 and each block correspond to whole image and each block displayed on the data display section indicated by 3930, respectively.

As shown above, a one-to-one correspondence is established between each key of key input section 3512 and image data displayed on data display section 3511.

In the case where each key of 3911 is selected, it is assumed that area 3921 is selected and it is further assumed that area 3931 of the image data is selected. Then, the position of area 3931 is specified and it is requested that the image data in the specified area be enlarged to full size 3930.

In this way, a one-to-one correspondence is established between each key of key input section 3512 and a request for position specification and a change of the size of an image displayed on data display section 3511.

As shown above, by establishing a one-to-one correspondence between a request for a change of the size and position of an image and each key of key input section 3512 and by the user pressing a key of key input section 3512, the request for a change of the size and position of the image is sent from data request transmission section 5142 to agent apparatus 5120, and agent apparatus 5120 receives the request for a change of the size and position of an image from terminal apparatus 5140 through request reception section 5121, analyzes the request through request analysis section 5122 and sends the image size and position change request to data request transmission section 5123 and image processing section 5129.

Data request transmission section 5123 sends a request for the requested data to contents server 5110 according to the request for a change of the size and position of the received image.

Contents server 5110 receives the data request from agent apparatus 5120 through request reception section 5111, acquires data from database 5114 through information acquisition section 5113 and sends the acquired data to agent apparatus 5120 through data transmission section 5112.

Agent apparatus 5120 that has received the data sent from contents server 5110 through data reception section 5124 analyzes the acquired document data through document data analysis section 5125. In the case where the referenced image data exists, agent apparatus 5120 sends a request for the referenced image data to contents server 5110 through data request transmission section 5123.

Contents server 5110 receives the referenced image data request from agent apparatus 5120 through request reception section 5111, acquires the referenced image data from database 5114 through information acquisition section 5113 and sends the acquired image data to agent apparatus 5120 through data transmission section 5112.

Agent apparatus 5120 receives the referenced image data through data reception section 5124, sends the received image data to image data rendering section 5126 and image data rendering section 5126 performs rendering on the image data.

Moreover, the analyzed document data is sent to document data rendering section 5127 and subjected to rendering.

Then, the images subjected to rendering by document data rendering section 5127 and image data rendering section 5126 are combined by image combination section 5128 and the combined image is sent to image processing section 5129.

Image processing section 5129 that has received the size and position change request from request analysis section 5122 and the image data from image combination section 5128 changes the size of the image and performs clipping on the received image data according to the size and position change request and the processed image data is sent to position specification guide combination section 5130. Position specification guide combination section 5130 overlays a position specification guide image over the image sent from image processing section 5129 and sends the overlaid image to terminal apparatus 5140 through data transmission section 5131.

Terminal apparatus 5140 that has received the image data through data reception section 5143 subjects the image data to rendering through image data rendering section 5144 and displays the rendered image through data display section 5145.

FIG.61 shows a display example of the document data shown in FIG.57 on data display section 5145 when the user presses key "5" of key input section 3512.

As detailed above, when contents described in a structural description language are displayed on a portable terminal with a low resolution display screen, the present invention allows the user to easily select parts of the contents to be browsed by performing rendering on the contents to create image data and making it possible to change the resolution, scale, size and position of the image data.

The present invention is not limited to the above described embodiments, and various variations and modifications may be possible without departing from the scope of the present invention.

This application is based on the Japanese Patent Applications No.HEI11-329488 filed on November 19, 1999 and No. 2000-114856 filed on April 17, 2000, entire content of which is expressly incorporated by reference herein.

## Claims

1. A contents server (610) that receives a request for contents via a network (230) from a client (220)and sends the requested contents to said client (220), comprising:
an information acquisition section (613) that acquires the contents requested by the client (220) from a storage (619) that stores contents described in a structural description language and image data referenced in said contents;
an analyzing section (615) that analyzes the acquired contents to recognize a display size of the image referenced in the contents acquired by said information acquisition section (613); and
a modification section (616) that changes, in the case where the display size of the referenced image exceeds a threshold, a reference description on the referenced image in said acquired contents to alternate information including at least an alternate document substituting said referenced image and information on a link to said referenced image,
wherein in the case where said display size is equal to or below the threshold, the requested contents are sent to the client (220) without changing the reference description of the referenced image and in the case where said display size exceeds the threshold, the requested contents with the reference description of the referenced image changed to the alternate information is sent to the client (220).

2. The contents server according to claim 1, wherein said link information includes a description requesting said contents server (610) to send said referenced image when said alternate document is selected by the client (220) who has downloaded contents whose reference description has been changed to alternate information.

3. The contents server according to claim 1, wherein said alternate document includes attribute information on said referenced image and selection information having a plurality of selection items corresponding to a plurality of display methods, and
said link information includes, when an selection item is selected by the client (1230) who has downloaded contents whose reference description has been changed to alternate information, a description requesting that the contents be sent with processing according to the display method corresponding to the selection item added to the referenced image.

4. The contents server according to claim 3, wherein said selection information includes an item of contracted display to contract the referenced image as one of selection items,
said link information includes, a description requesting contraction of the referenced image to a display size corresponding to said threshold when the item of contracted display is selected, and
when the client (1230) requests a referenced image by selecting said item of contracted display, said referenced image is extracted from said storage (1304) , the extracted referenced image is contracted to a display size corresponding to said threshold and the contracted referenced image is sent to said client (1230).

5. The contents server according to claim 3, wherein said selection information includes an item of original scale display to display a partial image clipped from the referenced image as one of selection items,
said link information includes, when the item of original scale display is selected, a description requesting that a partial image in a display size corresponding to said threshold be clipped from the referenced image, and
in the case where the client (1230) requests a referenced image by selecting said item of original scale display, said referenced image is extracted from said storage (1304) and a partial image in a display size corresponding to said threshold is clipped from the extracted referenced image and the clipped partial image is sent to said client (1230).

6. The contents server according to claim 3, wherein said selection information includes an item of original scale display to display a partial image clipped from the referenced image as one of selection items,
said link information includes, when the item of original scale display is selected, a description requesting that a partial image in a display size corresponding to said threshold be clipped from the referenced image, and
in the case where the client (1230) requests a referenced image by selecting said item of original scale display, a hyper text is sent to said client (1230), which includes a description of clipping and displaying a partial image in a display size corresponding to said threshold from the referenced image, a description of displaying a plurality of selection items to select the clipping position and link information requesting a referenced image with the clipping position changed when the selection item of said clipping position is selected.

7. The contents server according to claim 6, wherein when the client (1230) requests a referenced image with the clipping position changed by selecting an selection item of the clipping position, a hyper text is sent to said client, which includes a description of clipping and displaying a partial image in a display size corresponding to said threshold from the selected clipping position of said referenced image, a description of displaying a plurality of selection items to select the clipping position and link information requesting a referenced image with the clipping position changed when an selection item of said clipping position is selected.

8. The contents server according to claim 6, wherein said hyper text includes a description of displaying selection information made up of a plurality of selection items to select a scaling factor of said referenced image, and a description of displaying a partial image in a display size corresponding to said threshold clipped from an image which the referenced image is scaled by a requested scaling factor when an selection item of scaling factor is selected.

9. The contents server according to claim 1, wherein said storage (619) is provided in said contents server (610) , and
said information acquisition section (613) accesses said storage (610) without any network and extracts contents and a referenced image.

10. The contents server according to claim 1, wherein said storage (1114) is provided in an information supply apparatus (1110) connected to said contents server (1120) via a network (230), and
said information acquisition section (1122,1123) requests desired contents and a referenced image to said information supply apparatus (1110) and acquires the desired contents and referenced image via the network (230).

11. The contents server according to claim 10, further comprising:
a cache (1407) that stores the contents and referenced image acquired from said information supply apparatus (1210); and
a cache checking section (1403) that checks whether a requested contents and referenced image exist in said cache (1407) when a request for the contents and referenced image is received from said client (1230), and
in the case where the requested contents and referenced image exist in said cache (1407), the contents and referenced image are extracted from said cache (1407) and sent to the client (1230) without requesting the contents and referenced image to said information supply apparatus (1210).

12. A contents distribution method that distributes contents from contents server (610) to a client (220) which has request the contents via a network (230) comprising :
acquiring the contents requested by the client (220) from a storage(619) that stores contents described by a structural description language and image data referenced in said contents;
checking the display size of a referenced image referenced in the acquired contents; and
changing, in the case where the display size of the referenced image exceeds a threshold, a reference description of the referenced image in said contents to alternate information including at least an alternate document substituting said referenced image and information on a link to said referenced image,
wherein in the case where said display size is equal to or smaller than the threshold, the requested contents are sent to the client (220) without changing the reference description of the referenced image and in the case where said display size exceeds the threshold, the requested contents with the reference description of the referenced image changed to the alternate information is sent to the client (220).

13. The contents distribution method according to claim 12, wherein in the case where said display size exceeds the threshold, said reference description is changed to alternate information including link information made up of a description requesting said referenced image from said contents server (610) when the client (220) selects said alternate document.

14. The contents distribution method according to claim 12, wherein in the case where said display size exceeds the threshold, said reference description is changed to alternate information including attribute information on said referenced image, an alternate document including selection information made up of a plurality of selection items corresponding to a plurality of display methods and link information made up of a description requesting the contents be sent with processing according to the display method corresponding to the selection item added when the client (1230) selects an selection item.

15. The contents distribution method according to claim 14, wherein in the case where said display size exceeds the threshold, said reference description is changed to alternate information including an alternate document including an item of contracted display to contract the referenced image and link information made up of a description requesting the referenced image be contracted to a display size corresponding to said threshold when the client selects the item of contracted display.

16. The contents distribution method according to claim 14, wherein in the case where said display size exceeds the threshold, said reference description is changed to alternate information including an alternate document including an item of original scale display to display a partial image clipped from the referenced image and link information made up of a description requesting the partial image in a display size corresponding to said threshold be clipped from the referenced image when the client (1230) selects the item of original scale display.

17. The contents distribution method according to claim 14, wherein in the case where said display size exceeds the threshold, said reference description is changed to alternate information including an alternate document including an item of original scale display to display a partial image clipped from the referenced image and link information made up of a description requesting the partial image in a display size corresponding to said threshold be clipped from the referenced image when the client (1230) selects the item of original scale display, and
in the case where the client (1230) requests the referenced image by selecting said item of original scale display, a hyper text is sent to said client (1230), which includes a description of displaying the partial image in a display size corresponding to said threshold clipped from said referenced image, a description of displaying a plurality of selection items to select the clipping position and link information requesting a referenced image with the clipping position changed when the selection item of said clipping position is selected.

18. The contents distribution method according to claim 17, wherein in the case where the client (1230) requests the referenced image with the clipping position changed by selecting a selection item of the clipping position, a hyper text is sent to said client (1230), which includes a description of displaying the partial image in a display size corresponding to said threshold clipped from the selected clipping position of said referenced image, a description of displaying a plurality of selection items to select the clipping position and link information requesting a referenced image with the clipping position changed when the selection item of said clipping position is selected.

19. The contents distribution method according to claim 17, wherein said hyper text includes a description of displaying selection information made up of a plurality of selection items to select a scaling factor of said referenced image and a description of displaying a partial image in a display size corresponding to said threshold clipped from an image obtained by scaling said referenced image by a requested scaling factor when the selection item of scaling factor is selected.

20. A contents display method for displaying contents distributed from a contents server (610) and described in a structural description language, comprising :
downloading, in the case where the display size of a referenced image referenced in the contents is equal to or smaller than a threshold, contents with a reference description of a referenced image in the contents not changed;
displaying document data according to the downloaded contents;
requesting the referenced image from the contents server (610) according to the reference description in the contents; and
acquiring and displaying the referenced image from the contents server (610), and
downloading, in the case where the display size of the referenced image referenced in the contents exceeds the threshold, contents with the reference description of the referenced image in the contents changed to alternate information, said alternate information including at least an alternate document substituting said referenced image and information on a link to said referenced image;
displaying the document data and the alternate document according to the contents;
requesting the referenced image to the contents server (610) according to said link information when the alternate document is selected; and
acquiring and displaying the referenced image from the contents server (610).

21. The contents display method according to claim 20, wherein in the case where the display size of the referenced image referenced in the contents exceeds the threshold, the contents whose said reference description is changed to alternate information including attribute information on said referenced image, an alternate document including selection information made up of a plurality of selection items corresponding to a plurality of display methods and link information made up of a description requesting, when the client (1230) selects a selection item, that the contents be sent with processing according to the display method corresponding to the selection item added to the referenced image are downloaded, the document data and the selection item of the display method according to the contents are displayed, and in the case where a certain selection item is selected, the referenced image with processing of the display method corresponding to the selection item according to said link information added is requested from said contents server (1220) and the referenced image with the processing of the display method corresponding to the selection item added is acquired from the contents server (1220) and displayed.

22. The contents display method according to claim 21, wherein in the case where the display size of the referenced image referenced in the contents exceeds the threshold, the contents whose said reference description is changed to alternate information including an alternate document including an item of contracted display to contract the referenced image and link information made up of a description requesting, when the client (1230) selects the item of contracted display, that the referenced image be contracted to a display size corresponding to said threshold are downloaded, the alternate document including the item of contracted display according to the contents are displayed, and in the case where the item of contracted display is selected, a referenced image contracted to the display size corresponding to said threshold according to said link information is requested from said contents server (1220) and the contracted referenced image is acquired from the contents server (1220) and displayed.

23. The contents display method according to claim 21, wherein in the case where the display size of the referenced image referenced in the contents exceeds the threshold, the contents whose said reference description is changed to alternate information including an alternate document including an item of original scale display to clip and display a partial image from the referenced image and link information made up of a description requesting, when the client (1230) selects the item of original scale display, that the partial image in the display size corresponding to said threshold be clipped from the referenced image are downloaded from said contents server (1220), the alternate document including the item of original scale display is displayed according to the contents, and in the case where the item of original scale display is selected, the partial image clipped to the display size corresponding to said threshold from the referenced image according to said link information is requested from said contents server (1220) and said partial image is acquired from the contents server (1220) and displayed.

24. The contents display method according to claim 21, wherein in the case where the display size of the referenced image referenced in the contents exceeds the threshold, the contents whose said reference description is changed to alternate information including an alternate document including an item of original scale display to clip and display a partial image from the referenced image and link information made up of a description requesting, when the client (1230) selects the item of original scale display, that the partial image in the display size corresponding to said threshold be clipped from the referenced image are downloaded from said contents server (1220), the alternate document including the item of original scale display is displayed according to the contents, and in the case where the item of original scale display is selected, structural document for a position change is requested from said contents server (1220), said structural document includes a description of clipping and displaying the partial image in the display size corresponding to said threshold from said referenced image, a description of displaying a plurality of selection items to select the clipping position and link information requesting, when the selection item of said clipping position is selected, the referenced image with the clipping position changed, and in the case where said position change structural document is acquired from said contents server, a plurality of selection items to select the clipping position is displayed, said partial image is requested from said contents server according to said link information, and when said partial image is acquired from said contents server, said partial image is displayed together with said selection item, and when said selection item is selected, the partial image changed to the selected clipping position is acquired from said contents server and displayed.

25. A computer program product comprising:
a medium that capable of a reading by a computer; and
a program stored in said medium, said program comprising:
a procedure of acquiring contents requested by a client from a storage that stores contents described in a structural description language and image data referenced in said contents;
a procedure of checking a display size of the image referenced in said acquired contents; and
a procedure of changing, when the display size of the referenced image exceeds a threshold, a reference description regarding the referenced image in said contents to alternate information including at least an alternate document substituting said referenced image and information on a link to said referenced image.

26. A contents server that receives a request for contents described in a structural description language via a network (2430) from a client (2420) and sends the requested contents to said client (2420), comprising:
an information acquisition section (2413) that acquires the contents requested by the client (2420) from a storage (2419) that stores contents described in a structural description language and image data referenced in said contents;
an image creation section (2414 to 2417) that performs rendering on the contents acquired by said information acquisition section (2413) to create a reproduced image; and
a transmission section (2418) that transmits the reproduced image to said client (2420) via a network (2430).

27. The contents server according to claim 26, wherein said image creation section comprising:
a text data rendering section (2416) that performs rendering on text data contained in said acquired contents and creates a text image;
an image data rendering section (2415) that performs rendering on a referenced image referenced in said acquired contents and creates image data; and
an image combination section (2417) that creates said reproduced image by combining the text image of said text data and the image data of said referenced image.

28. The contents server according to claim 26, further comprising:
a request analysis section (2812) that analyzes a contents request received from the client (2830) and acquires a resolution conversion request and desired resolution; and
a resolution conversion section (2818) that converts the reproduced image created according to the contents request containing said conversion request to said desired resolution.

29. The contents server according to claim 26, further comprising:
a request analysis section (3012) that analyzes a contents request received from the client (3030) and acquires a scaling factor conversion request and desired scaling factor; and
a scaling factor conversion section (3018) that converts the reproduced image created according to the contents request containing said conversion request to said desired scaling factor.

30. The contents server according to claim 26, further comprising:
a request analysis section (3112) that analyzes a contents request received from the client (3130) and acquires a display size conversion request and desired size; and
a size conversion section (3118) that converts the reproduced image created according to the contents request containing said conversion request to said desired size.

31. The contents server according to claim 26, further comprising:
a request analysis section (3212) that analyzes a contents request received from the client (3230) and acquires a position specification request that specifies a clipping position; and
a clipping section (3218) that clips a partial image at the specified clipping position from the reproduced image created according to the contents request containing said position specification request,
wherein said transmission section (3219) transmits said partial image to said client (3230).

32. The contents server according to claim 31, wherein said request analysis section (4112) relates a key layout of a client's input-key device to each of clipping positions and recognizes the clipping position based on a key information indicating a key position on the key layout .

33. The contents server according to claim 32, wherein an image with the key layout information overlaid over said reproduced image is supplied to the client.

34. The contents server according to claim 26, wherein said storage (2419) is placed in said contents server (2410) and
said information acquisition section (2413) extracts the contents and referenced image by accessing said storage (2413) without the network (2430).

35. The contents server according to claim 26, wherein said storage (4514) is placed in an information supply apparatus (4510) connected to said contents server (4520) via a network (4530) and
said information acquisition section (4522,4523) requests desired contents and referenced image to said information supply apparatus (4510) and acquires the desired contents and referenced image via the network (4530).

36. A terminal apparatus that requests contents described in a structural description language to the contents server (2410) according to claim 26, comprising:
a reception section (2423) that receives a reproduced image of the contents requested from said contents server (2410) via a network (2430);
a display control section (2425) that converts the received reproduced image to a signal format according to a display section (2425);
an input section (2421) to input at least one of resolution, scaling factor, display size and clipping position requests; and
data processing section (2422) that performs processing corresponding to the request input from said input section on said reproduced image.

37. A terminal apparatus that requests contents described in a structural description language to the contents server (4920) according to claim 33, comprising:
a reception section (4944) that receives image information related to the reproduced image of the contents requested from said contents server (4920) via a network (4950);
a display section (4330) that displays the reproduced image with key layout information overlaid based on the received image information; and
a transmission section (4943) that transmits a position specification request that designates as the clipping position the area corresponding to the key number of the input key device pressed while said reproduced image is displayed to the contents server (4920).

38. A contents distribution method that distributes contents requested by a client (2420) via a network (2430) comprising :
acquiring the contents requested by the client (2420) from a storage (2419) that stores contents described in a structural description language and image data referenced in said contents;
performing rendering on said acquired contents to create a reproduced image; and
sending the reproduced image to said client (2420) via a network (2430).

39. The contents distribution method according to claim 38, further comprising the steps of:
creating a text image by performing rendering on text data contained in said acquired contents;
creating image data by performing rendering on the referenced image referenced in said acquired contents; and
creating said reproduced image by combining the text image of said text data and the image data of said referenced image.

40. The contents distribution method according to claim 38, further comprising :
analyzing the contents request received from the client (2830) and acquiring a resolution conversion request and desired resolution; and
converting a reproduced image created according to the contents request containing said conversion request to said desired resolution.

41. The contents distribution method according to claim 38, further comprising the steps of:
analyzing the contents request received from the client (3030) and acquiring a scaling factor conversion request and desired scaling factor; and
converting a reproduced image created according to the contents request containing said conversion request to said desired scaling factor.

42. The contents distribution method according to claim 38, further comprising the steps of:
analyzing the contents request received from the client (3130) and acquiring a display size conversion request and desired size; and
converting a reproduced image created according to the contents request containing said conversion request to said desired size.

43. The contents distribution method according to claim 38, further comprising the steps of:
analyzing the contents request received from the client (3230) and acquiring a position specification request that specifies a clipping position;
clipping a partial image at the specified clipping position from the reproduced image created according to the contents request containing said position specification request; and
sending said partial image to said client (3230).

44. The contents distribution method according to claim 43, wherein a one-to-one correspondence between the key layout of the client's input key device and clipping position is established and the clipping position is recognized based on the key information.

45. The contents distribution method according to claim 44, wherein an image with key layout information overlaid over said reproduced image is supplied to the client (4130).

46. A computer program product comprising:
a medium that capable of a reading by a computer; and
a program stored in said medium, said program comprising:
a procedure of acquiring contents requested by a client from a storage that stores contents described in a structural description language and image data referenced in said contents;
a procedure of creating a reproduced image by performing rendering on said acquired contents; and
a procedure of sending the reproduced image to said client via a network.
